(19) **Europäisches Patentamt / European Patent Office / Office européen des brevets**

(11) **EP 4 510 434 A1**

(12) **EUROPEAN PATENT APPLICATION**
published in accordance with Art. 153(4) EPC

(43) Date of publication:
**19.02.2025 Bulletin 2025/08**

(21) Application number: **22937567.0**

(22) Date of filing: **17.10.2022**

(51) International Patent Classification (IPC):
**H02M 1/44** (2007.01)     **H02M 1/15** (2006.01)
**H02M 1/12** (2006.01)

(52) Cooperative Patent Classification (CPC):
**H02M 1/12; H02M 1/15; H02M 1/44**

(86) International application number:
**PCT/KR2022/015691**

(87) International publication number:
**WO 2023/200054 (19.10.2023 Gazette 2023/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.04.2022 KR 20220046883**

(71) Applicants:
• **EM Coretech Inc.**
  **Ulsan 44919 (KR)**
• **Ulsan National Institute of Science and Technology**
  **(UNIST)**
  **Eonyang-eup Ulju-gun**
  **Ulsan 44919 (KR)**

(72) Inventors:
• **KIM, Jin Gook**
  **Ulju-gun Ulsan 44919 (KR)**
• **JEONG, Sang Yeong**
  **Ulju-gun Ulsan 44919 (KR)**

(74) Representative: **HGF**
  **HGF Europe LLP**
  **Neumarkter Straße 18**
  **81673 München (DE)**

(54) **ACTIVE VOLTAGE COMPENSATION DEVICE**

(57) The present disclosure provides an active voltage compensation device which actively compensates for noise occurring in each of two or more high-current paths in a common mode. The active voltage compensation device includes a sensing unit which senses a noise current in the common mode in the two or more high-current paths to generate an output signal corresponding to the noise current, an amplification unit which amplifies the output signal of the sensing unit to generate an amplified signal, an amplified signal feedback unit which transmits a feedback signal corresponding to the amplified signal of the amplification unit back to the amplification unit, and a compensation unit which generates a compensation voltage on the two or more high-current paths based on an output voltage corresponding to the amplified signal.

FIG. 1

EP 4 510 434 A1

## Description

### Technical Field

Embodiments of the present disclosure relate to an active voltage compensation device, and more specifically, to an active voltage compensation device which actively compensates for a noise voltage input to two or more high-current paths connected to a power system in a common mode.

### Background Art

In general, electrical devices such as home appliances, industrial electrical products, or electric vehicles emit noise while operating. For example, noise may be emitted through power lines due to a switching operation of power converters within electronic devices. When such noise is neglected, the noise is harmful to the human body and also causes malfunctions or failures in surrounding components and other electronic devices. In this way, electronic devices electromagnetically interfering with other devices is referred to as electromagnetic interference (EMI), and in the EMI, noise transmitted through wires and substrate interconnects is referred to as conducted emission (CE) noise.

In order for electronic devices to operate without causing malfunctions in surrounding components and other devices, an amount of emission of EMI noise in all electronic products is strictly regulated. Therefore, in order to satisfy regulations on noise emissions, most electronic products essentially include noise reduction devices (for example, EMI filters) that reduce an EMI noise current. For example, EMI filters are essentially included in white appliances such as air conditioners, electric vehicles, aerial systems, and energy storage systems (ESSs). EMI filters according to the related art use a common mode choke (CM choke) to reduce CM noise among CE noises. CM chokes are passive filters and serve to "suppress" CM noise.

Meanwhile, in order to maintain the noise reduction performance of passive EMI filters in high-power systems, the size or number of CM chokes should be increased. Therefore, in high-power products, there is a problem in that the size and price of passive EMI filters considerably increase.

In order to overcome such limitations of passive EMI filters, interest in active EMI filters has emerged. Active EMI filters may remove EMI noise by detecting EMI noise and generating a signal for cancelling out the noise through an active circuit unit. An active EMI filter includes an active circuit unit that may generate an amplified signal according to a detected noise signal.

### Detailed Description of the Disclosure

### Technical Problem

The present disclosure is intended to solve the above problems and is directed to providing an active voltage compensation device which reduces common mode noise by actively compensating for a noise voltage occurring on a high-current path in a common mode.

Meanwhile, in order to apply an active electromagnetic interference (EMI) filter to electronic products, mass production of semiconductor devices is required to satisfy various demands. When discrete devices (or components) are used to manufacture an active EMI filter for actual use, in order to improve a function of the active EMI filter, the number of active circuit devices is increased, and various components are required. Therefore, in order to achieve higher functionality, there is a problem in that the size and costs of the active EMI filter increase.

The present disclosure is intended to solve the above problems and provides an active voltage compensation device including an integrated circuit unit and a non-integrated circuit unit to provide an active EMI filter using a customized integrated circuit (IC) that may be used in various power systems. The IC unit may be one chip including essential components of the active voltage compensation device, and the non-IC unit may be a component for implementing an active EMI filter having various designs.

Meanwhile, when a voltage compensation device includes an active element, there is a problem in that the active element may fail or malfunction when a high-voltage disturbance such as lightning occurs.

The present disclosure is intended to solve the above problems and is directed to providing an active voltage compensation device that may be protected from a disturbance such as lightning when mounted on an electric device.

Meanwhile, in an active EMI filter, an active circuit unit should receive power to operate. For example, the output of a switching mode power supply (SMPS) may be used as power for an active circuit unit. The active circuit unit may require a specific voltage (for example, 12 V), but according to systems, the SMPS may not output the specific voltage to drive the active circuit unit. In this case, there is a problem in that the operation of the active circuit unit becomes unstable.

The present disclosure is intended to solve the above problems and is directed to providing an active voltage compensation device including an embedded power conversion unit.

On the other hand, since a voltage compensation device of a related art is entirely bulky and has a structure in which elements are exposed directly to an external environment, when used in a system placed in the external environment, the elements may be easily deteriorated from external shock or environmental influences, which may seriously influence the characteristics of a filter.

In addition, there is a problem in that a failure of an active circuit unit included in an active EMI filter is difficult to identify with the naked eye. Since the active EMI filter only performs a noise reduction function, even when the active circuit unit fails, a power system may still operate normally. Therefore, there is a problem in that it is difficult to determine a failure of the active circuit unit from the phenomenon.

The present disclosure is intended to solve the above problems and is directed to providing a voltage compensation device in which, even when a device is independent from an external environment, whether the device normally operates may be easily identified without disassembly of the voltage compensation device.

In addition, the present disclosure is directed to providing an active voltage compensation device in which an active circuit unit and a malfunction detection circuit are embedded in one IC chip together.

However, the objects are only for illustration and should not be used to limit the scope of the present disclosure.

**Technical Solution to Problem**

An embodiment of the present disclosure provides an active voltage compensation device which actively compensates for noise occurring in each of two or more high-current paths in a common mode, the active voltage compensation device including a sensing unit which senses a noise current in the common mode in the two or more high-current paths to generate an output signal corresponding to the noise current, an amplification unit which amplifies the output signal of the sensing unit to generate an amplified signal, an amplified signal feedback unit which transmits a feedback signal corresponding to the amplified signal of the amplification unit back to the amplification unit, and a compensation unit which generates a compensation voltage on the two or more high-current paths based on an output voltage corresponding to the amplified signal.

**Advantageous Effects of the Disclosure**

According to an active voltage compensation device according to various embodiments of the present disclosure as described above, a voltage compensation device of which the price, area, volume, or weight are not considerably increased may be provided even in high-power systems. Specifically, the price, area, volume, and weight of the active voltage compensation device according to various embodiments of the present disclosure may be reduced as compared with a passive compensation device including a common mode (CM) choke.

In addition, according to an active voltage compensation device according to various embodiments of the present disclosure, an active voltage compensation device, which may operate independently without being parasitic on a CM choke, may be provided.

In addition, an active voltage compensation device according to various embodiments of the present disclosure may perform a voltage compensation function irrespective of a load of a surrounding situation at a side at which EMI noise is emitted.

In addition, an active voltage compensation device according to various embodiments of the present disclosure may include an IC unit to be universally applied to active voltage compensation devices having various designs, and the size thereof may be minimized as a case in which the active voltage compensation device includes a discrete semiconductor device.

In addition, an active voltage compensation device according to various embodiments of the present disclosure may be used in various power electronic products irrespective of power rating and thus may also be expanded to high-power and high-noise systems.

In addition, the active voltage compensation device according to various embodiments of the present disclosure can be easily mass-produced and can be commercialized with versatility as an independent module.

In addition, an active voltage compensation device according to various embodiments of the present disclosure has an active circuit end that is electrically insulated from a power line, thereby stably protecting elements included in the active circuit end.

In addition, an active voltage compensation device according to various embodiments of the present disclosure may be protected from an external overvoltage such as lightning and thus may stably operate irrespective of the characteristics of a surrounding electrical system.

In addition, an active voltage compensation device according to various embodiments of the present disclosure may include an embedded power conversion unit to be applied to any various systems.

In addition, in an active voltage compensation device according to various embodiments of the present disclosure, by embedding an IC unit and a power conversion unit into one IC chip, the IC chip may be commercialized to have versatility as an independent component, and a voltage compensation device including the IC chip may be manufactured and commercialized as an independent module. An IC unit included in such a voltage compensation device may stably operate irrespective of the characteristics of a surrounding electrical system.

In addition, according to an active voltage compensation device according to various embodiments of the present disclosure, a miniaturized/modularized active voltage compensation device may be provided, and in particular, a voltage compensation device, in which whether a device normally operates may be easily identified without disassembly of the voltage compensation device, may be provided.

In addition, according to an active voltage compensation device according to various embodiments of the present disclosure, one IC chip, in which both an IC unit and a malfunction detection unit are embedded, may be provided. By embedding a malfunction detection unit in a chip in which an IC unit is integrated, a size and price may be reduced as compared with a case in which the malfunction detection unit is separately constituted by using common commercial elements.

In addition, by integrating an IC unit and a malfunction detection unit into one IC chip, the IC chip may be commercialized to have versatility as an independent component, and a voltage compensation device including the IC chip may be manufactured and commercialized as an independent module. This voltage compensation device may be an independent module irrespective of the characteristics of a surrounding electrical system and may detect a malfunction of a device.

Of course, the scope of the present disclosure is not limited by the effects.

**Brief Description of Drawings**

FIG. 1 schematically illustrates a configuration of a system including an active voltage compensation device according to an embodiment of the present disclosure.

FIG. 2 schematically illustrates an active voltage compensation device according to an embodiment of the present disclosure as a specific example of the active voltage compensation device shown in FIG. 1.

FIG. 3 illustrates a more specific example of the embodiment shown in FIG. 2 and schematically illustrates an active voltage compensation device according to an embodiment of the present disclosure.

FIG. 4 illustrates a more specific example of the embodiment shown in FIG. 3 and schematically illustrates an active voltage compensation device according to an embodiment of the present disclosure.

FIG. 5 illustrates a more specific example of the embodiment shown in FIG. 3 and schematically illustrates an active voltage compensation device according to an embodiment of the present disclosure.

FIG. 6 schematically illustrates a configuration of a system including an active voltage compensation device according to another embodiment of the present disclosure.

FIG. 7 schematically illustrates a configuration of a system including an active voltage compensation device according to another embodiment of the present disclosure.

FIG. 8 illustrates an example of a functional configuration of an amplification unit according to an embodiment of the present disclosure as a specific example of an amplification unit shown in FIG. 1.

FIG. 9 illustrates a specific example of an active voltage compensation device including the amplification unit shown in FIG. 8.

FIG. 10 illustrates a specific example of a first integrated circuit unit of a first amplification unit shown in FIG. 9.

FIG. 11 schematically illustrates a configuration of an active voltage compensation device according to another embodiment of the present disclosure.

FIG. 12 schematically illustrates a configuration of a system including an active voltage compensation device according to another embodiment of the present disclosure.

FIG. 13 schematically illustrates an active voltage compensation device according to an embodiment of the present disclosure as a specific example of the active voltage compensation device shown in FIG. 12.

FIG. 14 schematically illustrates a configuration of an active voltage compensation device according to another embodiment of the present disclosure.

FIG. 15 schematically illustrates a configuration of a system including an active voltage compensation device according to another embodiment of the present disclosure.

FIG. 16 illustrates an example of a functional configuration of an amplification unit and a power management unit of the active voltage compensation device shown in FIG. 15.

FIG. 17 schematically illustrates an active voltage compensation device according to an embodiment of the present disclosure as a specific example of the active voltage compensation device shown in FIG. 15.

FIG. 18 schematically illustrates a power management unit according to an embodiment of the present disclosure.

FIG. 19 illustrates a more specific example of the power conversion unit shown in FIG. 18.

FIG. 20 schematically illustrates a configuration of an active voltage compensation device according to another embodiment of the present disclosure.

FIG. 21 schematically illustrates a configuration of a system including an active voltage compensation device according to another embodiment of the present disclosure.

FIG. 22 schematically illustrates an active voltage compensation device according to an embodiment of the present disclosure as a specific example of the active voltage compensation device shown in FIG. 21.

FIG. 23 illustrates an example of a functional configuration of an amplification unit and a malfunction detection unit according to an embodiment of the present disclosure.

FIG. 24 illustrates a more specific example of the embodiment shown in FIG. 22 and schematically illustrates an active voltage compensation device according to an embodiment of the present disclosure.

FIG. 25 illustrates a specific example of a first integrated circuit unit and a first malfunction detection unit of a first amplification unit shown in FIG. 24.

FIG. 26 illustrates a more specific example of the embodiment shown in FIG. 22 and schematically illustrates an active voltage compensation device according to an embodiment of the present disclosure.

FIG. 27 illustrates a functional configuration of a malfunction detection unit according to an embodiment of the present disclosure.

FIG. 28 is a schematic view of a logic circuit according to an embodiment of the present disclosure.

FIG. 29 is a circuit diagram of a second integrated circuit unit and a malfunction detection unit according to an embodiment of the present disclosure.

FIG. 30 schematically illustrates a configuration of an active voltage compensation device according to another embodiment of the present disclosure.

**Best Mode**

An embodiment of the present disclosure provides an active voltage compensation device which actively compensates for noise occurring in each of two or more high-current paths in a common mode, the active voltage compensation device including a sensing unit which senses a noise current in the common mode in the two or more high-current paths to generate an output signal corresponding to the noise current, an amplification unit which amplifies the output signal of the sensing unit to generate an amplified signal, an amplified signal feedback unit which transmits a feedback signal corresponding to the amplified signal of the amplification unit back to the amplification unit, and a compensation unit which generates a compensation voltage on the two or more high-current paths based on an output voltage corresponding to an amplified signal.

In an embodiment of the present disclosure, the amplification unit may include a first amplification unit and a second amplification unit, the first amplification unit may amplify the output signal of the sensing unit to generate the output voltage, and the second amplification unit may be connected to the first amplification unit and may generate an output current required for noise compensation.

In an embodiment of the present disclosure, the sensing unit may be in a form in which a wire for generating an input voltage of the amplification unit is additionally wound around a common mode (CM) choke around which the two or more high-current paths are wound.

In an embodiment of the present disclosure, the compensation unit may be formed such that a wire for outputting the output signal of the amplification unit passes through a core, and the high-current paths pass through the core or are wound around the core one or more times.

In an embodiment of the present disclosure, the two or more high-current paths may transmit a high current supplied by a second device to a first device, the amplification unit may include a non-integrated circuit unit and one chip integrated circuit unit, the non-integrated circuit unit may be designed according to at least one power system of the first device and the second device, and the one chip integrated circuit unit may be independent of power rating specifications of the first device and the second device.

In an embodiment of the present disclosure, the non-integrated circuit unit may be designed according to power rating of the first device.

In an embodiment of the present disclosure, according to a design of the non-integrated circuit unit, the one chip integrated circuit unit may be used for the first device in various power systems.

In an embodiment of the present disclosure, the one chip integrated circuit unit may include a first integrated circuit unit and a second integrated circuit unit, and the second integrated circuit unit may include a first transistor, a second transistor, and one or more resistors.

In an embodiment of the present disclosure, the first integrated circuit unit may include one or more transistors.

In an embodiment of the present disclosure, the sensing unit may include a sensing transformer, the compensation unit may include a compensation transformer, and a configuration of the one chip integrated circuit unit may be independent of a turns ratio of the sensing transformer and the compensation transformer and a target voltage gain of the amplification unit.

In an embodiment of the present disclosure, the active voltage compensation device may further include a disturbance protection unit connected to the amplification unit, wherein the disturbance protection unit may include a first disturbance protection unit connected in parallel to an output terminal of the sensing unit at which the output signal is generated, a second disturbance protection unit connected in parallel to an input terminal of the compensation unit, and a third disturbance protection unit connected to an output terminal of the amplified signal feedback unit.

In an embodiment of the present disclosure, the first disturbance protection unit, the second disturbance protection unit, and the third disturbance protection unit may have first impedance when a voltage lower than a certain threshold voltage is applied to the output terminal of the sensing unit, the input terminal of the compensation unit, and the output terminal of the amplified signal feedback unit and may have second impedance less than the first impedance when a voltage higher than the certain threshold voltage is applied to the output terminal of the sensing unit, the input terminal of the compensation unit, and the output terminal of the amplified signal feedback unit.

In an embodiment of the present disclosure, the first disturbance protection unit, the second disturbance protection unit, and the third disturbance protection unit may each include a transient voltage suppression (TSV) diode element, and a junction capacitance of the TVS diode element may be several hundred picofarads (pF) or less.

In an embodiment of the present disclosure, the sensing unit may include a sensing transformer including a primary side disposed on the high-current paths and a secondary side for outputting the output signal to the amplification unit, and the first disturbance protection unit may limit a voltage, which is higher than or equal to a threshold voltage and is induced on the secondary side by the primary side based on a voltage applied to the two or more high-current paths, to a voltage lower than or equal to the threshold voltage to transmit the limited voltage to the amplification unit.

In an embodiment of the present disclosure, the compensation unit may include a transformer including a primary side connected to an output terminal of the amplification unit, and a secondary side connected to the two or more high-current paths, and the second disturbance protection unit may limit a voltage, which is higher than or equal to a threshold voltage and is induced on the primary side by the secondary side based on a voltage applied to the two or more high-current paths, to a voltage lower than or equal to the threshold voltage to transmit the limited voltage to the amplification unit.

In an embodiment of the present disclosure, the power management unit may further include a power management unit which receives a first voltage from a power supply and converts the first voltage into a second voltage having a specified magnitude.

In an embodiment of the present disclosure, the amplification unit may be driven with the second voltage, and active elements included in the amplification unit and active elements included in the power management unit may be embedded in one integrated circuit (IC) chip.

In an embodiment of the present disclosure, the power management unit may include a power conversion unit which generates a switching signal for outputting the second voltage having a certain magnitude from the first voltage having any magnitude, a power management feedback unit which transmits a voltage signal output from the power conversion unit back to the power conversion unit to allow the power management unit to output the second voltage having the certain magnitude, and a filter unit which allows a direct current component of the voltage signal to pass therethrough.

In an embodiment of the present disclosure, the power conversion unit may be embedded in the IC chip, and at least a portion of the power management feedback unit and the filter unit may be discrete commercial elements disposed outside the IC chip.

In an embodiment of the present disclosure, the power conversion unit may include a regulator which generates a direct current (DC) low voltage for driving an internal circuit of the power conversion unit.

In an embodiment of the present disclosure, the power conversion unit may include a pulse width modulation circuit which generates the switching signal by using the DC low voltage provided from the regulator, and a first switch and a second switch which are selectively turned on according to the switching signal.

In an embodiment of the present disclosure, the two or more high-current paths may transmit a high current supplied by the second device to the first device, and the power supply may be a power supply for the first device or the second device.

In an embodiment of the present disclosure, the active voltage compensation device may further include a malfunction detection unit which generates a signal corresponding to an operating state of at least one of the high-current paths, the sensing unit, the amplification unit, and the compensation unit.

In an embodiment of the present disclosure, the amplification unit may include a first amplification unit which amplifies the output signal of the sensing unit to generate the output voltage, and a second amplification unit which is connected to the first amplification unit and generates an output current required for noise compensation, and the malfunction detection unit may include a first malfunction detection unit which generates a signal corresponding to an operating state of the first amplification unit, and a second malfunction detection unit which generates a signal corresponding to an operating state of the second amplification unit.

In an embodiment of the present disclosure, the malfunction detection unit may further include a malfunction determination unit which determines an operating state of the amplification unit to generate a malfunction detection signal based on signals respectively generated from the first malfunction detection unit and the second malfunction detection unit.

In an embodiment of the present disclosure, the first malfunction detection unit may generate the signal corresponding to the operating state of the first amplification unit based on a voltage of at least one node inside the first amplification unit, and the second malfunction detection unit may generate the signal corresponding to the operating state of the second amplification unit based on a voltage of at least one node inside the second amplification unit.

In an embodiment of the present disclosure, the first malfunction detection unit may detects a differential DC voltage between two nodes included in the first amplification unit and may detect whether the differential DC voltage is in a certain range, and the second malfunction detection unit may detect a differential DC voltage between two nodes included in the second amplification unit and may detect whether the differential DC voltage is in a certain range.

In an embodiment of the present disclosure, the first malfunction detection unit and the second malfunction detection unit may each include a malfunction detection signal output unit which outputs a signal corresponding to the operating state and may display the signal corresponding to the operating state.

In an embodiment of the present disclosure, at least a portion of the amplification unit and the malfunction detection unit may be embedded in one IC chip.

In an embodiment of the present disclosure, the IC chip may include a terminal for connection to a power supply that supplies power to the amplification unit and the malfunction detection unit, a terminal for connection to a reference potential of the amplification unit and the malfunction detection unit, and an output terminal of the malfunction detection unit.

In an embodiment of the present disclosure, the IC chip may include a terminal for connection to a switch for selectively supplying power to the malfunction detection unit.

Other aspects, features and advantages of the disclosure will become better understood through the accompanying drawings, the claims, and the detailed description.

## Mode of Disclosure

Since the present disclosure can apply various transformations and have various embodiments, specific embodiments will be illustrated in the drawings and described in detail in the detailed description. Effects and features of the present disclosure, and methods for achieving them will become clear with reference to the embodiments described below in detail together with the drawings. However, the present disclosure is not limited to the embodiments disclosed below and may be implemented in various forms.

Hereinafter embodiments of the present disclosure will be described in detail with reference to the accompanying drawings, wherein like reference numerals refer to the same or corresponding components throughout the drawings, and a redundant description thereof will be omitted.

In the following embodiments, the terms first, second, and the like do not have limited meaning but are used for the purpose of distinguishing one component from another component. In the following embodiments, the expressions used in the singular such as "a," "an," and "the" are intended to include the plural forms as well, unless the context clearly indicates otherwise. In the following embodiments, it will be understood that the terms such as "including," "comprising," and "having" specify the presence of stated features or components, but do not preclude the presence or addition of one or more other features or components. In the drawings, components may be exaggerated or reduced in size for convenience of description. In the following embodiments, it will be understood that when a component, portion, unit, or module is referred to as being "connected" to another component, portion, unit, or module, it may be "directly connected" to the other component, portion, unit, or module or may be "indirectly connected" to the other component, portion, unit, or module with another component, portion, unit, or module interposed therebetween.

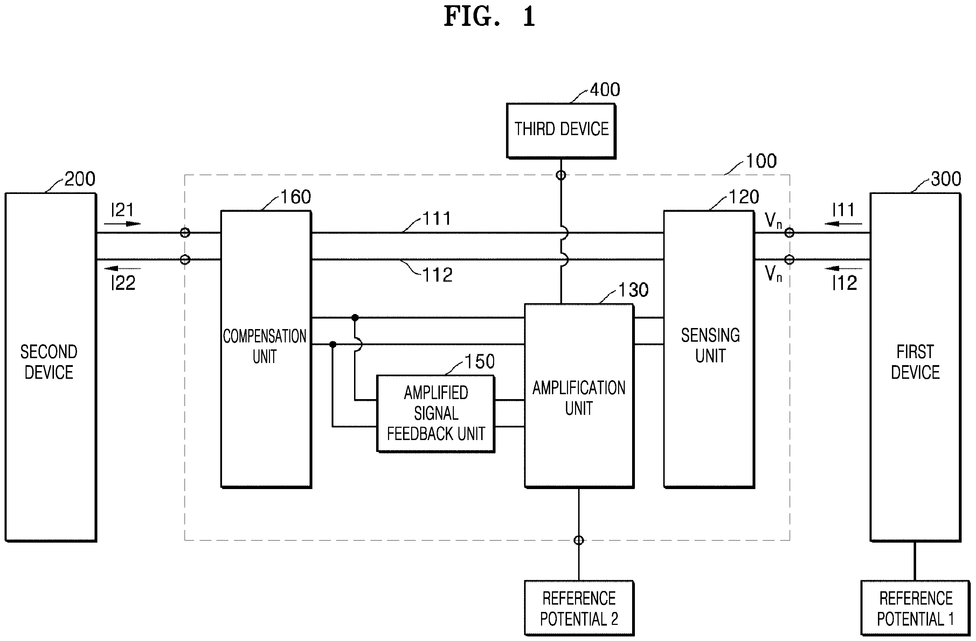

FIG. 1 schematically illustrates a configuration of a system including an active voltage compensation device 100 according to an embodiment of the present disclosure. The active voltage compensation device 100 may actively compensate for a voltage $V_n$ (for example, an electromagnetic interference (EMI) noise voltage) generated in a common mode (CM) from a first device 300 through two or more high-current paths (for example, 111 and 112).

Referring to FIG. 1, the active voltage compensation device 100 may include a sensing unit 120, an amplification unit 130, an amplified signal feedback unit 150, and a compensation unit 160.

In the present specification, the first device 300 may be provided as various types of power systems that use power supplied by a second device 200. For example, the first device 300 may be a load driven by using power supplied by the second device 200. In addition, the first device 300 may be a load (for example, an electric vehicle) that stores energy by using power supplied by the second device 200 and is driven by using the stored energy. However, the present disclosure is not limited thereto.

In the present specification, the second device 200 may be provided as various types of systems that supply power to the first device 300 in the form of current and/or voltage. For example, the second device 200 may be a device that produces and supplies power or may be a device (for example, an electric vehicle charging device) that supplies power produced by another device. Of course, the second device 200 may be a device that supplies stored energy. However, the present disclosure is not limited thereto.

A power converter may be positioned at a side of the first device 300. For example, first currents I11 and I12 may be generated in the high-current paths 111 and 112 by a switching operation of the power converter. Alternatively, for example, a noise current leaked from the first device 300 may pass through the ground to flow into the high-current paths 111 and 112 through the second device 200, and thus the first currents I11 and I12 may be generated. The first currents I11 and I12 generated in the same direction in the high-current paths 111 and 112 may be referred to as CM noise currents.

Meanwhile, a noise voltage $V_n$ in a CM may be a voltage generated between the ground (for example, reference potential 1) and the high-current paths 111 and 112 rather than a voltage generated between the high-current paths 111 and 112.

That is, the first device 300 may correspond to a noise source, and the second device 200 may correspond to a noise receiver.

The two or more high-current paths 111 and 112 may be paths, for example, power lines, through which power supplied by the second device 200, that is, second currents I21 and I22, are transmitted to the first device 300. For example, the two or more high-current paths 111 and 112 may be a live line and a neutral line, respectively. At least a portion of the high-current paths 111 and 112 may pass through the active voltage compensation device 100. The second currents I21 and I22 may be alternating currents having a frequency in a second frequency band. The second frequency band may be, for example, a band of 50 Hz to 60 Hz.

In addition, the two or more high-current paths 111 and 112 may be paths through which noise generated in the first device 300, that is, the first currents I11 and I12, are transmitted to the second device 200. Alternatively, the two or more high-current paths 111 and 112 may be paths in which the noise voltage $V_n$ is generated with respect to the ground (for example, reference potential 1).

The noise voltages $V_n$ or the first currents I11 and I12 may be respectively input to the two or more high-current paths 111 and 112 in a CM. The first currents I11 and I12 may be currents unintentionally generated in the first device 300 due to various causes. For example, the first currents I11 and I12 may be noise currents generated by virtual capacitance between the first device 300 and the surrounding environment. Alternatively, the first currents I11 and I12 may be noise currents generated by a switching operation of the power converter of the first device 300. The noise voltage $V_n$ and the first currents I11 and I12 may have a frequency in a first frequency band. The first frequency band may be a higher frequency band than the above-described second frequency band. The first frequency band may be, for example, a band ranging from 150 kHz to 30 MHz.

Meanwhile, the two or more high-current paths 111 and 112 may include two paths as shown in FIG. 1 and may also include three paths (for example, in a three-phase three-wire power system) or four paths (for example, in a three-phase four-wire power system). The number of high-current paths 111 and 112 may vary according to a type and/or form of a power supply used by the first device 300 and/or the second device 200.

The sensing unit 120 may detect the first currents I11 and I12 in the two or more high-current paths 111 and 112 and may generate output signals corresponding to the first currents I11 and I12. That is, the sensing unit 120 may mean a means for detecting the first currents I11 and I12 in the high-current paths 111 and 112. At least portions of the high-current paths 111 and 112 may pass through the sensing unit 120 to sense the first currents I11 and I12, but a portion inside the sensing unit 120, at which an output signal through sensing is generated, may be insulated from the high-current paths 111 and 112. In an embodiment, the sensing unit 120 may be implemented as a sensing transformer. For example, the sensing unit 120 may have a form in which a wire at a side of the amplification unit 130 is additionally wound around a CM choke around which a power line corresponding to the high-current paths 111 and 112 is wound. The sensing transformer may detect the first currents I11 and I12 in the high-current paths 111 and 112 in a state of being insulated from the high-current paths 111 and 112. However, the sensing unit 120 is not limited to the sensing transformer.

According to an embodiment, the sensing unit 120 may be differentially connected to an input terminal of the amplification unit 130.

The amplification unit 130 may be electrically connected to the sensing unit 120 to amplify an output signal output by the sensing unit 120 and generate an amplified output signal. In the present disclosure, the "amplification" by the amplification unit 130 may mean adjusting the magnitude and/or phase of an amplification target. The amplification unit 130 may be implemented as various means and may include active elements. In an embodiment, the amplification unit 130 may include an operational amplifier (OP-AMP). For example, the amplification unit 130 may include a plurality of passive elements such as resistors and capacitors in addition to the OP-AMP. In addition, in an embodiment, the amplification unit 130 may include a bipolar junction transistor (BJT). For example, the amplification unit 130 may include a plurality of passive elements such as resistors and capacitors in addition to the BJT. However, the present disclosure is not limited thereto, and as the amplification unit 130 of the present disclosure, a means for "amplification" described in the present disclosure may be used without limitation.

According to an embodiment, referential potential 2 of the amplification unit 130 may be distinguished from referential potential 1 of the active voltage compensation device 100. For example, when the amplification unit 130 is insulated from the high-current paths 111 and 112, referential potential 2 of the amplification unit 130 may be distinguished from referential potential 1 of the active voltage compensation device 100.

However, the present disclosure is not limited thereto. For example, when the amplification unit 130 is not insulated from the high-current paths 111 and 112, a reference potential of the amplification unit 130 may not be distinguished from a reference potential of the active voltage compensation device 100.

The amplification unit 130 may receive power from a third device 400 that is separate from the first device 300 and/or the second device 200. The amplification unit 130 may receive power from the third device 400 to amplify an output signal output from the sensing unit 120 and generate an amplified voltage. In this case, the third device 400 may be a device that receives power from a power supply unrelated to the first device 300 and the second device 200 to generate input power for the amplification unit 130. Optionally, the third device 400 may also be a device that receives power from any one device of the first device 300 and the second device 200 to generate input power for the amplification unit 130.

An output signal (for example, a current or voltage) amplified by the amplification unit 130 may be input to the compensation unit 160. Alternatively, the output signal amplified by the amplification unit 130 may be converted into a feedback signal by the amplified signal feedback unit 150 and input back to the input terminal of the amplification unit 130.

One end of the amplified signal feedback unit 150 may be connected to an output terminal of the amplification unit 130, and the other end thereof may be connected to the input terminal of the amplification unit 130.

The amplified signal feedback unit 150 may be electrically connected to the output terminal of the amplification unit 130 and the input terminal of the amplification unit 130, may generate a feedback signal corresponding to an amplified signal generated by the amplification unit 130, and may input the generated feedback signal to the input terminal of the amplification unit 130.

The amplified signal feedback unit 150 may be implemented as various means. In an embodiment, the amplified signal feedback unit 150 may include a plurality of passive elements such as resistors and capacitors.

The compensation unit 160 may generate compensation voltages in series on the high-current paths 111 and 112 based on an amplified voltage output by the amplification unit 130. An output side of the compensation unit 160 may generate compensation voltages in series on the high-current paths 111 and 112, but may be insulated from the amplification unit 130. For example, the compensation unit 160 may be provided as a compensation transformer for the insulation. An output signal (for example, an output voltage) of the amplification unit 130 may be applied to a primary side of the compensation transformer, and a compensation voltage based on the output signal may be generated on a secondary side of the compensation transformer. The compensation voltage may have an effect of suppressing the first currents I11 and I12 present on the high-current paths 111 and 112.

The compensation unit 160 may be a feedforward type that compensates for noise input from the first device 300 at a front side which is a side of a power supply. That is, in the active voltage compensation device 100, the sensing unit 120 may be disposed at the side of the first device 300 which is a noise source, and the compensation unit 160 may be disposed at a side of the second device 200 which is a power supply. However, the present disclosure is not limited thereto, and the active voltage compensation device 100 may include a feedback-type compensation unit that compensates for noise by returning to a rear side. In this case, in the active voltage compensation device 100, the sensing unit 120 may be disposed at the side of the second device 200, and the compensation unit 160 may be disposed at the side of the first device 300.

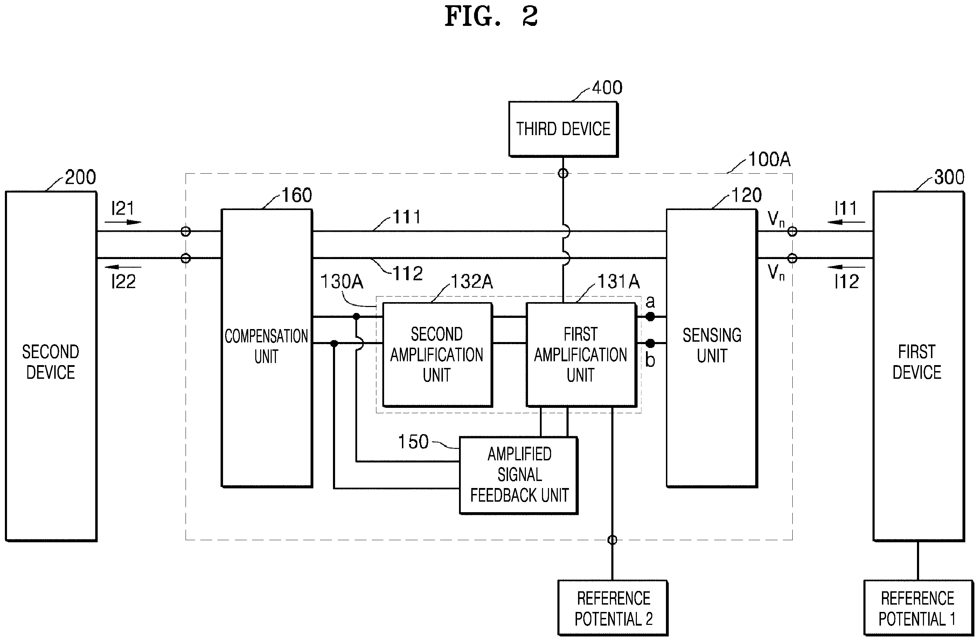

FIG. 2 illustrates a more specific example of the embodiment shown in FIG. 1 and schematically illustrates an active voltage compensation device 100A according to an embodiment of the present disclosure. The active voltage compensation device 100A may actively compensate for a noise voltage $V_n$ input to each of two high-current paths 111 and 112 connected to a first device 300 in a CM.

Referring to FIG. 2, the active voltage compensation device 100A may include a sensing unit 120, an amplification unit 130A, an amplified signal feedback unit 150, and a compensation unit 160, and the amplification unit 130A may include a first amplification unit 131A and a second amplification unit 132A.

The active voltage compensation device 100A differs from the active voltage compensation device 100 according to the embodiment described with reference to FIG. 1 in that the amplification unit 130A includes the first amplification unit 131A and the second amplification unit 132A. Hereinafter, the active voltage compensation device 100A will be described based on the above-described difference. The description of the high-current paths 111 and 112, the sensing unit 120, the amplified signal feedback unit 150, the compensation unit 160, reference potential 1, and reference potential 2 shown in relation to the active voltage compensation device 100A of FIG. 2 corresponds to the description with reference to FIG. 1.

The sensing unit 120 may sense first currents I11 and I12 in the high-current paths 111 and 112 to generate an output signal toward the first amplification unit 131A. The output signal may correspond to a voltage between a node a and a node b. The nodes a and b may be differentially connected to input terminals of the first amplification unit 131A. Accordingly, the voltage between the node a and the node b may be input as an input voltage for the first amplification unit 131A.

The first amplification unit 131A may amplify the input voltage to output an output signal (for example, an amplified voltage). In an embodiment, the first amplification unit 131A may include an OP-AMP. For example, the first amplification unit 131A may include a plurality of passive elements such as resistors and capacitors in addition to the OP-AMP.

An amplified voltage $V_1$ which is the output signal of the first amplification unit 131A may become an input signal of the compensation unit 160, and the compensation unit 160 may generate compensation voltages in series on the high-current paths 111 and 112 based on the amplified voltage $V_1$.

Meanwhile, the output signal of the first amplification unit 131A becomes an input signal of the second amplification unit 132A. The second amplification unit 132A may be electrically connected to the first amplification unit 131A to amplify the input signal of the second amplification unit 132A and output an output signal (for example, an amplified current). In an embodiment, the second amplification unit 132A may include at least one BJT. For example, the amplification unit 130A may include a plurality of passive elements such as resistors and capacitors in addition to the BJT.

An amplified current $I_1$ which is the output signal of the second amplification unit 132A may be input to the compensation unit 160 and may serve to supply a current required for noise voltage compensation of the active voltage compensation device 100. The second amplification unit 132A may generate the amplified current $I_1$ without substantially changing the amplified voltage $V_1$ which is the output signal of the first amplification unit 131A. The first amplification unit 131A and the second amplification unit 132A may be allowed to perform voltage amplification and current amplification required for noise voltage compensation, respectively, thereby allowing the active voltage compensation device 100 to more stably operate.

Although it has been described that the first amplification unit 131A and the second amplification unit 132A are functionally separated, according to an embodiment, the first amplification unit 131A and the second amplification unit 132A may be implemented as one IC.

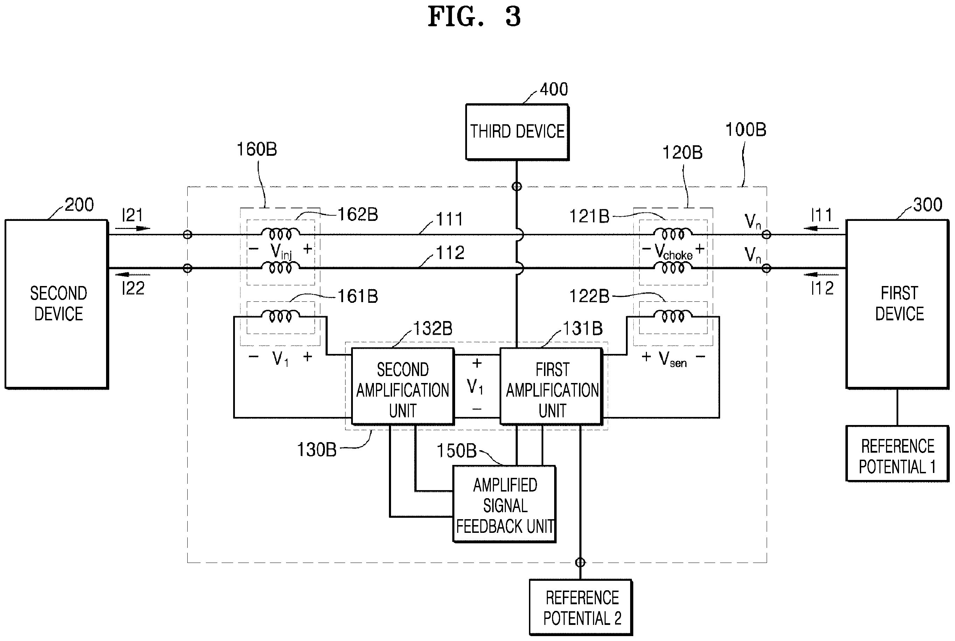

FIG. 3 illustrates a more specific example of the embodiment shown in FIG. 2 and schematically illustrates an active voltage compensation device 100B according to an embodiment of the present disclosure. The active voltage compensation device 100B may actively compensate for a noise voltage $V_n$ input to each of two high-current paths 111 and 112 connected to a first device 300 in a CM.

Referring to FIG. 3, the active voltage compensation device 100B may include a sensing transformer 120B, an amplification unit 130B, an amplified signal feedback unit 150B, and a compensation transformer 160B, and the amplification unit 130B may include a first amplification unit 131B and a second amplification unit 132B.

In an embodiment, the above-described sensing unit 120 may include the sensing transformer 120B. In this case, in a state of being insulated from the high-current paths 111 and 112, the sensing transformer 120B may sense a voltage induced across both ends of the sensing transformer 120B due to first currents I12 and I12 or first currents I11 and I12 in the high-current paths.

The sensing transformer 120B may include a primary side 121B disposed on the high-current paths 111, 112 and a secondary side 122B differentially connected to an input terminal of the first amplification unit 131B. Based on a magnetic flux density, which is induced on the primary side 121B (for example, a primary winding) disposed on the high-current paths 111 and 112 by the first currents I11 and I12, the sensing transformer 120B may generate an induced current or induced voltage on the secondary side 122B (for example, a secondary winding).

The primary side 121B of the sensing transformer 120B may be, for example, a winding in which a first high-current path 111 and a second high-current path 112 are each wound around one core. However, the present disclosure is not limited thereto, and the primary side 121B of the sensing transformer 120B may have a form in which the first high-current path 111 and the second high-current path 112 passes through the core.

According to an embodiment of the present disclosure, the sensing transformer 120B may have a form in which a wire of the secondary side 122B is wound around a CM choke around which the first high-current path 111 and the second high-current path 112 are wound. In this way, when the sensing transformer 120B is formed by using the CM choke, the sensing transformer 120B may not only perform sensing and transforming functions, but may also serve as the CM choke that is a passive filter. That is, when the sensing transformer 120B is formed by additionally winding the wire of the secondary side 122B around the CM choke, the sensing transformer 120B may serve to sense the first currents I11 and I12 and transform a voltage and concurrently suppress or block the first currents I11 and I12. Meanwhile, by adding an active voltage compensation device according to various embodiments of the present disclosure along with the above-described CM choke, without an increase in size or number of CM chokes, a CM noise voltage may be effectively reduced even in a high-power system.

Specifically, the sensing transformer 120B may be provided such that a magnetic flux density induced by the first current I11 in the first high-current path 111 (for example, a live line) and a magnetic flux density induced by the first current I12 in the second high-current path 112 (for example, a neutral line) overlap (reinforce) each other. In this case, the high currents I21 and I22 may also flow in the high-current paths 111 and 112, and a magnetic flux density induced by the high current I21 in the first high-current path 111 and a magnetic flux density induced by the high current I22 in the second high-current path 112 may cancel each other out. In addition, as an example, the sensing transformer 120B may be provided such that a magnitude of a magnetic flux density induced by the first currents I11 and I12 in a first frequency band (for example, a band ranging from 150 kHz to 30 MHz) is greater than a magnitude of a magnetic flux density induced by the high currents I21 and I22 in a second frequency band (for example, a band ranging from 50 Hz to 60 Hz).

In this way, the sensing transformer 120B may be provided such that the magnetic flux densities induced by the high currents I21 and I22 cancel each other out, thereby allowing only the first currents I11 and I12 corresponding to CM noise currents to be detected. That is, a voltage induced on the secondary side 122B of the sensing transformer 120B may be a voltage generated by converting a voltage, which is induced on the primary side 121B according to the first currents I11 and I12, at a certain ratio.

For example, in the sensing transformer 120B, when a turns ratio of the primary side 121B to the secondary side 122B is $1:N_{sen}$, and a self-inductance of the primary side 121B of the sensing transformer 120B is $L_{sen}$, the secondary side 122B may have a self-inductance of $N_{sen}^2 \cdot L_{sen}$. In an example, the primary side 121B and the secondary side 122B of the sensing transformer 120B may be coupled with a coupling coefficient $k_{sen}$.

For example, when the voltage induced across both ends of the primary side 121B of the sensing transformer 120B due to the first currents I11 and I12 is $V_{choke}$, a voltage $V_{sen}$ induced on the secondary side 122B is $N_{sen}$ times $V_{choke}$.

Meanwhile, the secondary side of the sensing transformer 120B may be connected to the input terminal of the first amplification unit 131B. For example, the secondary side 122B of the sensing transformer 120B may be differentially connected to the input terminal of the first amplification unit 131B to provide an induced voltage to the first amplification unit 131B.

The first amplification unit 131B may be an example of the above-described first amplification unit 131. The first amplification unit 131B may amplify the voltage $V_{sen}$ detected by the sensing transformer 120B and induced on the secondary side 122B. For example, the first amplification unit 131B may amplify a magnitude of the induced voltage $V_{sen}$ at a certain ratio and/or may adjust a phase thereof.

When a voltage gain of the first amplification unit 131B is $G_1$, an output voltage $V_1$ of the first amplification unit 131B may be $G_1 \cdot V_{sen}$. That is, the output voltage $V_1$ may have a value of $G_1 \cdot N_{sen} \cdot V_{choke}$. The output voltage $V_1$ of the first amplification unit 131B may represent a potential with respect to reference potential 2 of the first amplification unit 131B.

The output voltage $V_1$ of the first amplification unit 131B may become an input voltage of the compensation transformer 160B. That is, the output voltage $V_1$ of the first amplification unit 131B may become a voltage of a primary side 161B of the compensation transformer 160B, and based on the output voltage $V_1$, the compensation transformer 160B may generate compensation voltages $V_{inj}$ in series on the high-current paths 111 and 112 which are a secondary side 162B.

The second amplification unit 132B may be an example of the above-described second amplification unit 132. The second amplification unit 132B may amplify an output current of the first amplification unit 131B. For example, the second amplification unit 132B may amplify a magnitude of the output current at a certain ratio and/or may adjust a phase thereof.

An output current of the second amplification unit 132B becomes an input current of the compensation transformer 160B. That is, the output current of the second amplification unit 132B may become a current of the primary side 161B of the compensation transformer 160B, and the second amplification unit 132B may be a means for amplifying a current to sufficiently supply the input current of the compensation transformer 160B. Meanwhile, an output voltage of the second amplification unit 132B may have a value that is equal or similar to a value of the output voltage $V_1$ of the first amplification unit 131B. An output terminal of the second amplification unit 132B is connected to the primary side 161B of the compensation transformer 160B, and the output voltage of the second amplification unit 132B becomes an input voltage of the compensation transformer 160A.

The amplified signal feedback unit 150B may be an example of the described-above amplified signal feedback unit 150. The amplified signal feedback unit 150B may be connected between the output terminal of the second amplification unit 132B and the input terminal of the first amplification unit 131B, may generate a feedback signal corresponding to an output signal (for example, an output voltage or output current) of the second amplification unit 132B, and may transmit the feedback signal to the input terminal of the first amplification unit 131B. The amplified signal feedback unit 150B may be a means for transmitting a feedback signal to the first amplification unit 131B to achieve optimal noise voltage compensation according to a final output voltage or a final output current of the amplification units 131B and 132B.

The compensation transformer 160B may be an example of the above-described compensation unit 160. The compensation transformer 160B may be a means for insulating the amplification units 131B and 132B including active elements from the high-current paths 111 and 112. That is, in a state insulated from the high-current paths 111 and 112, the compensation transformer 160B may be a means for compensating for a voltage by inducing a compensation voltage $V_{inj}$ on the high-current paths 111 and 112 based on the output voltage $V_1$ of the amplification units 131B and 132B.

The compensation transformer 160B may include the primary side 161B differentially connected to the output terminal of the second amplification unit 132B and the secondary side 162B connected to the high-current paths 111 and 112.

The compensation transformer 160B may have, for example, a structure in which a wire of the primary side 161B and a wire of the secondary side 162B pass through one core or are wound around the one core at least once. The wire of the primary side 161B may be a wire through which an output signal of the second amplification unit 132B flows, and the electric wire of the secondary side 162B wire may correspond to the high-current paths 111 and 112.

The compensation transformer 160B may induce the compensation voltage $V_{inj}$ on the high-current paths 111 and 112, which are the secondary side 162B, based on the amplified voltage $V_1$ generated on the primary side 161B.

For example, when a turns ratio of the primary side 161B to the secondary side 162B in the compensation transformer 160B is $1:N_{inj}$ and a self-inductance of the compensation transformer 160B is $L_{inj}$, the secondary side 162B may have a self-inductance of $N_{inj}^2 . L_{inj}$. In an example, the primary side 161B and the secondary side 162B of the compensation transformer 160B may be coupled with a coupling coefficient $k_{inj}$. In this case, the voltage $V_{inj}$ induced on the secondary side 162B is $N_{inj}$ times $V_1$. Therefore, the compensation voltage $V_{inj}$ may have a value of $G_1 . N_{sen} . N_{inj} . V_{choke}$.

In the active voltage compensation device 100B according to an embodiment, a reference potential (that is, reference potential 2), which is different from that of the remaining components, may be used for a component that generates a compensation voltage to allow the component, which generates the compensation voltage, to operate in an insulated state, thereby improving the reliability of the active voltage compensation device 100B. However, a voltage compensation device according to the present disclosure is not limited to such an insulation structure.

Meanwhile, when a CM noise voltage of a node, at which the first device 300 meets the primary side 121B of the sensing transformer 120B, is $V_n$, and a voltage between the compensation transformer 160B and a second device 200 is $V_{LISN}$, a circuit equation between $V_n$ and $V_{LISN}$ is solved as shown in Equation 1 below. $V_n$ and $V_{LISN}$ may denote potentials with respect to reference potential 1 (for example, the ground).

$$[Equation\ 1]$$

$$V_n - V_{choke} - V_{inj} - V_{LISN} = 0$$

$$V_n - V_{choke} - G_1 N_{sen} N_{inj} V_{choke} - V_{LISN} = 0$$

Since noise emitted toward the second device 200 by the operation of the active voltage compensation device 100B should correspond to approximately 0, $V_{LISN}$ should correspond to 0, and Equation 2 below may be derived.

$$[Equation\ 2]$$

$$V_n - V_{LISN} = (1 + G_1 N_{sen} N_{inj}) V_{choke} \approx V_n$$

$$V_{choke} \approx \frac{V_n}{(1 + G_1 N_{sen} N_{inj})}$$

Meanwhile, by using Equation 2, effective impedance of the high-current paths 111 and 112 at a point between the sensing transformer 120B and the compensation transformer 160B may be calculated as shown in Equation 2.

$$[Equation\ 3]$$

$$Z_{line,eff} = \frac{V_n}{I_{line}} = \frac{(1 + G_1 N_{sen} N_{inj}) V_{choke}}{I_{line}} = (1 + G_1 N_{sen} N_{inj}) s L_{choke}$$

In Equation 3, s. $L_{choke}$ may denote impedance of the CM choke included in the sensing transformer 120B. Therefore, $Z_{line,eff}$ denotes that impedance on the high-current paths 111 and 112 (viewed from a point $V_n$) is increased to $(1 + G_1 . N_{sen} . N_{inj})$ times the impedance s. $L_{choke}$ of the CM choke.

This may be an effect by the active voltage compensation device 100B. The first amplification unit 131B, the second amplification unit 132B, the amplified signal feedback unit 150B, and the compensation transformer 160B of the active voltage compensation device 100B may perform voltage compensation $V_{inj}$ on the high-current path, which. may give an effect equivalent to an effect of increasing inductance to suppress a noise current from flowing (L boost type).

In other words, the active compensation device 100 according to an embodiment of the present disclosure may have an effect of effective inductance $L_{choke,eff}$ that increases to $1 + G_1 . N_{sen} . N_{inj}$ times the inductance $L_{choke}$ of the CM choke (Equation 4), and thus a noise suppression effect may be increased as compared with when only the CM choke is present.

[Equation 4]

$$L_{choke,eff} = (1 + G_1 N_{sen} N_{inj}) L_{choke}$$

For example, the noise suppression effect may be adjusted according to a voltage gain $G_1$ of the first amplification unit 131B, a turns ratio $N_{sen}$ of the sensing transformer 120B, and a turns ratio $N_{inj}$ of the compensation transformer 160B.

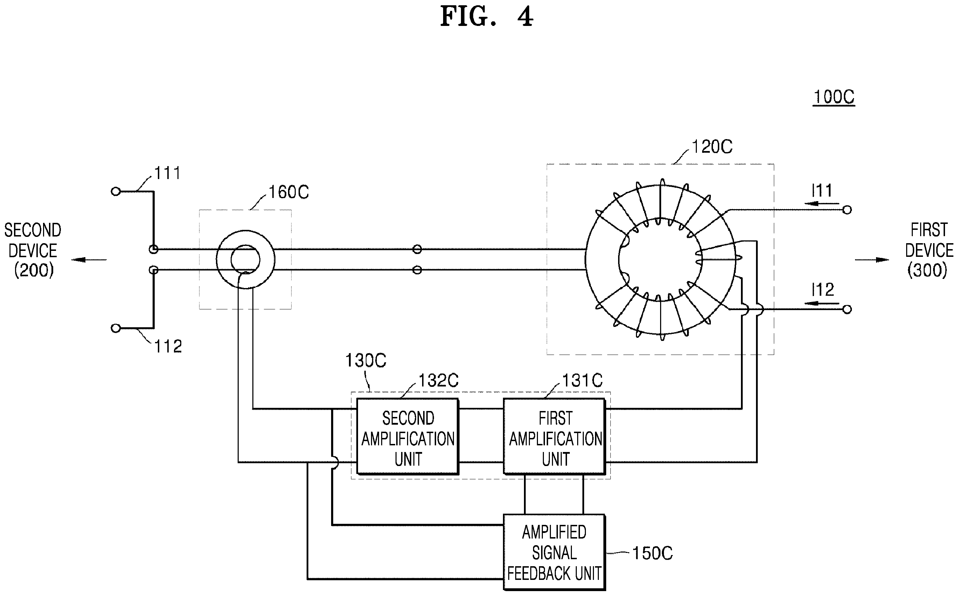

FIGS. 4 to 5 schematically illustrate active voltage compensation devices 100C and 100C-1 according to an embodiment of the present disclosure as specific examples of the active voltage compensation device 100B shown in FIG. 3.

The active voltage compensation device 100C according to an embodiment shown in FIG. 4 may include a sensing transformer 120C, an amplification unit 130C, an amplified signal feedback unit 150C, and a compensation transformer 160C. The amplification unit 130C may include a first amplification unit 131C and a second amplification unit 132C.

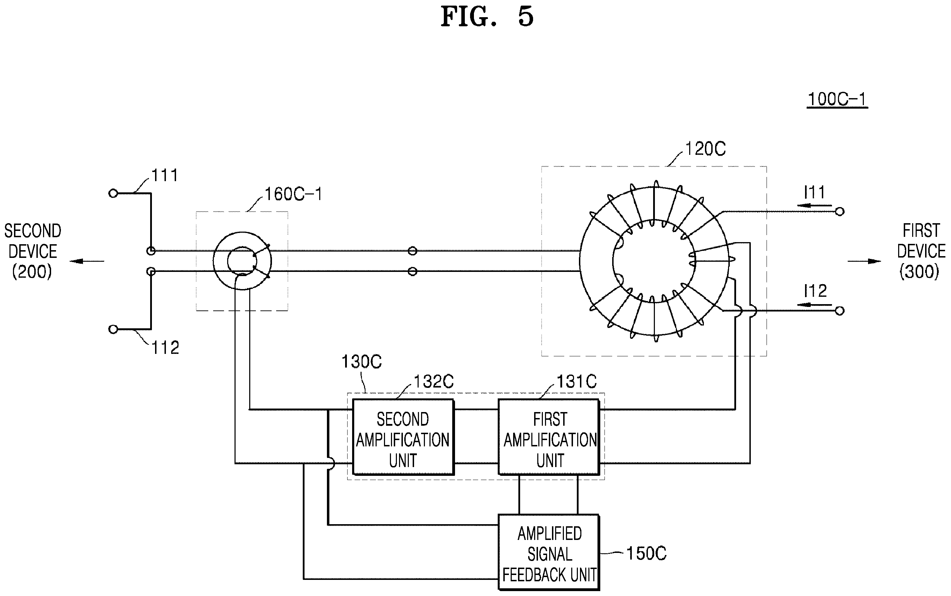

The active voltage compensation device 100C-1 according to an embodiment shown in FIG. 5 may include a sensing transformer 120C, an amplification unit 130C, an amplified signal feedback unit 150C, and a compensation transformer 160C-1. The amplification unit 130C may include a first amplification unit 131C and a second amplification unit 132C.

In FIGS. 4 and 5, the sensing transformer 120C is an example of the sensing transformer 120B described with reference to FIG. 3, and the first amplification unit 131C, the second amplification unit 132C, and the amplified signal feedback unit 150C correspond to the description of the sensing transformer 120B, the first amplification unit 131B, the second amplification unit 132B, and the amplified signal feedback unit 150B described with reference to FIG. 3.

Referring to FIGS. 4 and 5, the compensation transformer 160C or 160C-1 may have a structure in which a primary side wire and a secondary side wire pass through one core or are wound around the core at least once. The primary side wire may correspond to an output terminal of the second amplification unit 132C. The secondary side wire may correspond to high-current paths 111 and 112.

In the active voltage compensation device 100C of FIG. 4, an embodiment in which the primary side wire and the high-current paths 111 and 112 at a secondary side in the compensation transformer 160C pass through the core is shown. A turns ratio $N_{inj}$ may be about 1.

In the active voltage compensation device 100C-1 of FIG. 5, an embodiment in which the primary side wire of the compensation transformer 160C-1 passes through the core, and the high-current paths 111 and 112 at a secondary side are wound around the core once is shown. The turns ratio $N_{inj}$ may be about 2.

A compensation voltage induced on the secondary side of the compensation transformer 160C or 160C-1 may correspond to a value obtained by multiplying an output voltage of the second amplification unit 132C by the turns ratio $N_{inj}$.

Meanwhile, referring again to FIGS. 4 and 5, in the active voltage compensation device 100C or 100C-1 according to an embodiment of the present disclosure, the sensing transformer 120C may be an element of a different type from the compensation transformer 160C or 160C-1.

For example, the sensing transformer 120 may have a form in which an input terminal side wire of the first amplification unit 130C is additionally wound around a CM choke around which a power line corresponding to the high-current paths 111 and 112 is wound. The sensing transformer 120C may sense noise by simply winding the secondary side wire around the CM choke.

In this way, when the sensing transformer 120C is formed by using the CM choke, unlike the compensation transformer 160C or 160C-1 that serves only as a transformer, the sensing transformer 120C may be a passive filter that serves to suppress noise by using inductance,. That is, when the sensing transformer 120C is formed by additionally winding the secondary side wire around the CM choke, the sensing transformer 120C may not only perform sensing and transforming functions, but may also serve as the CM choke that is a passive filter. In this case, impedance of an active voltage compensation device may be designed to be sufficiently greater than impedance of a CM choke so that the existing function of the CM choke may not be interrupted.

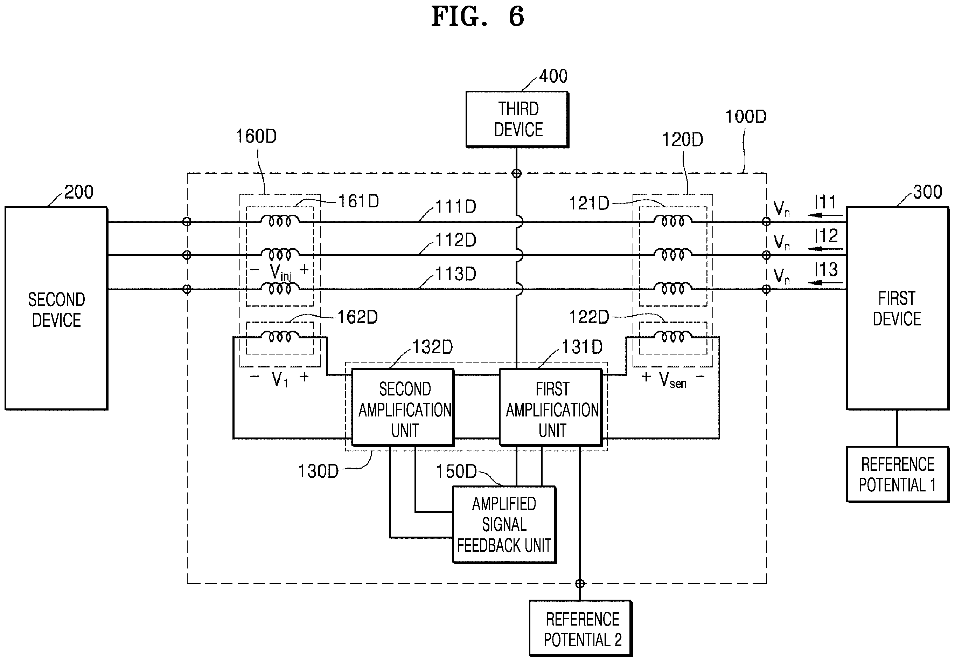

FIG. 6 schematically illustrates a configuration of a system including an active voltage compensation device 100D according to another embodiment of the present disclosure. Hereinafter, the descriptions of contents that overlap the contents described with reference to FIG. 3 will be omitted.

Referring to FIG. 6, the active voltage compensation device 100D may actively compensate for a noise voltage $V_n$ input to each of high-current paths 111D, 112D, and 113D connected to a first device 300D in a CM.

To this end, the active voltage compensation device 100D according to another embodiment of the present disclosure may include three high-current paths 111D, 112D, and 113D, a sensing transformer 120D, an amplification unit 130D, an amplified signal feedback unit 150D, and a compensation transformer 160D, and the amplification unit 130D may include a first amplification unit 131D and a second amplification unit 132D.

In comparison with the active voltage compensation device 100B according to the embodiment described with reference to FIG. 3, the active voltage compensation device 100D according to the embodiment shown in FIG. 6 includes the three high-current paths 111D, 112D, and 113D and thus differs from the active voltage compensation device 100B in the sensing transformer 120D and the compensation transformer 160D. Therefore, hereinafter, the active voltage compensation device 100D will be described based on the above-described difference.

The active voltage compensation device 100D may include a first high-current path 111D, a second high-current path 112D, and a third high-current path 113D which are distinguished from each other. According to an embodiment, the first high-current path 111D may be an R-phase power line, the second high-current path 112D may be an S-phase power line, and the third high-current path 113D may be a T-phase power line. A noise voltage or noise current may be input to each of the first high-current path 111D, the second high-current path 112D, and the third high-current path 113D in a CM.

A primary side 121D of the sensing transformer 120D may be disposed on each of the first high-current path 111D, the second high-current path 112D, and the third high-current path 113D, and thus may generate an induced voltage $V_{sen}$ on a secondary side 122D. Magnetic flux densities generated in the sensing transformer 120D by noise currents in the three high-current paths 111D, 112D, and 113D may reinforce each other.

Meanwhile, in the active voltage compensation device 100D, the first and second amplification units 131D and 132D and the amplified signal feedback unit 150D correspond to the first and second amplification units 131B and 132B and the amplified signal feedback unit 150B. For example, a wire of the secondary side 122D of the sensing transformer 120D may be differentially connected to the first amplification unit 131D. The voltage $V_{sen}$ induced on the secondary side 122D of the sensing transformer 120D becomes an input voltage of the first amplification unit 131D. The first amplification unit 131D may output an amplified voltage $V_1$ based on the input voltage. The second amplification unit 132D may output an amplified current $I_1$ while maintaining the amplified voltage $V_1$.

The amplified voltage $V_1$ may become an input voltage of the compensation transformer 160D, that is, a voltage of a primary side 161D of the compensation transformer 160D.

Meanwhile, a secondary side 162D of the compensation transformer 160D may be disposed on each of the first high-current path 111D, the second high-current path 112D, and the third high-current path 113D. Based on the voltage $V_1$ of the primary side 161D output from the second amplification unit 132D, the compensation transformer 160D may respectively generate the compensation voltages $V_{inj}$ on the three high-current paths 111D, 112D, and 113D, which correspond to the secondary side 162D, in series.

The active voltage compensation device 100D according to the embodiment may perform voltage compensation for CM noise on a power line of a three-phase three-wire power system.

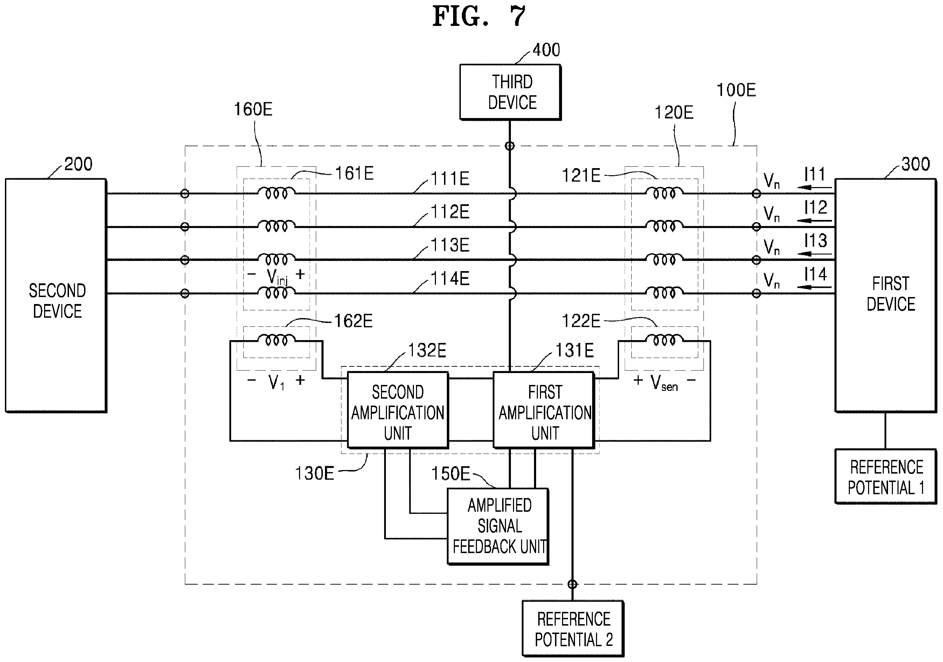

FIG. 7 schematically illustrates a configuration of a system including an active voltage compensation device 100E according to another embodiment of the present disclosure. Hereinafter, the descriptions of contents that overlap the contents described with reference to FIG. 3 will be omitted.

Referring to FIG. 7, the active voltage compensation device 100E may actively compensate for a noise voltage $V_n$ input to each of high-current paths 111E, 112E, 113E, and 114E connected to a first device 300E in a CM.

To this end, the active compensation device 100E according to an embodiment of the present disclosure may include four high-current paths 111E, 112E, 113E, and 114E, a sensing transformer 120E, an amplification unit 130E, an amplified signal feedback unit 150E, and a compensation transformer 160E, and the amplification unit 130E may include a first amplification unit 131E and a second amplification unit 132E.

In comparison with the active compensation device 100B according to the embodiment described with reference to FIG. 3, the active compensation device 100E according to the embodiment shown in FIG. 7 includes the four high-current paths 111E, 112E, 113E, and 114E and thus differs from the active voltage compensation device 100B in the sensing transformer 120E and the compensation transformer 160E. Therefore, hereinafter, the active voltage compensation device 100E will be described based on the above-described difference.

The active voltage compensation device 100E may include a first high-current path 111E, a second high-current path 112E, a third high-current path 113E, and a fourth high-current path 114E which are distinguished from each other. According to an embodiment, the first high-current path 111E may be an R phase power line, the second high-current path 112E may be an S phase power line, the third high-current path 113E may be a T phase power line, and the fourth high-current path 114E may be an N-phase power line. A noise voltage or a noise current may be input to each of the first, second, third, and fourth high-current paths 111E, 112E, 113E, and 114E in a CM.

A primary side 121E of the sensing transformer 120E may be disposed on each of the first high-current path 111E, the second high-current path 112E, the third high-current path 113E, and the fourth high-current path 114E and thus may generate an induced voltage $V_{sen}$ on a secondary side 122E. Magnetic flux densities generated in the sensing transformer 120E by noise currents in the four high-current paths 111E, 112E, 113E, and 114E may reinforce each other.

Meanwhile, in the active voltage compensation device 100E, the first and second amplification units 131E and 132E and the amplified signal feedback unit 150E correspond to the first and second amplification units 131B and 132B and the amplified signal feedback unit 150B. For example, a wire of the secondary side 122E of the sensing transformer 120E may be differentially connected to the first amplification unit 131E. The voltage $V_{sen}$ induced on the secondary side 122E of the sensing transformer 120E becomes an input voltage of the first amplification unit 131E. The first amplification unit 131E may output an amplified voltage $V_1$ based on the input voltage, and the second amplification unit 132E may output an amplified current $I_1$ while maintaining the amplified voltage $V_1$.

The amplified voltage $V_1$ may become an input voltage of the compensation transformer 160E, that is, a voltage of a primary side 161E of the compensation transformer 160E.

Meanwhile, a secondary side 162E of the compensation transformer 160E may be disposed on each of the first high-current path 111E, the second high-current path 112E, the third high-current path 113E, and the fourth high-current path 114E. Based on the voltage $V_1$ of the primary side 161E output from the second amplification unit 132E, the compensation transformer 160E may respectively generate the compensation voltages $V_{inj}$ on the four high-current paths 111E, 112E, 113E, and 114E, which correspond to the secondary side 162E, in series.

The active voltage compensation device 100E according to the embodiment may perform voltage compensation for CM noise on a power line of a three-phase four-wire power system.

Unlike a case in which a CM choke is used alone, an active voltage compensation device according to various embodiments may have only a slight increase in size or price even when used for high power. Therefore, the active voltage compensation device according to various embodiments may be much more advantageous in terms of price, volume, and weight as compared with passive filters in high-power systems.

In addition, since the active voltage compensation device according to various embodiments of the present disclosure has a structure in which an amplification unit 130 is electrically insulated from a high-current path (for example, a power line), elements included in the amplification unit 130 may be protected from electrical overstress (EOS). For example, since the amplification unit 130 according to various embodiments of the present disclosure is insulated from the power line, a direct current (DC) low voltage (for example, within 48 V of a third device 400) used in a control board may be used. Therefore, the amplification unit 130 does not require a separate power conversion circuit. In addition, in the active voltage compensation device according to various embodiments of the present disclosure, irrespective of a reference potential of a power supply (for example, a second device 200), elements with a low rated voltage may be used to constitute the amplification unit 130.

In addition, the active voltage compensation device according to various embodiments of the present disclosure may stably operate irrespective of an electrical system on which the active voltage compensation device is installed. Therefore, the active voltage compensation device does not need to be custom designed through repeated testing for each circuit or system and may have versatility as an independent component. The active voltage compensation device according to various embodiments may be commercialized as an independent module.

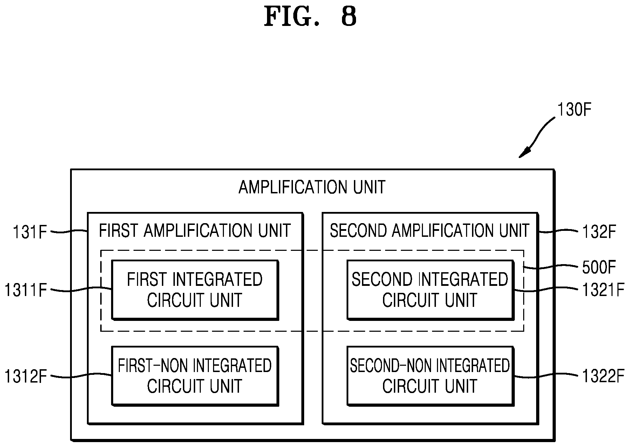

FIG. 8 illustrates a specific example of the amplification unit 130 shown in FIG. 1 and illustrates an example of a functional configuration of an amplification unit 130F according to another embodiment of the present disclosure.

Referring to FIG. 8, an active voltage compensation device 100 according to various embodiments of the present disclosure may include an IC unit 500F and a non-IC unit in the amplification unit 130F. In addition, a first amplification unit 131F according to embodiments of the present disclosure may include a first IC unit 1311F and a first non-IC unit 1312F, and a second amplification unit 132F may include a second IC unit 1321F and a second non-IC unit 1322F. The first IC unit 1311F and the second IC unit 1321F may constitute the IC unit 500F of the amplification unit 130F.

The IC unit 500F may include essential components of the active voltage compensation device 100. The essential components may include, for example, active elements. Therefore, active element included in the amplification unit 130F may be integrated into the IC unit 500F of the amplification unit 130F. A non-IC unit of the amplification unit 130F may not include active elements. The IC unit 500F may further include passive elements as well as active elements.

The IC unit 500F according to an embodiment of the present disclosure may physically be one IC chip. The IC 7unit 500F according to an embodiment of the present disclosure may have versatility as an independent module and may be applied to the active voltage compensation device 100 having various designs.

The non-IC unit according to an embodiment of the present disclosure may be a component that is not included in the IC unit 500F among components of the amplification unit 130F. The non-IC unit may be modified according to the design of the active voltage compensation device 100.

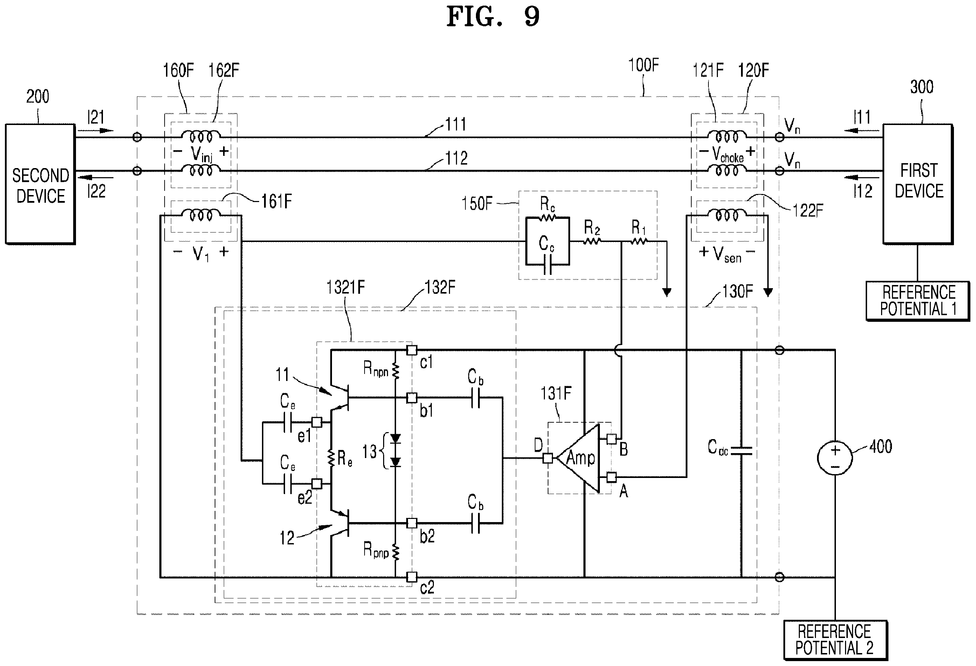

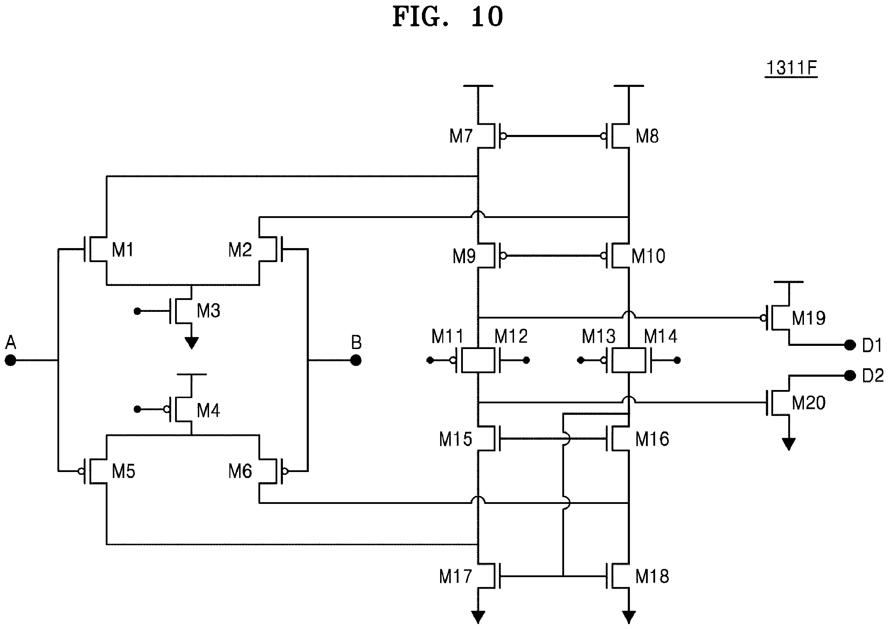

The IC unit 500F provided as one IC chip may include terminals for connection to the non-IC unit. The IC unit 500F and the non-IC unit may be coupled to each other to function as the amplification unit 130F. Referring to FIGS. 8 and 2 together, a combination of the IC unit 500F and the non-IC unit may perform a function of generating an amplified signal from an output signal output from a sensing unit 120. The amplified signal may be input to a compensation unit 160. The IC unit 500F may further include a terminal for connection to a third device 400 and a terminal for connection to referential potential 2. Examples of a detailed configuration of the amplification unit 130F including the IC unit 500F and the non-IC unit will be described below with reference to FIGS. 9 and 10.

FIG. 9 illustrates a specific example of an active voltage compensation device 100F including the amplification unit 130F shown in FIG. 8. FIG. 10 illustrates a specific example of a first IC unit 1311F of a first amplification unit 131F shown in FIG. 9.

The active voltage compensation device 100F may actively compensate for a voltage $V_n$ (for example, a noise voltage) input to each of two or more high-current paths 111 and 112 connected to a first device 300 in a CM. Hereinafter, the descriptions of contents that overlap the contents described with reference to FIGS. 1 to 8 will be omitted.

Referring to FIGS. 9 and 10, the active voltage compensation device 100F according to an embodiment of the present disclosure may include a sensing transformer 120F, the amplification unit 130F, an amplified signal feedback unit 150F, and a compensation transformer 160F, and the amplification unit 130F may include the first amplification unit 131F and a second amplification unit 132F. The sensing transformer 120F and the compensation transformer 160F correspond to the description of the sensing transformer 120B and the compensation transformer 160B described with reference to FIG. 3.

The first amplification unit 131F of the active voltage compensation device 100F according to an embodiment may include the first IC unit 1311F and a first non-IC unit. Except for the first IC unit 1311F, the remaining components of the first amplification unit 131F may be included in the first non-IC unit. For example, components included in the first non-IC unit in the first amplification unit 131F may be discrete commercial elements, but are not limited thereto.

The first non-IC unit may be implemented differently according to embodiments. The first non-IC unit may be modified such that the first IC 1311F is applicable to the active voltage compensation device 100 having various designs.

In an embodiment, the first IC unit 1311F may include one or more transistors. In an embodiment, the transistor may be provided as a metal oxide silicon field effect transistor (MOSFET). For example, the first amplification unit 131F may have a differential amplification unit structure including MOSFETs constituting a differential pair.

The first IC unit 1311F may be implemented as an IC in one chip. According to an embodiment, one or more MOSFETs of the first IC unit 1311F may be integrated into one IC chip. The first IC unit 1311F may be implemented as one chip IC together with a second IC unit 1321F of the second amplification unit 132F which will be described below.

The first IC unit 1311F implemented as the IC in the one chip may include a terminal A corresponding to gates $M_1$ and $M_5$, a terminal B corresponding to gates $M_2$ and $M_6$, a terminal D1 corresponding to a source $M_{19}$, and a terminal D2 corresponding to a drain $M_{20}$. However, the present disclosure is not limited thereto, and the configuration of the first IC unit 1311F of the one IC chip may further include other terminals in addition to the terminals A, B, D1, and D2. For example, the first IC unit 1311F may further include a terminal connected to an external power supply (for example, a third device) or a terminal corresponding to a reference potential.

The terminal A corresponding to the gates $M_1$ and $M_5$ may be connected to a secondary side of the sensing transformer 120F and may serve as an input terminal of the first amplification unit 131F. The terminal B corresponding to the gates $M_2$ and $M_6$ may be connected to the amplified signal feedback unit 150F. The terminal D1 corresponding to the source $M_{19}$ and the terminal D2 corresponding to the drain $M_{20}$ may be connected to the second amplification unit and may serve as an output terminal of the first amplification unit 131F.

In various embodiments, at least one of the terminals A, B, D1, and D2 of the first IC unit 1311F may be connected to a non-IC unit. The first IC unit 1311F may be coupled to the first non-IC unit to function as the first amplification unit 131F according to an embodiment.

As such, in the active voltage compensation device 100F according to an embodiment, the first amplification unit 131F may be provided as the one chip IC to minimize a size, and when the first amplification unit 131F is constituted, optimal performance may be achieved without the use of expensive discrete commercial elements.

Meanwhile, the second amplification unit 132F of the active voltage compensation device 100F according to an embodiment may include the second IC unit 1321F and a second non-IC unit. Except for the second IC unit 1321F, the remaining components of the second amplification unit 132F may be included in the second non-IC unit. For example, components included in the second non-IC unit in the second amplification unit 132F may be discrete commercial devices, but are not limited thereto. The second non-IC unit may be implemented differently according to embodiments. The second non-IC unit may be modified such that the second IC 1321F is applicable to the active voltage compensation device 100 having various designs.

In an embodiment, the second IC unit 1321F may include a first transistor 11, a second transistor 12, a diode 13, and/or one or more resistors. In an embodiment, the first transistor 11 may be an npn BJT, and the second transistor 12 may be a pnp BJT. For example, the second amplification unit 132F may have a push-pull amplification unit structure including an npn BJT and a pnp BJT.

For example, the one or more resistors included in the second IC unit 1321F may include resistors $R_{npn}$, $R_{pnp}$, and/or $R_e$. For example, the $R_e$sistor $R_{npn}$ may connect a collector terminal and a base terminal of the first transistor 11, the resistor $R_{pnp}$ may connect a collector terminal and a base terminal of the second transistor 12, and the resistance $R_e$ may connect an emitter terminal of the first transistor 11 and an emitter terminal of the second transistor 12.

In an embodiment, the second IC unit 1321F of the second amplification unit 132F may further include a diode 13 in addition to the first transistor 11, the second transistor 12, and the one or more resistors. For example, one end of the diode 13 may be connected to the base terminal of the first transistor 11, and the other end of the diode 13 may be connected to the base terminal of the second transistor 12. In an alternative embodiment, the diode 13 may be replaced with a resistor.

In an embodiment, the $R_e$sistors $R_{npn}$, $R_{pnp}$, and $R_e$, and/or the biasing diode 13 included in the second IC unit 1321F may be used for DC bias of a BJT. The above-described components may be general-purpose components in various active voltage compensation devices and thus may be integrated into an IC unit 500 of one chip.

Except for the second IC unit 1321F, components of the second amplification unit 132F may be included in the non-IC unit. The second IC unit 1321F may be physically implemented in one IC chip. The second non-IC unit may include discrete commercial elements. The non-IC unit may be implemented differently according to embodiments.

In the embodiment shown in FIG. 9, the second non-IC unit may include, for example, capacitors $C_b$, $C_e$, and $C_{dc}$. The capacitors $C_b$ and $C_e$ included in the second amplification unit 132F may selectively couple only alternating current (AC) signals. The capacitors $C_b$ and $C_e$ may block a DC voltage at base nodes and emitter nodes of the first and second transistors 11 and 12.

In an embodiment, a third device 400 supplies a DC voltage $V_{dc}$ based on referential potential 2 to drive the amplification unit 130F. The capacitor $C_{dc}$ may be a DC decoupling capacitor for the voltage $V_{dc}$ and may be connected in parallel between the third device 400 and referential potential 2. The capacitor $C_{dc}$ may selectively couple only AC signals between both collectors of the first transistor 11 (for example, the npn BJT) and the second transistor 12 (for example, the pnp BJT).

In the second IC unit 1321F, the resistors $R_{npn}$, $R_{pnp}$, and $R_e$ may adjust operating points of the first and second transistors 11 and 12 (for example, the BJTs). The resistors $R_{npn}$, $R_{pnp}$, and $R_e$ may be designed according to the operating point of the BJT. The resistor $R_{npn}$ may connect a terminal of the third device 400, which is the collector terminal of the first transistor 11 (for example, the npn BJT), and the base terminal of the first transistor 11 (for example, the npn BJT). The resistor $R_{pnp}$ may connect referential potential 2, which is the collector terminal of the second transistor 12 (for example, the pnp BJT), and the base terminal of the second transistor 12 (for example, the pnp BJT). The resistor $R_e$ may connect the emitter terminal of the first transistor 11 and the emitter terminal of the second transistor 12.

An output side of the first amplification unit 131F according to an embodiment may be connected to a base side of the first and second transistors 11 and 12. A primary side 161F of the compensation transformer 160F according to an embodiment may be connected to an emitter side of the first and second transistors 11 and 12. Here, connection includes indirect connection. The second amplification unit 132F according to an embodiment may have a regression structure that injects an output current back into bases of the first and second transistors 11 and 12. Due to the regression structure, the second amplification unit 132F may stably obtain a certain current gain for operating the active voltage compensation device 100F.

In the case of a positive swing in which an input voltage of the second amplification unit 132F is greater than 0 due to a noise signal, the first transistor 11 (for example, the npn BJT) may operate. In this case, an operating current may flow through a first path passing through the first transistor 11. In the case of a negative swing in which the input voltage of the second amplification unit 132F is less than 0 due to noise, the second transistor 12 (for example, the pnp BJT) may operate. In this case, an operating current may flow through a second path passing through the second transistor 12.

The second IC unit 1321F may be implemented as an IC in one chip. According to an embodiment, the first transistor 11, the second transistor 12, the diode 13, and the resistors $R_{npn}$, $R_{pnp}$, and $R_e$ of the second IC unit 1321F may be integrated into one chip.

One chip IC of the second IC unit 1321F may include a terminal b1 corresponding to the base of the first transistor 11, a terminal c1 corresponding to the collector of the first transistor 11, a terminal c1 corresponding to the collector of the first transistor 11, a terminal e1 corresponding to an emitter of the first transistor 11, a terminal b2 corresponding to the base of the second transistor 12, a terminal c1 corresponding to the collector of the second transistor 12, and a terminal e2 corresponding to an emitter of the second transistor 12. However, the present disclosure is not limited thereto, and the one IC chip of the IC unit 1321F may further include other terminals in addition to the terminals b1, b2, c1, c2, e1, and e2.

In various embodiments, at least one of the terminals b1, b2, c1, c2, e1, and e2 of the second IC unit 1321F may be connected to the non-IC unit. The second IC unit 1321F and the second non-IC unit may be coupled to each other to function as the second amplification unit 132F according to an embodiment.

According to the embodiment shown in FIG. 9, the capacitors $C_b$ of the second non-IC unit may be connected to the base terminal b1 of the first transistor 11 and the base terminal b2 of the second transistor 12. The capacitors $C_e$ of the second non-IC unit may be connected to the emitter terminal e1 of the first transistor 11 and the emitter terminal e2 of the second transistor 12, respectively. The third device 400 may be connected between the collector terminal c1 of the first transistor 11 and the collector terminal c2 of the second transistor 12. The collector terminal c2 of the second transistor 12 may correspond to referential potential 2. The decoupling capacitor $C_{dc}$ of the second non-IC unit may be connected between the collector terminal c1 of the first transistor 11 and the collector terminal c2 of the second transistor 12.

A combination of the second IC unit 1321F and the capacitors $C_b$, $C_e$, and $C_{dc}$ of the second non-IC unit may function as the second amplification unit 132F according to the embodiment shown in FIG. 9.

In the active voltage compensation device 100F, the second amplification unit 132F may be provided as one chip IC, thereby minimizing a size and considerably reducing manufacturing costs.

Referring to FIGS. 9 and 8 together, the first IC unit 1311F and the second IC unit 1321F may be implemented as one chip IC and may constitute an IC unit 500F. The first IC unit 1311F, the second IC unit 1321F, a first non-IC unit 1312F, and a second non-IC unit 1322F may function together as the amplification unit 130F.

According to various embodiments of the present disclosure, essential components of the active voltage compensation device 100F may be integrated into the IC unit 500F of one chip. Therefore, as compared with a case in which an discrete semiconductor device is used, by using the IC unit 500F of one chip, a size of the amplification unit 130F may be minimized.

The non-IC unit may include an inductor, the capacitors (for example, $C_b$, $C_e$, and $C_{dc}$), impedance, and the like. The inductor, capacitor, and impedance of the non-IC unit may be discrete components and may be implemented around the IC unit 500F of one chip.

For example, in the embodiment shown in FIG. 9, capacitance required for the capacitor $C_e$ to couple AC signals may be several $\mu$F or more (for example, 10 $\mu$F). Since such a capacitance value is difficult to implement in one chip IC, the capacitors $C_b$, $C_e$, and $C_{dc}$ may be implemented outside an IC unit, that is, in the non-IC unit.

In addition, in order to achieve design flexibility for various power systems or various first devices 300, an impedance may be implemented outside the IC unit, that is, in the non-IC unit. For example, the amplification unit 130F may include impedance including at least one resistor and/or capacitor in the non-IC unit, and the impedance may be flexibly designed according to a turns ratio of the sensing transformer 120F and the compensation transformer 160F or according to a required target voltage gain. The impedance of the non-IC unit may be adjusted to design various voltage compensation devices that enables the same IC unit 500 to be applied to various power systems.

Meanwhile, the active voltage compensation device 100F according to an embodiment may include the amplified signal feedback unit 150F. The amplified signal feedback unit 150F may have a regression structure that injects a feedback signal corresponding to an output voltage of the second amplification unit 132F into the input terminal of the first amplification unit 131F. Due to the amplified signal feedback unit 150F, the active voltage compensation device 100F may prevent a circuit oscillation phenomenon and may stably maintain an appropriate gain for a noise compensation operation.

The circuit oscillation phenomenon may occur at a point at which a loop gain of a closed circuit is 0 dB and a phase is -180 degrees. In order to avoid the circuit oscillation phenomenon, phase compensation may be performed through the amplified signal feedback unit 150F.

The amplified signal feedback unit 150F according to an embodiment may include one or more resistors and one or more capacitors.

According to the embodiment shown in FIG. 9, the amplified signal feedback unit 150F may include a series and parallel connection structure of resistors $R_1$, $R_2$, $R_c$, and a capacitor $C_c$. The amplified signal feedback unit 150F may adjust a position and a compensation value of a compensation frequency by adjusting parameters of each resistor and capacitor.

A frequency and a phase determined by the resistors $R_1$, $R_2$, and $R_c$ and the capacitor $C_c$ in the amplified signal feedback unit 150F are as shown in Equation 5.

[Equation 5]

$$f_{comp,max} = \frac{1}{2\pi R_c C_c} \sqrt{1 + \frac{R_c}{R_1 + R_2}}$$

$$\angle G_{amp}(f = f_{comp,max}) = -\tan^{-1}\left[\sqrt{\frac{R_c^2}{4(R_1 + R_2)(R_1 + R_2 + R_c)}}\right]$$

$R_1$, $R_2$, $R_c$, and $C_c$ of the amplified signal feedback unit 150F may be flexibly designed according to the turns ratio of the sensing transformer 120F and the compensation transformer 160F or according to the required target voltage gain. In particular, the characteristics of the amplified signal feedback unit 150F should vary according to a maximum rated voltage of the first device 300 as well as a size of the sensing transformer 120F. Therefore, in order to make a ratio of an injection voltage to a sensing noise voltage uniform in a wide frequency range, an appropriate design of the amplified signal feedback unit 150F is required.

For example, in the embodiment shown in FIG. 9, a ratio of $R_1$, $R_2$, $R_c$, and $C_c$ of the amplified signal feedback unit 150F and the turns ratio of the sensing transformer 120F and the compensation transformer 160F may be adjusted to design the ratio of the injection voltage to the sensing noise voltage to be 1 in a wide frequency range. However, the present disclosure is not limited to the embodiment shown in FIG. 9, and for circuit stability, the amplified signal feedback unit 150F may be designed differently according to a size of a CM choke and peripheral elements.

Meanwhile, when the IC unit 500F of the amplification unit 130F is provided as one chip IC, in order to achieve design flexibility, the amplified signal feedback unit 150F may be implemented outside the IC unit 500F. That is, the amplified signal feedback unit 150F may be implemented outside the IC unit 500F, thereby securing a degree of freedom of design of the active voltage compensation device 100F. Each of elements of the amplified signal feedback unit 150F may be adjusted, thereby designing various voltage compensation devices that enables the same IC unit 500F to be applied to various power systems.

Since the IC unit 500F according to various embodiments of the present disclosure is designed in consideration of scalability, the IC unit 500F may be used in various types of active voltage compensation devices. The same type of IC unit 500F may be used in various embodiments, and the non-IC unit may be designed differently according to embodiments.

As such, the active voltage compensation device 100F according to various embodiments is characterized by being divided into an IC unit and a non-IC unit.

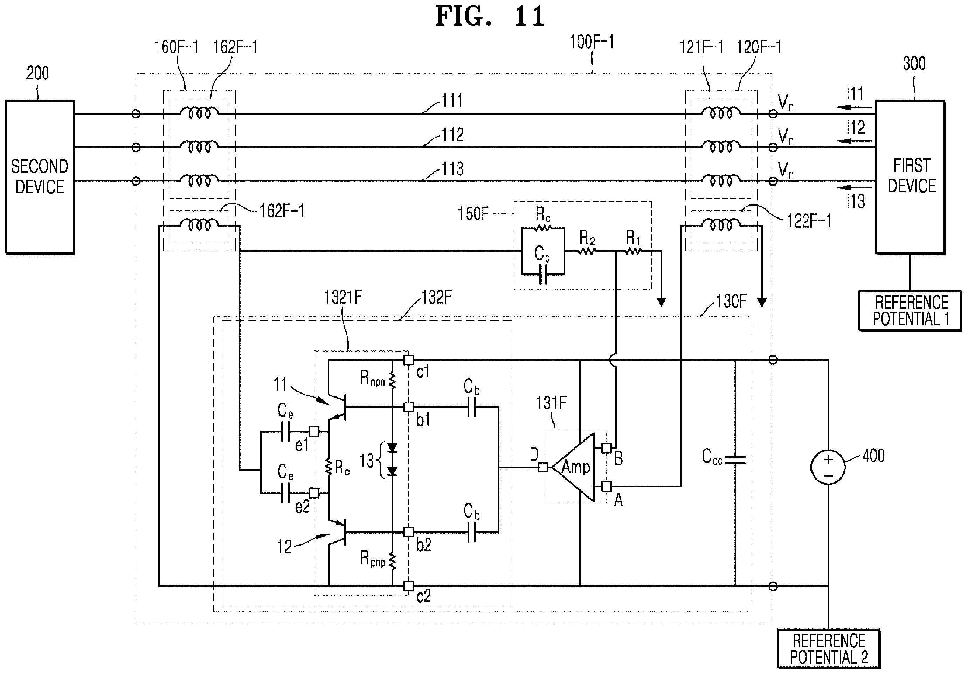

FIG. 11 schematically illustrates a configuration of an active voltage compensation device 100F-1 according to another embodiment of the present disclosure. The active voltage compensation device 100F-1 may actively compensate for a noise voltage $V_n$ input to each of high-current paths 111, 112, and 113 connected to a first device 300 in a CM. Hereinafter, the descriptions of contents that overlap the contents described with reference to FIGS. 1 to 10 will be omitted.

Referring to FIG. 11, the active voltage compensation device 100F-1 may include three high-current paths 111, 112, and 113, a sensing transformer 120F-1, an amplification unit 130F, an amplified signal feedback unit 150F, and a compensation transformer 160F-1, and the amplification unit 130F may include a first amplification unit 131F and a second amplification unit 132F.

In comparison with the active voltage compensation device 100F according to the embodiment described above with reference to FIG. 9, the active voltage compensation device 100F-1 according to the embodiment shown in FIG. 11 includes the three high-current paths 111, 112, and 113 and thus differs from the active voltage compensation device 100F in the sensing transformer 120F-1 and the compensation transformer 160F-1. Therefore, hereinafter, the active voltage compensation device 100F-1 will be described based on the above-described difference.

The active voltage compensation device 100F-1 may include a first high-current path 111, a second high-current path 112, and a third high-current path 113 which are distinguished from each other. According to an embodiment, the first high-current path 111 may be an R-phase power line, the second high-current path 112 may be an S-phase power line, and the third high-current path 113 may be a T-phase power line. Noise voltages $V_n$ and first currents I11, I12, and I13 may be input to the first high-current path 111, the second high-current path 112, and the third high-current path 113 in a CM, respectively.

A primary side 121F-1 of the sensing transformer 120F-1 may be disposed on each of the first, second, and third high-current paths 111, 112, and 113, and thus may generate an induced voltage on a secondary side 122F-1. Magnetic flux densities generated in the sensing transformer 120F-1 by the first currents I11, I12, and I13 in the three high-current paths 111, 112, and 113 may reinforce each other.

Meanwhile, in the active voltage compensation device 100F-1, the amplification unit 130F and the amplified signal feedback unit 150F correspond to the amplification unit 130F and the amplified signal feedback unit 150F described above with reference to FIG. 9.

In an embodiment, a wire of the secondary side 122F-1 of the sensing transformer 120F-1 may be differentially connected to the first amplification unit 131F-1. A voltage $V_{sen}$ induced on the secondary side 122F-1 of the sensing transformer 120F-1 becomes an input voltage of the first amplification unit 131F. The first amplification unit 131F may output an voltage $V_1$ based on the input voltage. The second amplification unit 132F may output an amplified current $I_1$ while maintaining the amplified voltage $V_1$.

The amplified voltage $V_1$ may become an input voltage of the compensation transformer 160F-1, that is, a voltage of a primary side 161F-1 of the compensation transformer 160F-1.

Meanwhile, a secondary side 162F-1 of the compensation transformer 160F-1 may be disposed on each of the first high-current path 111, the second high-current path 112, and the third high-current path 113. Based on the voltage $V_1$ of the primary side 161F-1 output from the second amplification unit 132F-1, the compensation transformer 160F-1 may respectively generate compensation voltages $V_{inj}$ on the three high-current paths 111, 112, and 113, which correspond to the secondary side 162F-1, in series.

The active voltage compensation device 100F-1 according to the embodiment may perform voltage compensation for CM noise on a power line of a three-phase three-wire power system.

Of course, according to the technical idea of the present disclosure, an active voltage compensation device according to various embodiments may be modified to be applicable to a three-phase four-wire system.

The amplification unit 130F according to an embodiment of the present disclosure may also be applied to a single-phase (two-wire) system shown in FIG. 9, a three-phase three-wire system shown in FIG. 10, and a three-phase four-wire system (not shown). Since an IC unit 500F of one chip may be applied to a plurality of systems, the IC unit 500F may be have versatility in the active voltage compensation device according to various embodiments.

As described above, by using an amplification unit divided into an IC unit and a non-IC unit in various embodiments of the present disclosure, various types of active voltage compensation devices may be mass-produced through mass production of the IC unit. The IC unit may be universally and generally applied to a device including the active voltage compensation device according to various embodiments. In addition, due to the IC unit of one chip, a function of the active voltage compensation device may be expanded without the need for additional components.

The active voltage compensation device according to various embodiments has a slight increase in size and heat generation in high-power systems as compared with passive EMI filters. The active voltage compensation device according to various embodiments includes the IC unit of one chip, and thus a size is minimized as compared with a case in which the active voltage compensation device includes a discrete semiconductor device.

The IC unit and the active voltage compensation device including the same according to various embodiments may be used in various power electronic products irrespective of power rating. The IC unit and the active voltage compensation device including the same according to various embodiments may be expanded to high-power and high-noise systems.

The IC unit according to various embodiments may be sufficiently robust even against a transient voltage of a high-current path on which the active voltage compensation device is installed.

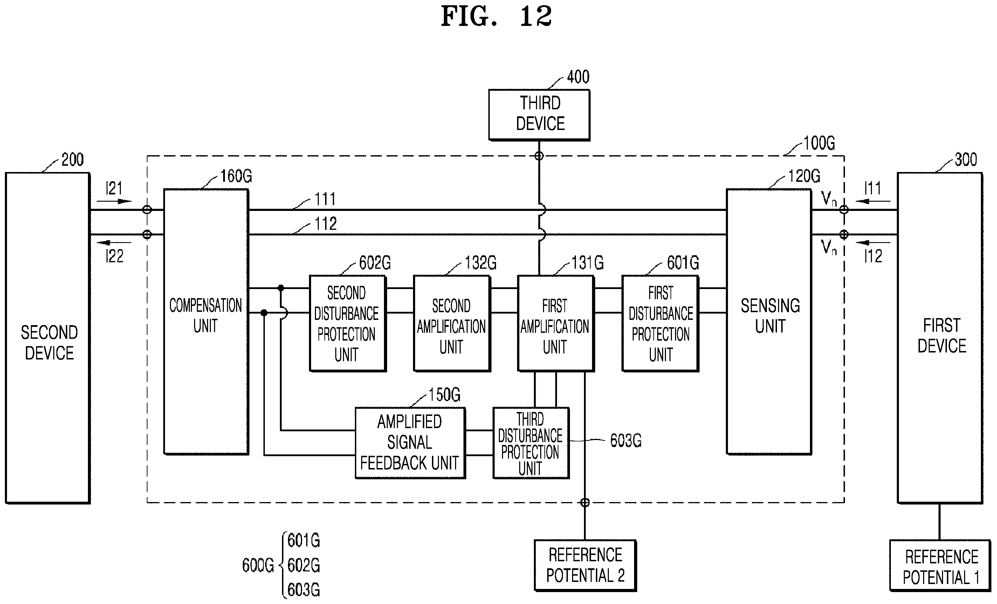

FIG. 12 schematically illustrates a configuration of a system including an active voltage compensation device 100G according to another embodiment of the present disclosure.

The active voltage compensation device 100G may actively compensate for a voltage $V_n$ (for example, a noise voltage) input to each of two or more high-current paths 111 and 112 connected to a first device 300 in a CM. Hereinafter, the descriptions of contents that overlap the contents described with reference to FIGS. 1 to 10 will be omitted.

Referring to FIG. 12, the active voltage compensation device may include a sensing unit 120G, an amplification unit 130G, an amplified signal feedback unit 150G, a compensation unit 160G, and a disturbance protection unit 600G, and the amplification unit 130G may include a first amplification unit 131G and a second amplification unit 132G.

In comparison with the active voltage compensation device 100A according to the embodiment described with reference to FIG. 2, the active voltage compensation device 100G according to the embodiment shown in FIG. 12 may further include the disturbance protection unit 600G connected to an input terminal or an output terminal of the first amplification unit 131G and the second amplification unit 132G. Therefore, hereinafter, the active voltage compensation device 100G will be described based on the above-described difference.

The disturbance protection unit 600G may protect the first amplification unit 131G or the second amplification unit 132G from a disturbance. For example, active elements included in the first amplification unit 131G and the second amplification unit 132G may be protected by the disturbance protection unit 600G.

The active voltage compensation device 100G may be mounted on an electronic device, but generally, an operating situation of the electrical device may not be stable. That is, a disturbance signal such as an overvoltage or an overcurrent may enter the active voltage compensation device 100G from the outside through the high-current paths 111 and 112. For example, a pulse voltage of several kV may be generated in at least one of the high-current paths 111 and 112 due to lightning or a lightning surge. The overvoltage/overcurrent as described above may be transmitted to the first amplification unit 131G or the second amplification unit 132G through the sensing unit 120G, the compensation unit 160G, or the amplified signal feedback unit 150G. The first amplification unit 131G or the second amplification unit 132G may include various types of active elements to be vulnerable to external disturbances and may malfunction or fail due to an overvoltage/overcurrent.

An active voltage compensation device 100 according to various embodiments of the present disclosure may have a structure in which a first amplification unit 131 or a second amplification unit 132 is insulated from the high-current paths 111 and 112, thereby primarily protecting the first amplification unit 131 or the second amplification unit 132 from the above-described disturbance. Through an insulating structure of the active voltage compensation device 100, active elements may be prevented from being directly exposed to a high voltage.

For more reliable protection from a disturbance, the active voltage compensation device 100G may include the disturbance protection unit 600G.

In an embodiment, when a voltage that is higher than or equal to a certain threshold voltage is applied to at least one of the input terminal of the first amplification unit 131G at which the sensing unit 120G and the first amplification unit 131G are connected, the output terminal of the second amplification unit 132G at which the second amplification unit 132G and the compensation unit 160G are connected, and an output terminal of the amplified signal feedback unit 150G at which the amplified signal feedback unit 150G and the first amplification unit 131G are connected, the disturbance protection unit 600G may limit the applied voltage to a voltage that is lower than or equal to the threshold voltage.

For example, the disturbance protection unit 600G may include a first disturbance protection unit 601G for blocking an overvoltage transmitted to the first amplification unit 131G through the sensing unit 120G, a second disturbance protection unit 602G for blocking an overvoltage transmitted to the second amplification unit 132G through the compensation unit 160G, and a third disturbance protection unit 603G for blocking an overvoltage transmitted to the first amplification unit 131G through the amplified signal feedback unit 150G.

The first disturbance protection unit 601G may be connected to the input terminal of the first amplification unit 131G. According to an embodiment, the first disturbance protection unit 601G may be connected in parallel to an output terminal of the sensing unit 120G.

The second disturbance protection unit 602G may be connected to the output terminal of the second amplification unit 132G. The second disturbance protection unit 602G may be connected in parallel to an input terminal of the compensation unit 160G.

The third disturbance protection unit 603G may be connected to the output terminal of the amplified signal feedback unit 150G. The third disturbance protection unit 603G may be connected to a path on which the output terminal of the amplified signal feedback unit 150G and the input terminal of the first amplification unit 131G are connected.

The first disturbance protection unit 601G, the second disturbance protection unit 602G, and the third disturbance protection unit 603G may be insulated from the high-current paths 111 and 112.

According to an embodiment, the first disturbance protection unit 601G may have first impedance when a voltage lower than the certain threshold voltage is applied to the output terminal of the sensing unit 120G and may have second impedance less than the first impedance when a voltage higher than or equal to the certain threshold voltage is applied to the output terminal of the sensing unit 120G. The first impedance may be a very large value, for example, a value close to infinity.

Similarly, the second disturbance protection unit 602G may have first impedance when a voltage lower than the certain threshold voltage is applied to the output terminal of the second amplification unit 132G and may have second impedance less than the first impedance when a voltage higher than or equal to the certain threshold voltage is applied to the output terminal of the second amplification unit 132G. In addition, the third disturbance protection unit 603G may have first impedance when a voltage lower than the certain threshold voltage is applied to the output terminal of the amplified signal feedback unit 150G and may have second impedance less than the first impedance when a voltage higher than or equal to the certain threshold voltage is applied to the output terminal of the amplified signal feedback unit 150G.

According to an embodiment, when a voltage applied to the disturbance protection unit 600G is lower than a specified voltage, a current may be prevented from flowing through the disturbance protection unit 600G, but when the voltage applied to the disturbance protection unit 600G exceeds the specified voltage due to an external overvoltage, the disturbance protection unit 600G may allow a current to flow (in parallel) therethrough to prevent an overvoltage from being transmitted to the first amplification unit 131G or the second amplification unit 132G, thereby protecting the first amplification unit 131G or the second amplification unit 132G.

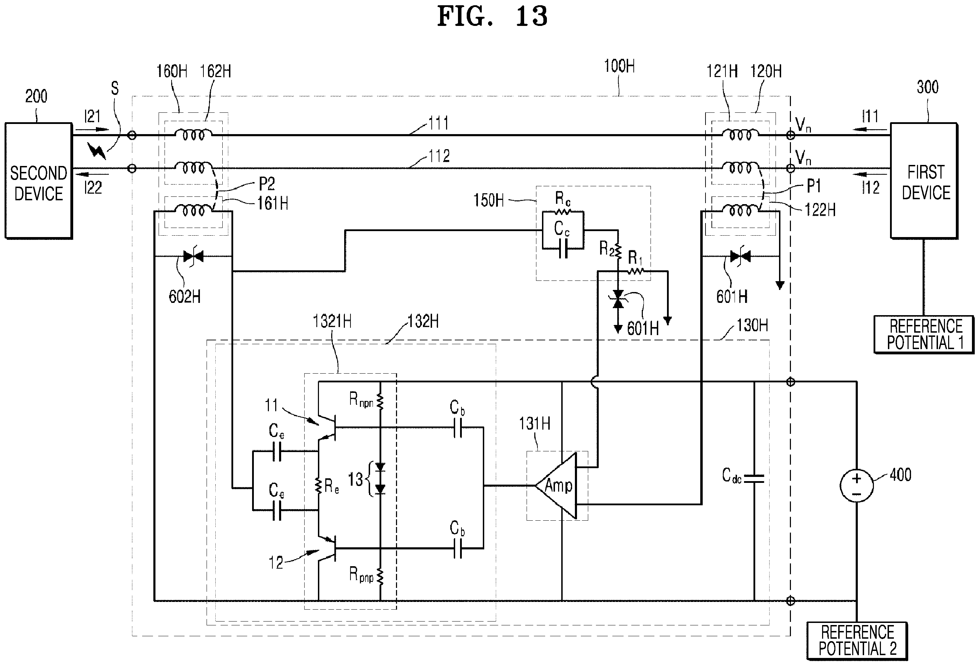

FIG. 13 schematically illustrates an active voltage compensation device 100H according to an embodiment of the present disclosure as a specific example of the active voltage compensation device 100G shown in FIG. 12.

The active voltage compensation device 100H may actively compensate for a voltage $V_n$ (for example, a noise voltage) input to each of two or more high-current paths 111 and 112 connected to a first device 300 in a CM. Hereinafter, the descriptions of contents that overlap the contents described with reference to FIGS. 1 to 12 will be omitted.

Referring to FIG. 13, the active voltage compensation device 100H may include a sensing transformer 120H, an amplification unit 130H, an amplified signal feedback unit 150H, a compensation transformer 160H, and a disturbance protection unit 600H. The amplification unit 130H may include a first amplification unit 131H and a second amplification unit 132H, and the disturbance protection unit 600H may include a first disturbance protection element 601H, a second disturbance protection element 602H, and a third disturbance protection element 603H.

The sensing transformer 120H and the compensation transformer 160H correspond to the description of the sensing transformer 120B and the compensation transformer 160B described with reference to FIG. 3, and the first amplification unit 131H, the second amplification unit 132H, and the amplified signal feedback unit 150H correspond to the description of the first amplification unit 131F, the second amplification unit 132F, and the amplified signal feedback unit 150F described with reference to FIG. 9.

The first disturbance protection element 601H, the second disturbance protection element 602H, and the third disturbance protection element 603H are an example of the above-described first disturbance protection unit 601G, second disturbance protection unit 602G, and third disturbance protection element 603H.

The first disturbance protection element 601H, the second disturbance protection element 602H, and the third disturbance protection element 603H may each include a transient voltage suppression (TSV) diode element. However, the present disclosure is not limited thereto.

For example, an external overvoltage S such as a lightning surge may be generated on at least one of the high-current paths 111 and 112. For example, when the external overvoltage S is generated on a second high-current path 112 as shown in FIG. 12, the external overvoltage S may be transmitted to the first amplification unit 131H or the second amplification unit 132H in the form of magnetic energy through a first transmission path P1 or a second transmission path P2. The first transmission path P1 represents a path through the sensing transformer 120H, and the second transmission path P2 represents a path through the compensation transformer 160H. Since active elements of the first amplification unit 131H or the second amplification unit 132H are vulnerable to an external disturbance, a protection device is required.

The first disturbance protection element 601H may be connected in parallel to a secondary side 122H of the sensing transformer 120H to protect the first amplification unit 131H from an overvoltage transmitted through the first transmission path P1. The second disturbance protection element 602H may be connected in parallel to a primary side 161H of the compensation transformer 160H to protect the second amplification unit 132H from an overvoltage transmitted through the second transmission path P2. The third disturbance protection element 603H may be connected to an output terminal of the amplified signal feedback unit 150H to protect the first amplification unit 131H from an overvoltage transmitted through the amplified signal feedback unit 150H. The first disturbance protection element 601H, the second disturbance protection element 602H, and the third disturbance protection element 603H may be insulated from the high-current paths 111 and 112.

The first, second, and third disturbance protection elements 601H, 602H, and 603H may include, for example, TVS diode elements. In this case, in order to minimize a reduction in performance of the first amplification unit 131H or the second amplification unit 132H due to the TVS diode element, a TVS diode element having a sufficiently low junction capacitance may be used. That is, a junction capacitance of TVS diodes for the first, second, and third disturbance protection elements 601H, 602H, and 603H may be less than a specified value. For example, the junction capacitance of the TVS diode may be several hundred picofarads (pF) or less. In addition, even when the TVS diodes for the first, second, and third disturbance protection elements 601H, 602H, and 603H have a low junction capacitance, the durability thereof may be secured due to an insulating structure.

The first, second, and third disturbance protection elements 601H, 602H, and 603H (for example, the TVS diodes) may have a breakdown voltage. For example, when a voltage applied to the first disturbance protection element 601H is lower than the breakdown voltage, a current may not flow through the first disturbance protection element 601H. However, when a voltage higher than or equal to the breakdown voltage is applied to both ends of the first disturbance protection element 601H due to the external overvoltage S, while impedance of the first disturbance protection element 601H decreases, a current may flow through the first disturbance protection element 601H. The second disturbance protection element 602H and the third disturbance protection element 603H may operate similarly to the first disturbance protection element 601H. Accordingly, the active elements included in the first amplification unit 131H or the second amplification unit 132H may be protected from an overvoltage.

When a voltage higher than or equal to a certain threshold voltage (for example, a breakdown voltage) is applied to at least one of an input terminal of the first amplification unit 131H and an output terminal of the second amplification unit 132H, the first, second, and third disturbance protection elements 601H, 602H, and 603H may consume at least a portion of power generated by the voltage higher than or equal to the certain threshold voltage. At least a portion of the remaining power generated by the voltage higher than or equal to the certain threshold voltage may be consumed by the remaining elements (for example, elements included in the first amplification unit 131H, the second amplification unit 132H, or the amplified signal feedback unit 150H).

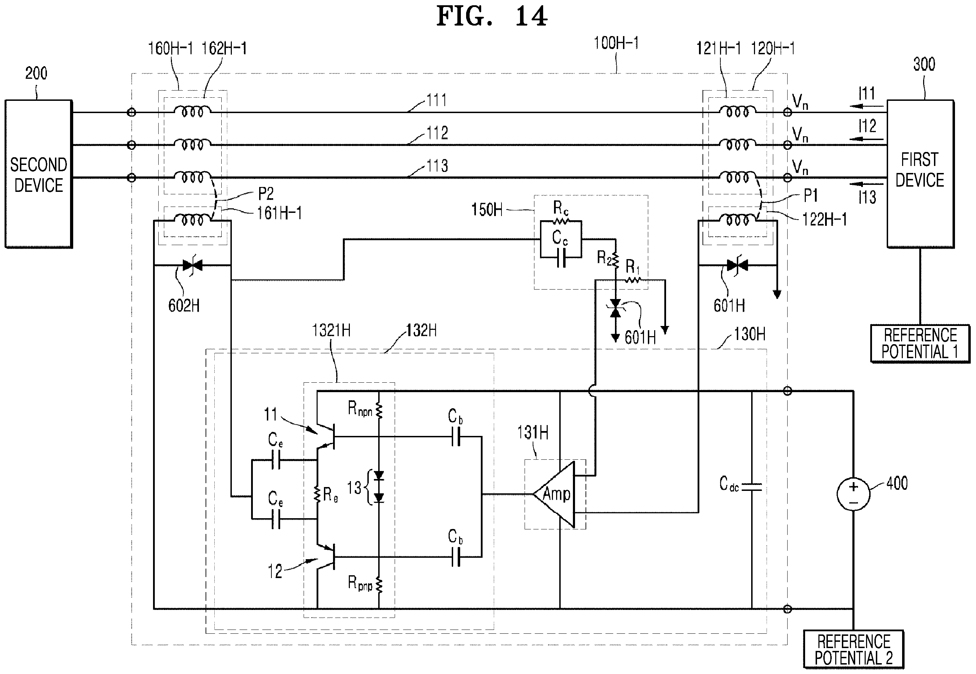

FIG. 14 is a schematic view illustrating a configuration of an active voltage compensation device 100H-1 according to another embodiment of the present disclosure. The active voltage compensation device 100H-1 may actively compensate for a voltage $V_n$ (for example, a noise voltage) input to each of high-current paths 111, 112, and 113 connected to a first device 300 in a CM. Hereinafter, the descriptions of contents that overlap the contents described with reference to FIGS. 1 to 13 will be omitted.

Referring to FIG. 14, the active voltage compensation device 100H-1 may include three high-current paths 111, 112, and 113, a sensing transformer 120H-1, an amplification unit 130H an amplified signal feedback unit 150H, a compensation transformer 160H-1, and a disturbance protection unit 600H, and the amplification unit 130H may include a first amplification unit 131H and a second amplification unit 132H. The disturbance protection unit 600H may include a first disturbance protection element 601H, a second disturbance protection element 602H, and a third disturbance protection element 603H.

In comparison with the active voltage compensation device 100H according to the embodiment described above with reference to FIG. 13, the active voltage compensation device 100H-1 according to the embodiment shown in FIG. 14 includes the three high-current paths 111, 112, and 113 and thus differs from the active voltage compensation device 100H in the sensing transformer 120H-1 and the compensation transformer 160H-1. Therefore, hereinafter, the active voltage compensation device 100H-1 will be described based on the above-described difference.

The active voltage compensation device 100H-1 may include a first high-current path 111, a second high-current path 112, and a third high-current path 113 which are distinguished from each other. According to an embodiment, the first high-current path 111 may be an R-phase power line, the second high-current path 112 may be an S-phase power line, and the third high-current path 113 may be a T-phase power line. Noise voltages $V_n$ and first currents I11, I12, and I13 may be input to the first high-current path 111, the second high-current path 112, and the third high-current path 113 in a CM, respectively.

A primary side 121H-1 of the sensing transformer 120H-1 may be disposed on each of the first, second, and third high-current paths 111, 112, and 113, and thus may generate an induced voltage on a secondary side 122H-1. Magnetic flux densities generated in the sensing transformer 120H-1 by the first currents I11, I12, and I13 in the three high-current paths 111, 112, and 113 may reinforce each other.

Meanwhile, in the active voltage compensation device 100H-1, the amplification unit 130H and the amplified signal feedback unit 150H correspond to the amplification unit 130H and the amplified signal feedback unit 150H described above with reference to FIG. 13.

In an embodiment, a wire of the secondary side 122H-1 of the sensing transformer 120H-1 may be differentially connected to the first amplification unit 131H-1. A voltage $V_{sen}$ induced on the secondary side 122H-1 of the sensing transformer 120H-1 becomes an input voltage of the first amplification unit 131H. The first amplification unit 131H may output an amplified voltage $V_1$ based on the input voltage. The second amplification unit 132H may output an amplified current $I_1$ while maintaining the amplified voltage $V_1$.

The amplified voltage $V_1$ may become an input voltage of the compensation transformer 160H-1, that is, a voltage of a primary side 161H-1 of the compensation transformer 160H-1.

Meanwhile, a secondary side 162H-1 of the compensation transformer 160H-1 may be disposed on each of the first high-current path 111, the second high-current path 112, and the third high-current path 113. Based on the voltage $V_1$ of the primary side 161H-1 output from the second amplification unit 132H-1, the compensation transformer 160H-1 may respectively generate compensation voltages $V_{inj}$ on the three high-current paths 111, 112, and 113, which correspond to the secondary side 162F-1, in series.

The active voltage compensation device 100H-1 according to the embodiment may perform voltage compensation for CM noise on a power line of a three-phase three-wire power system, and the amplification unit 130H may be protected from an external disturbance transmitted through a first path P1 or a second path P2 in the three high-current paths 111, 112, and 113.

Of course, according to the technical idea of the present disclosure, an active voltage compensation device according to various embodiments may be modified to be applicable to a three-phase four-wire system.

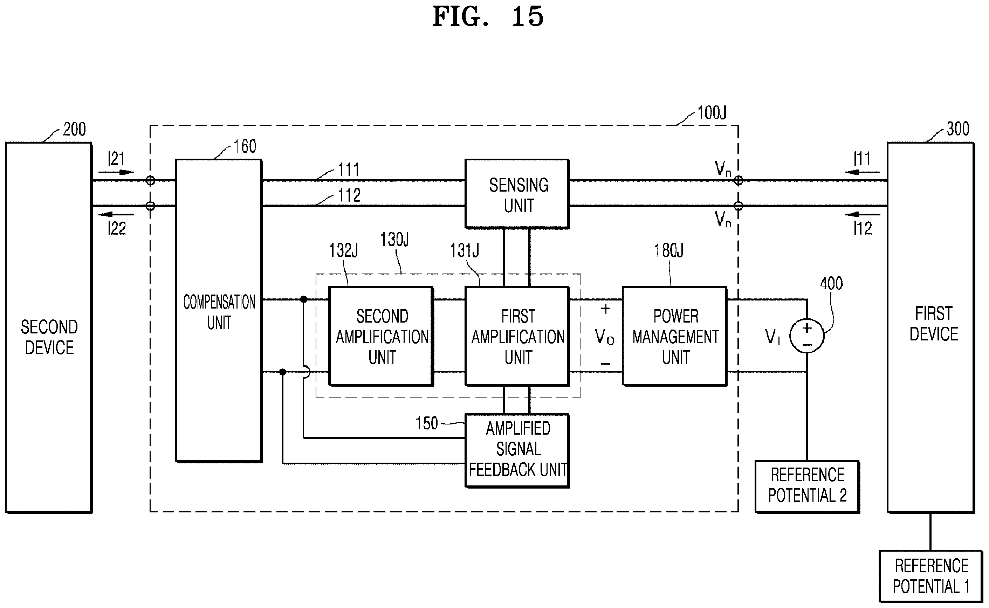

FIG. 15 schematically illustrates a configuration of a system including an active voltage compensation device 100J according to another embodiment of the present disclosure. The active voltage compensation device 100J may actively compensate for a voltage $V_n$ (for example, a noise voltage) input to each of two or more high-current paths 111 and 112 connected to a first device 300 in a CM. Hereinafter, the descriptions of contents that overlap the contents described with reference to FIGS. 1 to 14 will be omitted.

Referring to FIG. 15, the active voltage compensation device 100J may include a sensing unit 120, an amplification unit 130J, an amplified signal feedback unit 150, a compensation unit 160, and a power management unit 180J, and the amplification unit 130J may include a first amplification unit 131J and a second amplification unit 132J.

In comparison with the active voltage compensation device 100A according to the embodiment described with reference to FIG. 2, the active voltage compensation device 100J according to the embodiment shown in FIG. 15 further includes the power management unit 180J between the amplification unit 130J and a third device 400. Therefore, hereinafter, the active voltage compensation device 100J will be described based on the above-described difference.

The amplification unit 130J according to an embodiment of the present disclosure may receive power from the third device 400 which is a power supply that is distinguished from a first device 300 and a second device 200. The amplification unit 130J may receive power from the third device 400 and may amplify an output signal output from the sensing unit 120 to generate an amplified signal.

For example, the third device 400 may be a device that receives power from any one device of the first device 300 and the second device 200 to generate input power for the amplification unit 130J. The third device 400 may be, for example, a switching mode power supply (SMPS) for the first device 300 or the second device 200. The third device 400 may output a DC voltage $V_I$ based on referential potential 2. The output voltage $V_I$ of the third device 400 may be used to drive the amplification unit 130J.

Meanwhile, there may be an optimized DC voltage level required for the amplification unit 130J, but the third device 400 may not output an optimized voltage level required for the amplification unit 130J. Specifically, the output DC voltage $V_I$ of the third device 400 may vary according to a system (for example, the first device 300 or the second device 200). For example, an optimal supply voltage for the amplification unit 130J may be 12 V, and the output voltage $V_I$ of the third device 400 may be vary according to the system to be 15 V, 24 V, or 48 V. Therefore, when the output voltage $V_I$ of the third device 400 is directly supplied to the amplification unit 130J, the output voltage $V_I$ may make the operation of the amplification unit 130J unstable or may cause a malfunction.

Therefore, the active voltage compensation device 100J according to an embodiment of the present disclosure may include the power management unit 180J between the amplification unit 130J and the third device 400. The power management unit 180J may receive the voltage $V_I$ output from the third device 400 to convert the voltage $V_I$ into an output voltage $V_O$. The output voltage $V_O$ of the power management unit 180J may be input to the amplification unit 130J. The voltage $V_I$ may vary according to the system to be 5 V, 24 V, or 48 V, but the output voltage $V_O$ is a fixed value at the optimized voltage level required for the amplification unit 130J.

The power management unit 180J may be a DC-to-DC converter. The power management unit 180J may be a power management IC (PMIC).

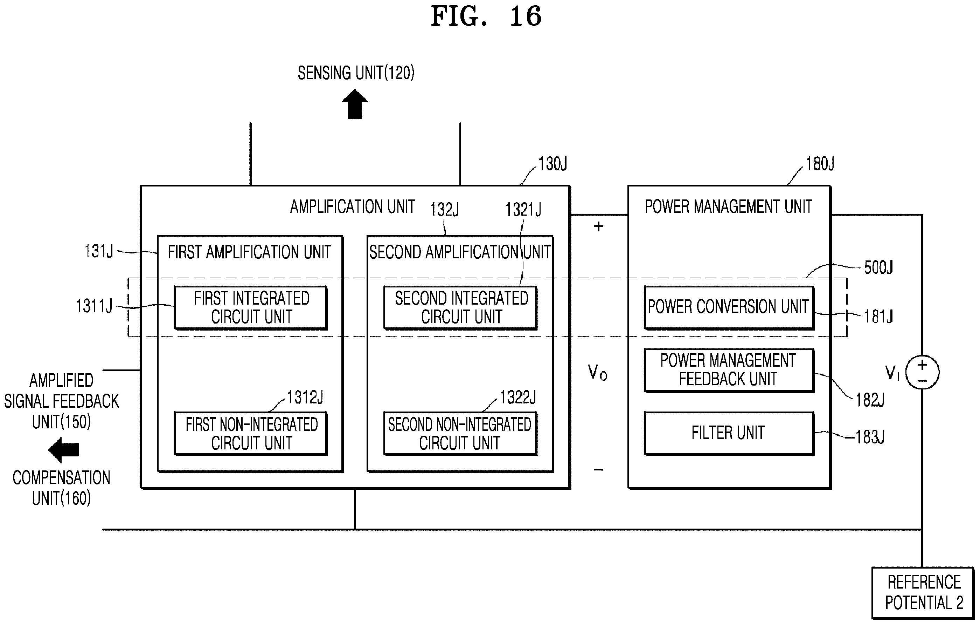

According to an embodiment of the present disclosure, at least a portion of the amplification unit 130J and at least a portion of the power management unit 180J may be integrated into one IC chip. For example, at least a portion of the amplification unit 130J and at least a portion of the power management unit 180J may be embedded in one IC chip, the IC chip may also be commercialized to have versatility as an independent component. The IC chip in which at least a portion of the amplification unit 130J and at least a portion of the power management unit 180J are embedded will be described below in FIG. 16 and below.

FIG. 16 illustrates an example of a functional configuration of the amplification unit 130J and the power management unit 180J of the active voltage compensation device 100J shown in FIG. 15.

Referring to FIG. 16, the amplification unit 130J may include an IC unit and a non-IC unit. The non-IC unit is a component except for the IC unit and includes only passive elements, and the IC unit includes active elements. The IC unit may further include passive elements as well as the active elements.

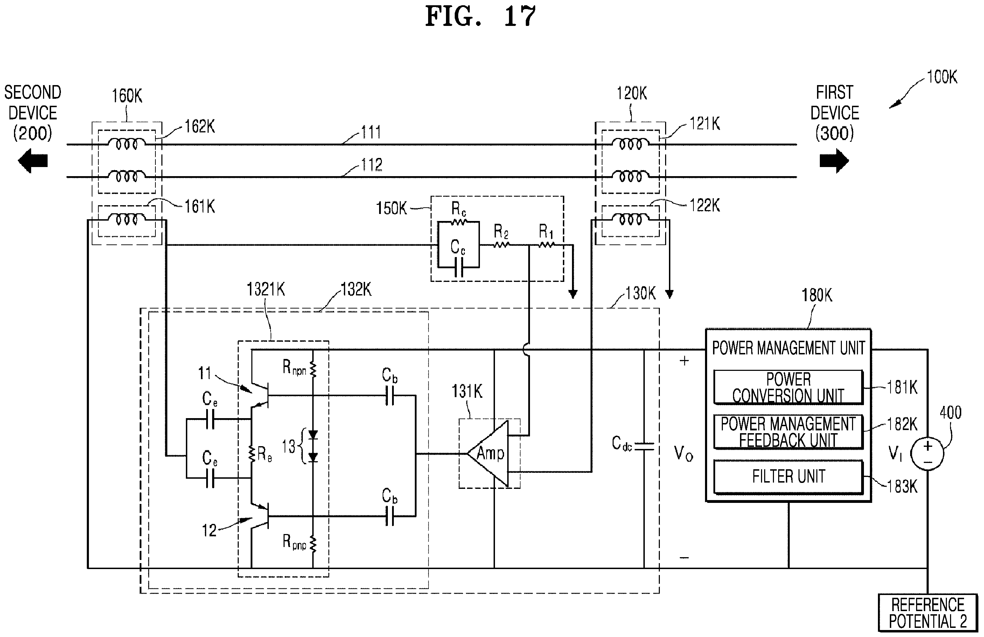

The first amplification unit 131J and the second amplification unit 132J constituting the amplification unit 130J may each include an IC unit and a non-IC unit. That is, the first amplification unit 131J may include a first IC unit 1311J and a first non-IC unit 1312J, and the second amplification unit 132J may include a second IC unit 1321J and a second non-IC unit 1322J. Examples of the detailed configuration of the amplification unit 130J including the IC unit and the non-IC unit will be described below with reference to FIG. 17.

The amplification unit 130J may receive power from the third device 400 through the power management unit 180J. The amplification unit 130J may receive the output voltage $V_O$ of the power management unit 180J to amplify an output signal output by the sensing unit 120 and generate an amplified signal. The amplified signal may be input to the compensation unit 160 or the amplified signal feedback unit 150.

The first IC unit 1311J and the second IC unit 1321J of the amplification unit 130J may include active elements. The first IC unit 1311J and the second IC unit 1321J may be connected to the third device 400, which is a power supply, to drive the active elements. The first IC unit 1311J and the second IC unit 1321J may receive power from the third device 400 through the power management unit 180J.

The power management unit 180J may receive any DC voltage $V_I$ from the third device 400 to output a uniform output $V_O$ to the IC unit of the amplification unit 130J. The third device 400, the power management unit 180J, and the amplification unit 130J may all be connected to referential potential 2. Therefore, both the input voltage $V_I$ and the output voltage $V_O$ of the power management unit 180J are voltages based on referential potential 2. Referential potential 2 may be distinguished from reference voltage 1 of the active voltage compensation device 100J.

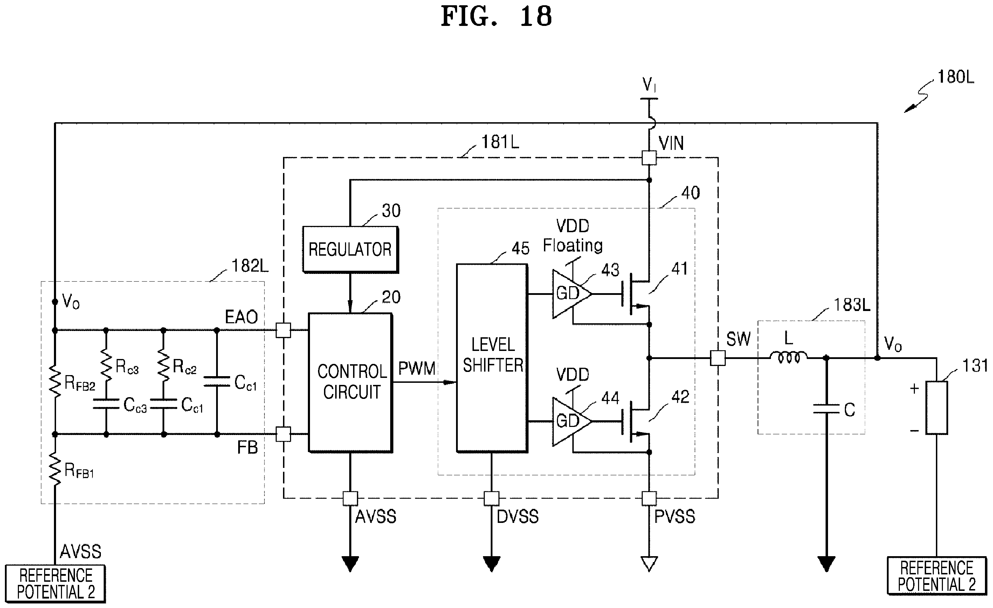

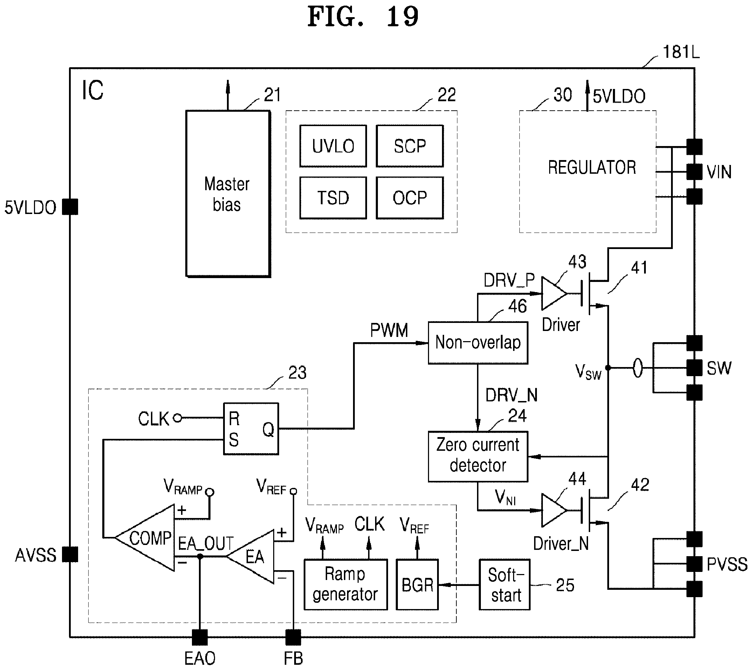

The power management unit 180J may include a power conversion unit 181J, a power management feedback unit 182J, and a filter unit 183J. The power conversion unit 181J may convert any input voltage $V_I$ into the output voltage $V_O$. The power management feedback unit 182J is a feedback control system that may output the same output voltage $V_O$ even at any input voltage $V_I$. The filter unit 183J is a DC voltage/current filter. The filter unit 183J may be positioned at an input or output terminal of the power management unit 180J. Examples of the detailed configuration of the power management unit 180J will be described below with reference to FIGS. 18 and 19.

The power management unit 180J may include active elements. Here, a reference potential of the power management unit 180J may be the same as referential potential 2 which is a reference potential of the amplification unit 130J. The reference potential of the power management unit 180J may be different from referential potential 1 which is a reference potential of the active voltage compensation device 100J.

According to an embodiment, the first IC unit 1311J and the second IC unit 1321J of the amplification unit 130J, and the power conversion unit 181J of the power management unit 180J may be physically integrated into one IC chip 500J. However, this is merely an embodiment, and in other embodiments, at least some elements of the first IC unit 1311J, the second IC unit 1321J, the power conversion unit 181J, and the power management feedback unit 182J may also be physically integrated into one IC chip 500J. In another embodiment, of course, the entire amplification unit 130J and the entire power management unit 180J may be physically integrated into one IC chip 500J.

The IC chip 500J may convert any level of the input voltage $V_I$ into a level of the voltage $V_O$ optimized for the first IC unit 1311J and the second IC unit 1321J, thereby operating the IC unit of the amplification unit 130J. This IC chip 500J may be commercialized to have versatility as an independent component.

FIG. 17 illustrates a more specific example of the embodiment shown in FIG. 17 and schematically illustrates an active voltage compensation device 100K according to an embodiment of the present disclosure. The active voltage compensation device 100K may actively compensate for a noise voltage input to each of two high-current paths 111 and 112 connected to a first device 300 in a CM.

Referring to FIG. 17, the active voltage compensation device 100K may include a sensing unit 120K, an amplification unit 130K, an amplified signal feedback unit 150K, a compensation unit 160K, and a power management unit 180K, and the amplification unit 130K may include a first amplification unit 131K and a second amplification unit 132K.

In an embodiment, the sensing transformer 120K and the compensation transformer 160K of the active voltage compensation device 100K are examples of the sensing unit 120 and the compensation unit 160 of the active voltage compensation device 100J shown in FIG. 15. The description of the sensing transformer 120K and the compensation transformer 160K correspond to the description of the sensing transformer 120B and the compensation transformer 160B described with reference to FIG. 3.

In addition, the amplification unit 130K and the amplified signal feedback unit 150K of the active voltage compensation device 100K are examples of the amplification unit 130J and the amplified signal feedback unit 150 of the active voltage compensation device 100J shown in FIGS. 15 and 16. The description of the amplified signal feedback unit 150K corresponds to the description of the amplified signal feedback unit 150F described with reference to FIG. 9.

The amplification unit 130K of the active voltage compensation device 100K according to an embodiment may include an IC unit and a non-IC unit. The non-IC unit includes only passive elements, and the IC unit includes active elements. The IC unit may further include passive elements as well as the active elements. Except for the IC unit, the remaining components of the amplification unit 130K may be included in the non-IC unit.

The first amplification unit 131K and the second amplification unit 132K of the amplification unit 130K may each include an IC unit and a non-IC unit. The first amplification unit 131K may include a first IC unit 1311K and a first non-IC unit 1312K, and the second amplification unit 132K may include a second IC unit 1321K and a second non-IC unit 1322K.

In embodiments of the present disclosure, the first IC unit 1311K and the second IC unit 1321K are physically implemented in one IC chip together with a power conversion unit 181K of the power management unit 180K which will be described below. Components included in the first non-IC unit and the second non-IC unit may be discrete commercial elements, but are not limited thereto. The non-IC unit of the amplification unit 130K may be implemented differently according to embodiments. The non-IC unit may be modified such that the IC unit of the amplification unit 130K is applicable to an active voltage compensation device 100 having various designs.

In an embodiment, the first IC unit 1311K may include one or more transistors. In an embodiment, the transistor may be provided as a MOSFET. For example, the first amplification unit 131K may have a differential amplification unit structure including MOSFETs constituting a differential pair.

In an embodiment, the second IC unit 1321K may include an npn BJT 11, a pnp BJT 12, a diode 13, and one or more resistors. In an embodiment, one or more resistors included in the second IC unit 1321K may include resistors $R_{npn}$, $R_{pnp}$, and/or $R_e$. In the second IC unit 1321K, the resistor $R_{npn}$ may connect a collector terminal and a base terminal of the npn BJT 11, the resistor $R_{pnp}$ may connect a collector terminal and a base terminal of the pnp BJT 12, and the resistor $R_e$ may connect an emitter terminal of the npn BJT 11 and an emitter terminal of the pnp BJT 12.

In an embodiment, the biasing diode 13 may connect the base terminal of the npn BJT 11 and the base terminal of the pnp BJT 12 in the second IC unit 1321K. That is, one end of the diode 13 may be connected to the base terminal of the npn BJT 11, and the other end of the diode 13 may be connected to the base terminal of the pnp BJT 12. The $R_e$ sistors $R_{npn}$, $R_{pnp}$, and $R_e$, and/or the biasing diode 13 included in the second IC unit 1321K may be used for DC bias of the BJTs 11 and 12. In an embodiment of the present disclosure, the resistors $R_{npn}$, $R_{pnp}$, and $R_e$, and the biasing diode 13 may be general-purpose components in various active voltage compensation devices and thus may be integrated into an IC chip.

In various embodiments of the present disclosure, the first IC unit 1311K and the second IC unit 1321K may be implemented as one IC chip together with the power conversion unit 181K of the power management unit 180K. According to an embodiment, one or more MOSFETs of the first IC unit 1311K may be integrated into an IC chip, and the npn BJT 11, the pnp BJT 12, the diode 13, and the resistors $R_{npn}$, $R_{pnp}$, and $R_e$ may be integrated into an IC chip.

The IC chip may include terminals serving as an input terminal, an output terminal, and a power terminal in the first IC unit 1311K. In addition, the IC chip may include a terminal corresponding to a base of the npn BJT 11, a terminal corresponding to a collector of the npn BJT 11, a terminal corresponding to an emitter of the npn BJT 11, a terminal corresponding to a base of the pnp BJT 12, a terminal corresponding to a collector of the pnp BJT 12, and a terminal corresponding to an emitter of the pnp BJT 12. In addition, the IC chip may further include terminals of the power conversion unit 181K which will be described below with reference to FIG. 16.

In various embodiments, at least one of the terminals of the above-described IC chip may be connected to the non-IC unit. The first IC unit 1311K may be combined to the first non-IC unit to function as the first amplification unit 131K according to an embodiment. The second IC unit 1321K may be coupled to the second non-IC unit to function as the second amplification unit 132K according to an embodiment.

In an embodiment, the non-IC unit may include capacitors $C_b$, $C_e$, and $C_{dc}$, and an impedance. According to an embodiment, the capacitors $C_b$ of the non-IC unit may be connected to base terminals of the second IC unit 1321K, respectively. The capacitors $C_e$ of the non-IC unit may be connected to emitter terminals of the second IC unit 1321K, respectively. Outside the IC chip, the collector terminal of the pnp BJT 12 may be connected to referential potential 2. Outside the IC chip, the capacitor $C_{dc}$ of the non-IC may be connected between both collector terminals.

The capacitors $C_b$ and $C_e$ included in the non-IC unit may block a DC voltage at base nodes and emitter nodes of the BJTs 11 and 12. The capacitors $C_b$ and $C_e$ may selectively couple only AC signals.

The capacitor $C_{dc}$ may be a DC decoupling capacitor for a voltage $V_O$ and may be connected in parallel with respect to an output voltage $V_O$ of the power management unit 180K. The capacitor $C_{dc}$ may selectively couple only AC signals between both collectors of the npn BJT 11 and the pnp BJT 12.

A combination of the first IC unit 1311K, the second IC unit 1321K, and the capacitors $C_b$, $C_e$, and $C_{dc}$ of the non-IC unit may function as the amplification unit 130K.

In an embodiment, the second amplification unit 132K may have a push-pull amplification unit structure including an npn BJT and a pnp BJT and may have a regression structure that injects an output current back into the bases of the BJTs 11 and 12. Due to the regression structure, the second amplification unit 132K may stably obtain a certain current gain for operating the active voltage compensation device 100K.

For example, in the case of a positive swing in which an input voltage of the amplification unit 130K is greater than 0 due to a noise signal, the npn BJT 11 may operate. In this case, an operating current may flow through a first path passing through the npn BJT 11. In the case of a negative swing in which the input voltage of the amplification unit 130K is less than 0 due to noise, the pnp BJT 12 may operate. In this case, an operating current may flow through a second path passing through the pnp BJT 12.

In the second IC unit 1321K, the resistors $R_{npn}$, $R_{pnp}$, and $R_e$ may adjust an operating point of a BJT. The resistors $R_{npn}$, $R_{pnp}$, and $R_e$ may be designed according to the operating point of the BJT.

A capacitance required for the capacitors $C_b$, $C_e$, and $C_{dc}$ to couple AC signals may be several hundred picofarads (pF) or more (for example, 10 μF). Since such a capacitance value is difficult to implement in an IC chip, the capacitors $C_b$, $C_e$, and $C_{dc}$ may be implemented outside the IC chip.

Meanwhile, a voltage gain of the amplification unit 130K may be controlled by resistors $R_1$, $R_2$, and $R_c$, and a capacitor $C_c$ of the amplified signal feedback unit 150K. The resistors $R_1$, $R_2$, and $R_c$, and the capacitor $C_c$ may be flexibly designed according to a required target voltage gain and a turns ratio of the sensing transformer 120K and the compensation transformer 160K. Accordingly, in order to achieve design flexibility for various power systems or various first devices 300, the resistors $R_1$, $R_2$, and $R_c$, and the capacitor $C_c$ may be implemented outside the IC chip (together with the non-IC unit without being integrated into the IC unit).

An inductor and the capacitors (for example, $C_b$, $C_e$, and $C_{dc}$) of the non-IC unit and the resistors $R_1$, $R_2$, $R_c$, and $C_c$ of the amplified signal feedback unit 150K may be discrete components and may be implemented around the IC chip.

The IC unit of the amplification unit 130K may be connected to a third device 400, which is a power supply, to drive active elements. That is, the first IC unit 1311K and the second IC unit 1321K may be driven with power supplied from the third device 400 through the power management unit 180K.

To this end, an output terminal of the power management unit 180K may be connected to a power terminal of the first IC unit 1311K, and thus a DC voltage $V_O$ may be supplied to the first amplification unit 130K. A negative power terminal $V_{EE}$ of the first IC unit 1311K may correspond to referential potential 2, and a positive power terminal $V_{CC}$ may correspond to the output voltage $V_O$ of the power management unit 180K based on referential potential 2.

In addition, the output terminal of the power management unit 180K may supply the DC voltage $V_O$ between the collector terminal of the npn BJT 11 and the collector terminal of the pnp BJT 12 of the second IC unit 1321K. A collector node of the pnp BJT 12 may correspond to referential potential 2, and a collector node of the npn BJT 11 may correspond to the output voltage $V_O$ of the power management unit 180K based on referential potential 2.

The power management unit 180K may include a filter unit 183K, a power management feedback unit 182K, and the power conversion unit 181K which is the other component. According to an embodiment, the first IC unit 1311K and the second IC unit 1321K of the amplification unit 130K and the power conversion unit 181K of the power management unit 180K may be physically embedded in one IC chip. The IC chip may convert any input voltage level into a voltage level optimized for the first IC unit 1311K and the second IC unit 1321K to operate the IC unit of the amplification unit 130K. This IC chip may be commercialized to have versatility as an independent component.

FIG. 18 schematically illustrates a power management unit 180L according to an embodiment of the present disclosure. The power management unit 180L shown in FIG. 18 is a specific example of the power management units 180J and 180K described above with reference to FIGS. 15 to 17, and FIG. 18 illustrates each of components of the power management unit 180L in more detail.

Referring to FIG. 18, the power management unit 180L may include a power conversion unit 181L, a power management feedback unit 182L, and a filter unit 183L.

The power management unit 180L may be a PMIC. In an embodiment, the power management unit 180L may be a voltage drop converter, for example, a buck converter.

Referring to FIGS. 18 and 17 together, an output DC voltage $V_I$ of a third device 400 is input through an input terminal VIN of the power conversion unit 181L. The output DC voltage $V_I$ may vary according to a system to be 15 V, 24 V, or 48 V.

The power conversion unit 181L may convert any input voltage $V_I$ into a set output voltage $V_O$. A value of the output voltage $V_O$ may be set to an optimized voltage level (for example, 12 V) required for a first IC unit 1311K and/or a second IC unit 1321K.

The power conversion unit 181L may include a control circuit 20, a regulator 30, and a switch unit 40. The components of the power conversion unit 181L are embedded in one IC chip together with the first IC unit 1311K and the second IC unit 1321K.

The regulator 30 may generate a DC low voltage, which is for driving an internal circuit (for example, the control circuit 20), from the input voltage $V_I$. For example, the input voltage $V_I$ may have a high voltage range of 12 V or more, but it may be efficient when the internal circuit of the power conversion unit 181L should be driven by a low voltage at a level of 5 V. Therefore, the regulator 30 is a circuit that supplies a DC low voltage (for example, 5 V) for an internal IC of the power conversion unit 181L. The regulator 30 may be referred to as a linear regulator, a pre-regulator, an on-chip supply, a low dropout (LDO) regulator, or the like.

The control circuit 20 is driven by receiving a DC low voltage generated by the regulator 30. The control circuit 20 includes circuits necessary to output a certain output voltage in any input voltage range. The control circuit 20 may generate a pulse width modulation (PWM) signal which is a switching signal necessary to output a certain voltage in any input voltage range. The detailed configuration of the control circuit 20 will be described below with reference to FIG. 19.

The switch unit 40 may generate the certain output voltage $V_O$ by performing a switching operation according to a switching signal (for example, a PWM signal) input from the control circuit 20. The switch unit 40 may include a level shifter 45, a first driver 43, a second driver 44, a first switch 41, and a second switch 42. The first and second switches 41 and 42 may be MOSFETs. The first switch 41 may be a high side MOSFET, and the second switch 42 may be a low side MOSFET. Since an input capacitance of a gate terminal of the MOSFET is high, the first and second drivers 43 and 44 with sufficient power may be disposed in front of the MOSFET.

In various embodiments of the present disclosure, the control circuit 20, the regulator 30, and the switch unit 40 are embedded in one IC chip together with an IC unit of an amplification unit 130K.

The power management feedback unit 182L is connected to the control circuit 20 and is disposed outside the IC chip. The power management feedback unit 182L is a feedback control system that may output the same output voltage $V_O$ even at any input voltage $V_I$. The power management feedback unit 182L may include discrete commercial elements. Therefore, outside the IC chip, necessary compensation circuits may be tuned according to a situation. However, the present disclosure is not limited thereto, and according to embodiments, some elements (for example, resistors) of the power management feedback unit 182L may be embedded in the IC chip together.

The filter unit 183L may be a DC voltage/current filter and may be positioned at an output terminal of the power conversion unit 181L. However, the present disclosure is not limited thereto, and when the power management unit 180L is a boost converter, the filter unit may also be positioned at an input terminal of the power conversion unit 181L. Meanwhile, the filter unit 183L may include discrete commercial elements outside the IC chip.

The power management unit 180L may finally output the output voltage $V_O$ through the power conversion unit 181L, the power management feedback unit 182L, and the filter unit 183L. The final output voltage $V_O$ of the power management unit 180L is input to the IC unit of the amplification unit 130K. The final output voltage $V_O$ may be set to an optimal voltage level for driving the IC unit.

FIG. 19 illustrates a more specific example of the power conversion unit 181L shown in FIG. 18.

Referring to FIGS. 18 and 19 together, the control circuit 20 of the power conversion unit 181L includes a voltage redistribution circuit 21, a protection circuit 22, a PWM circuit 23, a zero current detector 24, and a soft start circuit 25. A regulator 30 of FIG. 19 corresponds to the regulator 30 of FIG. 18.

The regulator 30 may generate a DC low voltage, which is for driving an internal circuit of the power conversion unit 181L, from an input voltage $V_I$. The DC low voltage generated from the regulator 30 may be, for example, at a level of 5 V.

The voltage redistribution circuit 21 may receive the DC low voltage generated by the regulator 30. The voltage redistribution circuit 21 redistributes the DC low voltage input from the regulator 30 into a DC bias voltage suitable for an internal circuit blocks of an IC. For example, the voltage redistribution circuit 21 may redistribute the DC bias voltage to a band gap reference (BGR) block, a ramp generator block, and the like. The voltage redistribution circuit 21 may be referred to as a master bias or the like.

The protection circuit 22 may include one or more protection circuits for various situations. In an embodiment, the protection circuit 22 may include an under voltage lock out (UVLO) circuit. When an output voltage of the regulator 30 drops to a specified voltage or less, the UVLO circuit may forcibly turn off the operation of the power conversion unit 181L to prevent unstable operation.

In an embodiment, the protection circuit 22 may include a short current protection (SCP) circuit. The SCP circuit may protect the power conversion unit 181L from a short circuit current.

In an embodiment, the protection circuit 22 may include an overcurrent protection (OCP) circuit. The OCP circuit may protect the power conversion unit 181L from an overcurrent.

In an embodiment, the protection circuit 22 may include a thermal shutdown (TSD) circuit. The TSD may shut down a circuit for protection when a temperature of an IC exceeds a specified value, for example, due to an overcurrent.

The PWM circuit 23 performs a core function of the control circuit 20. The PWM circuit 23 generates a PWM signal which is a switching signal necessary to output a certain output voltage $V_O$ in any input voltage range. The first switch 41 and the second switch 42 may be selectively turned on or off according to the PWM signal generated by the PWM circuit 23 to generate a voltage signal Vsw. The voltage signal output through one terminal SW of an IC chip may be supplied to an IC unit of an amplification unit as an output DC voltage $V_O$ through a filter unit 183L and a power management feedback unit 182L.

According to an embodiment, the PWM circuit 23 may include a BGR block, a ramp generator block, an error amplification unit EA, a comparator, and an RS latch.

In an embodiment, the BGR block is a voltage bias circuit for outputting a certain voltage $V_{REF}$ even when a temperature or voltage changes. The BGR block may supply the certain voltage $V_{REF}$ to the error amplification unit EA

27

even when a temperature or a voltage changes.

The ramp generator block may generate a ramp signal $V_{RAMP}$ and a clock signal CLK which are necessary to generate a PWM signal.

The error amplification unit EA is an amplification unit required for a feedback circuit. One of input terminals of the error amplification unit EA may be connected to the power management feedback unit 182L through one terminal FB of the IC chip. The power management feedback unit 182L outside the IC chip may be connected to a non-inverting terminal of the error amplification unit EA through the terminal FB of the IC chip.

The comparator may output a digital signal based on a comparison between an output signal EA_OUT of the error amplification unit EA and a ramp potential signal $V_{RAMP}$. Meanwhile, an output terminal of the error amplification unit EA may form one terminal EAO of the IC chip. The power management feedback unit 182L outside the IC chip may be connected to the output terminal of the error amplification unit EA through the terminal EAO. The terminal EAO may correspond to a non-inverting terminal among input terminals of the comparator.

The RS latch may transmit a PWM signal to the switch unit 40 based on the clock signal CLK.

The PWM signal may turn on the first switch 41 and the second switch 42 according to an on or off digital signal. In this case, when the first switch 41 and the second switch 42 are turned on at the same time even for a short period of time, a MOSFET may be damaged due to an overcurrent. Therefore, in order to prevent a situation in which the first and second switches 41 and 42 are turned on at the same time, the switch unit 40 may include a non-overlap circuit 46.

The PWM signal output from the RS latch may be transmitted to the non-overlap circuit 46 of the switch unit 40. The non-overlap circuit 46 may generate a very short time section in which both the first switch 41 and the second switch 42 are turned off. The short time section may be referred to as a dead-time and may be, for example, tens of nanoseconds (nsec). The non-overlap circuit 46 may be referred to as a dead-time generator.

Meanwhile, the first and second switches 41 and 42 may be MOSFETs. The first switch 41 may be a high side MOSFET, and the second switch 42 may be a low side MOSFET. Since an input capacitance of a gate terminal of the MOSFET is high, the first and second drivers 43 and 44 with sufficient power may be disposed in front of the MOSFET.

Meanwhile, the control circuit 20 may further include the zero current detector 24.

When a current of 0 A or a reverse current is generated in the second switch 42 which is the low side MOSFET, the power management unit 180L should operate in a discontinuous current mode (DCM) for efficiency. To this end, when a reverse current is detected in the second switch 42, the zero current detector 24 may block the PWM signal input to the second switch 42.

Meanwhile, the control circuit 20 may further include the soft start circuit 25.

When the power management unit 180L (for example, a converter) is suddenly driven in an off state, a voltage may be momentarily applied to an output capacitor or the like. Thus, an excessive current may be generated, and the MOSFET or the like may fail. In order to prevent the excessive current, the soft start circuit 25 may slowly increase an output voltage or the like even in a situation in which the converter is suddenly driven.

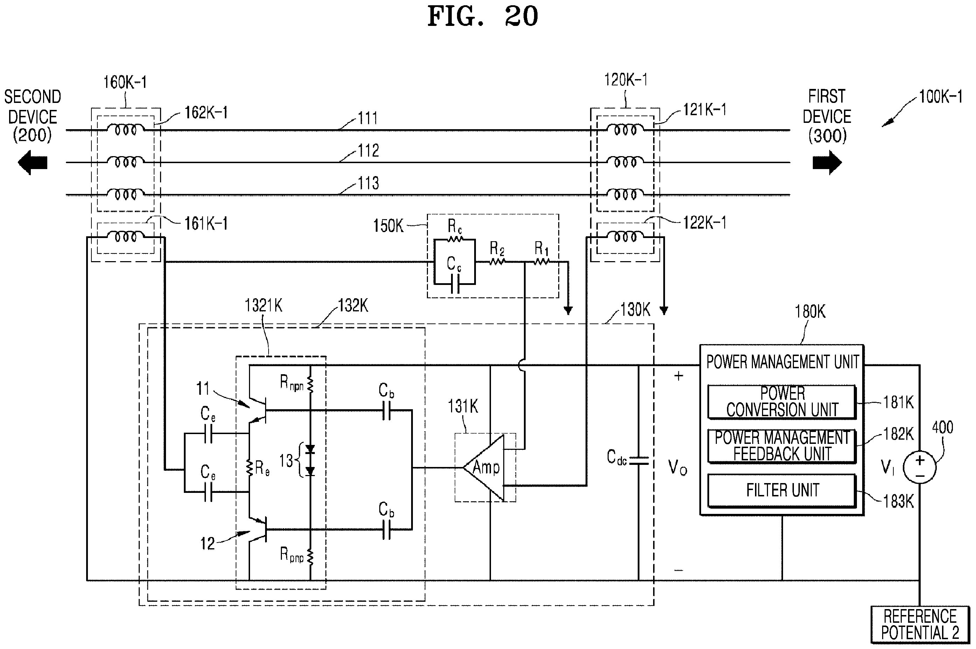

FIG. 20 schematically illustrates a configuration of an active voltage compensation device 100K-1 according to another embodiment of the present disclosure. Hereinafter, the descriptions of contents that overlap the contents described with reference to FIGS. 1 to 19 will be omitted.

Referring to FIG. 20, the active voltage compensation device 100K-1 may actively compensate for a noise voltage input to each of high-current paths 111, 112, and 113 connected to a first device 300 in a CM.

To this end, the active voltage compensation device 100K-1 may include three high-current paths 111, 112, and 113, a sensing transformer 120K-1, an amplification unit 130K, an amplified signal feedback unit 150K, a compensation transformer 160-1, and a power management unit 180K, and the amplification unit 130K may include a first amplification unit 131K and a second amplification unit 132K.

In comparison with the active voltage compensation device 100K (see FIG. 15) according to the above-described embodiment, the active voltage compensation device 100K-1 according to the embodiment shown in FIG. 20 includes the three high-current paths 111, 112, and 113 and thus differs from the active voltage compensation device 100K in a primary side 121K-1 of the sensing transformer 120K-1 and a secondary side 162K-1 of the compensation transformer 160K-1. Hereinafter, the active voltage compensation device 100L-1 will be described based on the above-described difference.

The active voltage compensation device 100K-1 may include a first high-current path 111, a second high-current path 112, and a third high-current path 113 which are distinguished from each other. According to an embodiment, the first high-current path 111 may be an R-phase power line, the second high-current path 112 may be an S-phase power line, and the third high-current path 113 may be a T-phase power line. Noise voltages $V_n$ and first currents I11, I12, and I13 may be input to the first high-current path 111, the second high-current path 112, and the third high-current path 113 in a CM, respectively.

The primary side 121K-1 of the sensing transformer 120K-1 may be disposed on each of the first, second, and third high-current paths 111, 112, and 113, and thus may generate an induced voltage on a secondary side 122K-1. Magnetic flux densities generated in the sensing transformer 120K-1 by the first currents I11, I12, and I13 in the three high-current paths 111, 112, and 113 may reinforce each other.

Meanwhile, in the active voltage compensation device 100K-1, the amplification unit 130K and the amplified signal feedback unit 150K correspond to the amplification unit 130K and the amplified signal feedback unit 150K described above with reference to FIG. 17.

In an embodiment, a wire of the secondary side 122K-1 of the sensing transformer 120K-1 may be differentially connected to the first amplification unit 131K-1. A voltage $V_{sen}$ induced on the secondary side 122K-1 of the sensing transformer 120K-1 becomes an input voltage of the first amplification unit 131K. The first amplification unit 131K may output an amplified voltage $V_1$ based on the input voltage. The second amplification unit 132K may output an amplified current $I_1$ while maintaining the amplified voltage $V_1$.

The amplified voltage $V_1$ may become an input voltage of the compensation transformer 160K-1, that is, a voltage of a primary side 161K-1 of the compensation transformer 160K-1.

Meanwhile, the secondary side 162K-1 of the compensation transformer 160K-1 may be disposed on each of the first high-current path 111, the second high-current path 112, and the third high-current path 113. Based on the voltage $V_1$ of the primary side 161K-1 output from the second amplification unit 132K-1, the compensation transformer 160K-1 may respectively generate compensation voltages $V_{inj}$ on the three high-current paths 111, 112, and 113, which correspond to the secondary side 162K-1, in series.

The active voltage compensation device 100K-1 according to the embodiment may perform voltage compensation for CM noise on a power line of a three-phase three-wire power system.

Of course, according to the technical idea of the present disclosure, an active voltage compensation device according to various embodiments may be modified to be applicable to a three-phase four-wire system.

In various embodiments of the present disclosure, an IC unit included in an amplification unit and a power conversion unit included in a power management unit may be physically integrated into one IC chip. Even when the voltage $V_I$ in any range is input from a power supply, the IC chip may convert the voltage $V_I$ into a voltage $V_O$ optimized for driving an internal IC unit through a power conversion unit, thereby driving the IC unit. Therefore, the IC chip may be commercialized to have versatility as an independent component. In addition, the IC unit included in the amplification unit may operate stably irrespective of the characteristics of a surrounding system.

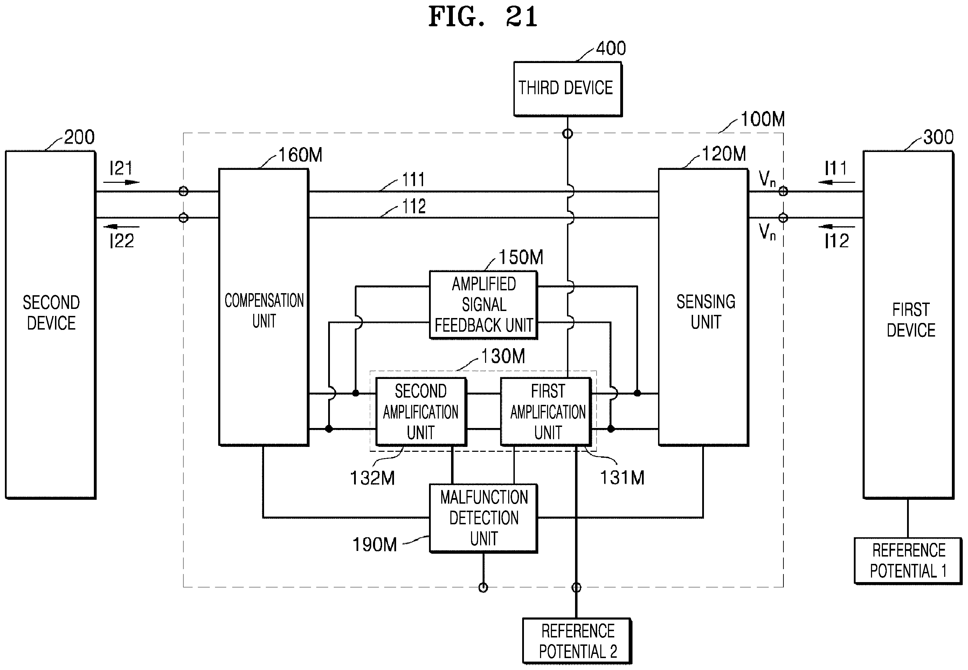

FIG. 21 schematically illustrates a configuration of a system including an active voltage compensation device 100M according to another embodiment of the present disclosure.

The active voltage compensation device 100M may actively compensate for a voltage $V_n$ (for example, a noise voltage) input to each of two or more high-current paths 111 and 112 connected to a first device 300 in a CM. Hereinafter, the descriptions of contents that overlap the contents described with reference to FIGS. 1 to 20 will be omitted.

Referring to FIG. 21, the active voltage compensation device 100M may include a sensing unit 120M, an amplification unit 130M, an amplified signal feedback unit 150M, a compensation unit 160M, and a malfunction detection unit 190M, and the amplification unit 130M may include a first amplification unit 131M and a second amplification unit 132M.

In comparison with the active voltage compensation device 100A according to the embodiment described with reference to FIG. 2, the active voltage compensation device 100M according to the embodiment shown in FIG. 21 further includes the malfunction detection unit 190M connected to the high-current paths 111 and 112, the sensing unit 120M, the first amplification unit 131M, the second amplification unit 132M, and the compensation unit 160M. Therefore, hereinafter, the active voltage compensation device 100M will be described based on the above-described difference.

According to an embodiment, the malfunction detection unit 190M may generate a signal corresponding to an operating state of at least one of the two or more high-current paths 111 and 112, the sensing unit 120M, the amplification unit 130M, and the compensation unit 160M.

Specifically, the two or more high-current paths 111 and 112 may be electrically connected to the malfunction detection unit 190M. In this case, the malfunction detection unit 190M may check a state of the two or more high-current paths 111 and 112 and may generate a signal corresponding to the checked state. For example, the malfunction detection unit 190M may check a voltage of each of the two or more high-current paths 111 and 112 and/or a line voltage between the two or more high-current paths 111 and 112 and, based on the checked voltage or line voltage, the malfunction detection unit 190M may generate a signal indicating whether the high-current paths 111 and 112 are normal.

Meanwhile, the sensing unit 120M may be electrically connected to the malfunction detection unit 190M. The malfunction detection unit 190M may check the operating state of the sensing unit 120M and may generate a signal corresponding to the checked operating state. For example, in an example in which the sensing unit 120M is implemented as a sensing transformer, the malfunction detection unit 190M may identify whether a primary side and a secondary side of the sensing transformer are insulated and may generate a signal, which indicates whether the sensing unit a120M is normal, based on an identification result.

Meanwhile, the amplification unit 130M may be electrically connected to the malfunction detection unit 190M. The malfunction detection unit 190M may check the operating state of the amplification unit 130 and may generate a signal corresponding to the checked operating state. A method by which the malfunction detection unit 190M identifies whether the amplification unit 130M is abnormal will be described below.

Meanwhile, the compensation unit 160M may be electrically connected to the malfunction detection unit 190M. The malfunction detection unit 190M may check the operating state of the compensation unit 160M and may generate a signal corresponding to the checked operating state. For example, in an example in which the compensation unit 160M is implemented as a compensation transformer, the malfunction detection unit 190M may identify whether a primary side and a secondary side of the compensation transformer are insulated and may generate a signal, which indicates whether the compensation unit 160M is normal, based on an identification result.

As described above, the malfunction detection unit 190M may check the operating state of at least one of the two or more high-current paths 111 and 112, the sensing unit 120M, the amplification unit 130M, and the compensation unit 160M (hereinafter referred to as a check target) and may generate a signal corresponding to the checked operating state.

In an embodiment, the malfunction detection unit 190M may include a malfunction detection signal output unit that outputs a signal corresponding to an operating state of a check target and a malfunction detection signal display unit that displays the signal corresponding to the operating state.

The malfunction detection signal output unit may output the signal corresponding to the operating state of the check target in the form of a voltage based on whether a voltage of at least one node inside the check target is included in a certain reference voltage range. The signal (for example, a voltage) output by the malfunction detection signal output unit may be output to an external device or the malfunction detection signal display unit. In this case, the external device may refer to various devices including the first device 300 and the second device 200 described above.

The malfunction detection signal display unit may include a light-emitting element that is turned on based on the signal generated by the malfunction detection signal output unit described above. In this case, the light-emitting element may include, for example, a light-emitting diode.

In another embodiment, the malfunction detection signal display unit may include a light-emitting element group including two or more light-emitting elements. In this case, the malfunction detection signal display unit may control the turning-on or off of at least one light-emitting element of the light-emitting element group based on a signal generated by the detection signal output unit. For example, the malfunction detection signal display unit may increase the number of light-emitting elements, which are turned on, in proportion to a magnitude of a voltage generated by the malfunction detection signal output unit.

The light-emitting element as described above does not necessarily have to be positioned inside an active voltage compensation device, but may be electrically connected to the malfunction detection signal output unit and positioned at an outer position appropriate for a user to recognize the light-emitting element.

As described above, the malfunction detection unit 190M may check the operating state of the check target based on the voltage of at least one node inside the check target and may also check the operating state of the check target based on at least one path current inside the check target. Of course, the malfunction detection unit 190M may check the operating state of the check target based on a temperature of the check target, an amount of change in temperature, an magnetic field, and/or a magnitude of the electric field. However, this is merely an example, and the spirit of the present disclosure is not limited thereto.

The active voltage compensation device 100M having a configuration as described above may detect voltages under specific conditions on the two or more high-current paths 111 and 112 and may actively compensate for the detected voltages, and despite the miniaturization of a device, the active voltage compensation device 100M may be applied to high-current, high-voltage, and/or high-power systems.

Meanwhile, the active voltage compensation device 100M having a configuration as described above may be implemented in the form of a module including a substrate encapsulated in one encapsulation structure. In addition, terminals connected to each component of the active voltage compensation device 100M, the first device 300, the second device 200, a third device 400, referential potential 1, referential potential 2, and other external devices may each provided to protrude in the form of a pin in a direction perpendicular to one surface of the substrate.

For example, a terminal for outputting a signal, which corresponds to an operating state and is generated by the malfunction detection unit 190M, may be provided in the form of a pin to protrude from the above-described module. Accordingly, a user may check a voltage of a corresponding pin without disassembling the module to easily identify whether a specific component of the active voltage compensation device 100M is abnormal.

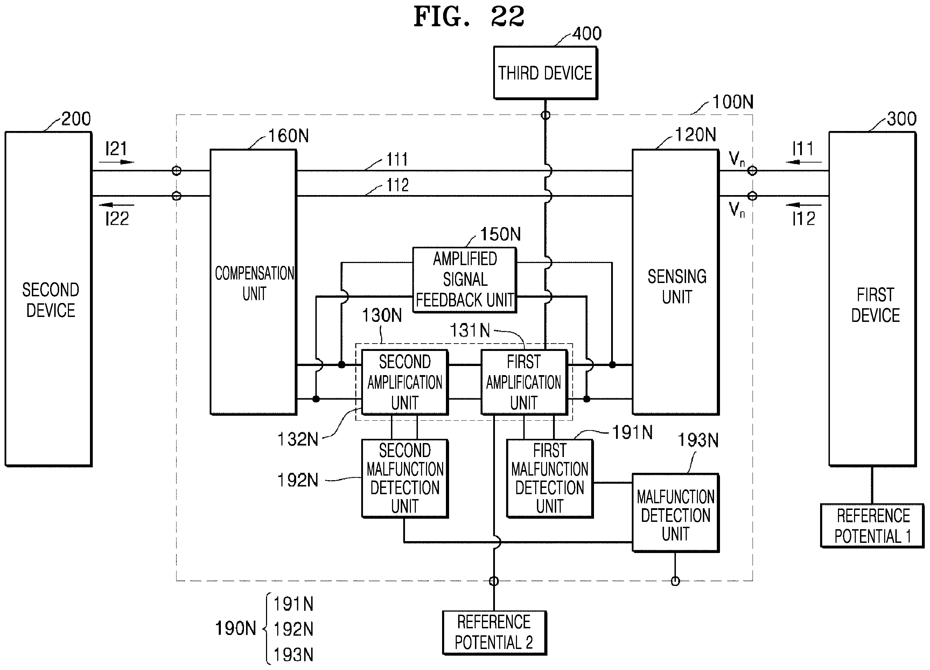

FIG. 22 illustrates a more specific example of the embodiment shown in FIG. 21 and schematically illustrates an active voltage compensation device 100N according to an embodiment of the present disclosure. The active voltage compensation device 100N may actively compensate for a voltage $V_n$ (for example, a noise voltage) input to each of two or more high-current paths 111 and 112 connected to a first device 300 in a CM.

The active voltage compensation device 100N may include a sensing unit 120N, an amplification unit 130N, an amplified signal feedback unit 150N, a compensation unit 160N, and a malfunction detection unit 190N. The amplification unit 130N may include a first amplification unit 131N and a second amplification unit 132N, and the malfunction detection unit 190N may include a first malfunction detection unit 191N, a second malfunction detection unit 192N, and a malfunction determination unit 193N.

The description of the sensing unit 120N, the first amplification unit 131N, the second amplification unit 132N, the amplified signal feedback unit 150N, and the compensation unit 160N of the active voltage compensation device 100N corresponds to the description of the sensing unit 120, the first amplification unit 131A, the second amplification unit 132A, the amplified signal feedback unit 150, and the compensation unit 160 of FIG. 2.

The malfunction detection unit 190N is connected to the amplification unit 130N and may check an operating state of the amplification unit 130N and generate a signal corresponding to the checked operating state. Thus, the malfunction detection unit 190N may detect a malfunction or failure of the amplification unit 130N.

According to an embodiment, signals at two nodes included in the amplification unit 130N may be differentially input to the malfunction detection unit 190N. The malfunction detection unit 190N may detect a differential signal between the two nodes included in the amplification unit 130N. The malfunction detection unit 190N may detect a malfunction of the amplification unit 130N by using the input differential signal. For example, the malfunction detection unit 190N may detect a malfunction of the amplification unit 130N by determining whether the differential signal satisfies a certain condition.

The malfunction detection unit 190N may output a signal indicating whether the amplification unit 130N fails. To this end, the malfunction detection unit 190N may include a malfunction detection signal output unit and a malfunction detection signal display unit. The malfunction detection signal output unit may output a signal corresponding to an operating state of a check target, and the malfunction detection signal display unit may display the signal corresponding to the operating state. In another embodiment, the malfunction detection unit 190N may also include only the malfunction detection signal output unit.

Meanwhile, the malfunction detection unit 190N may include a plurality of malfunction detection units connected to each component of the amplification unit 130N to detect an abnormality of the amplification unit 130N. Hereinafter, descriptions will be provided based on a configuration in which the active voltage compensation device 100 includes two malfunction detection units.

In an embodiment, the malfunction detection unit 190N may include the first malfunction detection unit 191N connected to the first amplification unit 131N and the second malfunction detection unit 192N connected to the second amplification unit 132N. The malfunction detection unit 190N may further include the malfunction determination unit 193N connected to both the first malfunction detection unit 191N and the second malfunction detection unit 192N.

The first malfunction detection unit 191N may be electrically connected to the first amplification unit 131N. The first malfunction detection unit 191N may check an operating state of the first amplification unit 131N and may generate a signal corresponding to the checked operating state. To this end, the first malfunction detection unit 191N may include an output unit that generates a malfunction detection signal and/or a display unit that displays the signal.

The output unit of the first malfunction detection unit 191N may generate a signal corresponding to the operating state of the first amplification unit 131N based on whether a voltage of at least one node inside the first amplification unit 131N is included in a certain reference voltage range. For example, when a node voltage inside the first amplification unit 131N is a value corresponding to half (for example, 6 V) of an operating voltage (for example, 12 V) of the first amplification unit 131N, that is, a value (for example, 4 V to 8 V) in a certain range from half of the operating voltage of the first amplification unit 131N, the output unit of the first malfunction detection unit 191N may generate a signal indicating that the operating state of the first amplification unit 131N is normal. In this case, a range or the like of a half value of the operating voltage of the first amplification unit 131N may be appropriately determined according to the design of the active voltage compensation device 100N.

The signal generated by the output unit of the first malfunction detection unit 191N may be output to the display unit of the first malfunction detection unit 191N and/or the malfunction determination unit 193N which will be described below.

The display unit of the first malfunction detection unit 191N may include at least one light-emitting element to display a state of the first amplification unit 131N to be normal or abnormal. In this case, the light-emitting element may include, for example, a light-emitting diode, may display normality when turned on, and may display abnormality when turned off.

In another embodiment, the display unit of the first malfunction detection unit 191N may include a light-emitting element group including two or more light-emitting elements and thus may display the node voltage inside the first amplification unit 131N in more detail. For example, the display unit of the first malfunction detection unit 191N may increase the number of light-emitting elements, which are turned on, in proportion to the node voltage inside the first amplification unit 131N. The light-emitting element as described above does not necessarily have to be positioned inside the active voltage compensation device 100N, but may be electrically connected to the output unit of the first malfunction detection unit 191N and positioned at an outer position appropriate for a user to recognize the light-emitting element.

The second malfunction detection unit 192N may be electrically connected to the second amplification unit 132N. The second malfunction detection unit 192N may check an operating state of the second amplification unit 132N and may generate a signal corresponding to the checked operating state. To this end, the second malfunction detection unit 192N may include an output unit that generates a malfunction detection signal and/or a display unit that displays the signal.

The output unit of the second malfunction detection unit 192N may generate a signal corresponding to the operating state of the second amplification unit 132N based on whether a voltage of at least one node inside the second amplification unit 132N is included in a certain reference voltage range. For example, when a node voltage inside the second amplification unit 132N is a value corresponding to half (for example, 6 V) of an operating voltage (for example, 12 V) of the second amplification unit 132N, that is, a value (for example, 4 V to 8 V) in a certain range from half of the operating voltage of the second amplification unit 132N, the output unit of the second malfunction detection unit 192N may generate a signal indicating that the operating state of the second amplification unit 132N is normal. In this case, a range or the like of a half value of the operating voltage of the second amplification unit 132N may be appropriately determined according to the design of the active voltage compensation device 100N.

The signal generated by the output unit of the second malfunction detection unit 192N may be output to the display unit of the second malfunction detection unit 192N and/or the malfunction determination unit 193N which will be described below.

The display unit of the second malfunction detection unit 192N may include at least one light-emitting element to display a state of the second amplification unit 132N to be normal or abnormal. In this case, the light-emitting element may include, for example, a light-emitting diode, may display normality when turned on, and may display abnormality when turned off.

In another embodiment, the display unit of the second malfunction detection unit 192N may include a light-emitting element group including two or more light-emitting elements and thus may display the node voltage inside the second amplification unit 132N in more detail. For example, the display unit of the second malfunction detection unit 192N may increase the number of light-emitting elements, which are turned on, in proportion to the node voltage inside the second amplification unit 132N. The light-emitting element as described above does not necessarily have to be positioned inside the active voltage compensation device 100N, but may be electrically connected to the output unit of the second malfunction detection unit 192N and positioned at an outer position appropriate for a user to recognize the light-emitting element.

The malfunction detection unit 190N may further include the malfunction determination unit 193N that is connected to the first malfunction detection unit 191N and the second malfunction detection unit 192N to determine a malfunction or failure of the entire amplification unit 130N.

The malfunction determination unit 193N may be electrically connected to the first malfunction detection unit 191N and the second malfunction detection unit 192N. The malfunction determination unit 193N may receive signals output from the first malfunction detection unit 191N and the second malfunction detection unit 192N to generate a signal corresponding to an operating state of the amplification unit 130N. To this end, the malfunction determination unit 193N may include an output unit that generates a malfunction detection signal and may further include a display unit that displays the signal.

The output unit of the malfunction determination unit 193N may generate a signal corresponding to the operating state of the amplification unit 130N by receiving signals, which are generated to respectively correspond to the operating states of the first amplification unit 131N and the second amplification unit 132N, from the first malfunction detection unit 191N and the second malfunction detection unit 192N. For example, the malfunction determination unit 193N may receive signals, which correspond to whether the states of the first amplification unit 131N and the second amplification unit 132N are normal, from the first malfunction detection unit 191N and the second malfunction detection unit 192N. When both the states of both the first amplification unit 131N and the second amplification unit 132N are normal, the malfunction determination unit 193N may generate a signal indicating that the operating state of the amplification unit 130N is normal. Alternatively, when the state of at least one of the first amplification unit 131N and the second amplification unit 132N is abnormal, the malfunction determination unit 193N may generate a signal indicating that the operating state of the amplification unit 130N is abnormal.

The display unit of the malfunction determination unit 193N may include at least one light-emitting element to display a state of the amplification unit 130N to be normal or abnormal. In this case, the light-emitting element may include, for example, a light-emitting diode, and may display normality when turned on and may display abnormality when turned off. However, this is merely an example, and the spirit of the present disclosure is not limited thereto.

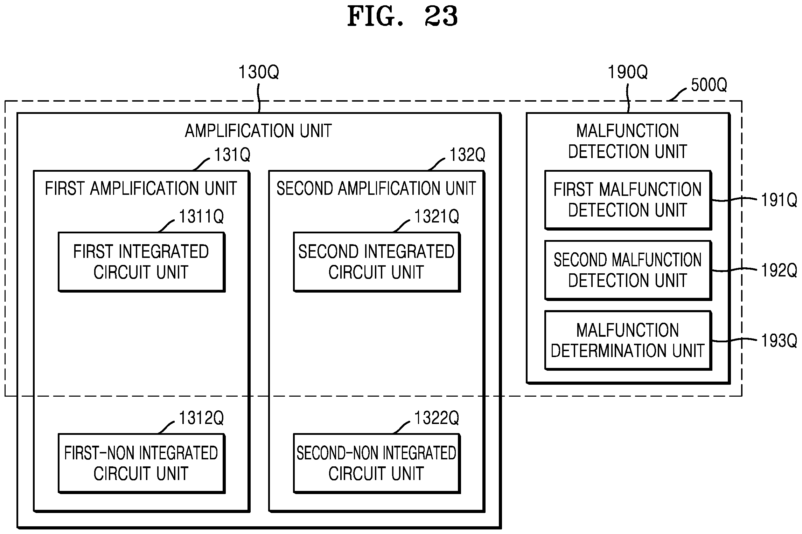

FIG. 23 illustrates an example of a functional configuration of an amplification unit 130Q and a malfunction detection unit 190Q according to an embodiment of the present disclosure. The amplification unit 130Q and the malfunction detection unit 190Q of FIG. 23 are specific examples of the amplification unit 130N and the malfunction detection unit 190N shown in FIG. 22.

Referring to FIG. 23, the amplification unit 130Q may include an IC unit and a non-IC unit. The non-IC unit includes passive elements, and the IC unit includes active elements. In an embodiment, the IC unit may further include passive elements as well as the active elements.

A first amplification unit 131Q and a second amplification unit 132Q constituting the amplification unit 130Q may each include an IC unit and a non-IC unit. That is, the first amplification unit 131Q may include a first IC unit 1311Q and a first non-IC unit 1312Q, and the second amplification unit 132Q may include a second IC unit 1321Q and a second non-IC unit 1322Q.

Referring to FIGS. 22 and 23 together, a combination of the IC units and the non-IC units of the amplification unit 130Q may perform a function of generating an amplified signal from a signal output from a sensing unit 120N. The amplified signal may be input to a compensation unit 160N.

The amplification unit 130Q may be connected to the malfunction detection unit 190Q. The malfunction detection unit 190Q is connected to the amplification unit 130Q to detect a malfunction or failure of the amplification unit 130Q.

The malfunction detection unit 190Q may include a first malfunction detection unit 191Q connected to the first amplification unit 131Q, a second malfunction detection unit 192Q connected to the second amplification unit 132Q, and a malfunction determination unit 193Q. Signals at two nodes included in the first amplification unit 131Q may be differentially input to the first malfunction detection unit 191Q, and signals at two nodes included in the second amplification unit 132Q may be differentially input to the second malfunction detection unit 192Q.

The first malfunction detection unit 191Q and the second malfunction detection unit 192Q may each detect an input differential signal between the two nodes. The two nodes included in the first amplification unit 131Q may be two nodes included in the first IC unit 1311Q, and the two nodes included in the second amplification unit 132Q may be two nodes included in the second IC unit 1321Q. The two nodes included in the first amplification unit 131Q may also be connected to the first non-IC unit 1312Q, and the two nodes included in the second amplification unit 132Q may also be connected to the second non-IC unit 1322Q.

The first malfunction detection unit 191Q and the second malfunction detection unit 192Q may each generate an output signal indicating whether the detected differential signal is in a certain range. The output signal may indicate whether the first amplification unit 131Q and the second amplification unit 132Q fail.

The malfunction detection unit 190Q may further include the malfunction determination unit 193Q connected to the first malfunction detection unit 191Q and the second malfunction detection unit 192Q. Output signals of the first malfunction detection unit 191Q and the second malfunction detection unit 192Q may be input to the malfunction determination unit 193Q. Based on the input output signal, the malfunction determination unit 193Q may generate and output a signal indicating whether the amplification unit 130Q malfunctions or fails. The signal output from the malfunction determination unit 193Q may indicate whether the entire amplification unit 130Q fails and may also indicate whether each of the first amplification unit 131Q and the second amplification unit 132Q fails.

In an embodiment, the first and second IC units 1311Q and 1321Q of the amplification unit 130Q and the malfunction detection unit 190N may be physically integrated into one IC chip 500Q. However, this is merely an embodiment, and in other embodiments, of course, the IC units and non-IC units of the amplification unit 130Q and the malfunction detection unit 190N may be physically integrated into one IC chip 500Q.

The first malfunction detection unit 191Q, the second malfunction detection unit 192Q, and the malfunction determination unit 193Q may include active elements. Here, a reference potential of the first malfunction detection unit 191Q, the second malfunction detection unit 192Q, and the malfunction determination unit 193Q may be the same as referential potential 2 which is a reference potential of the amplification unit 130Q. The reference potential of the first malfunction detection unit 191Q and the second malfunction detection unit 192Q may be different from referential potential 1 which is a reference potential of the active voltage compensation device 100.

Referring again to FIGS. 22 and 23 together, the amplification unit 130Q and the malfunction detection unit 190Q receive power from a third device 400 which is distinguished from a first device 300 and/or a second device 200. The amplification unit 130Q may receive power from the third device 400 and may amplify an output signal output from a sensing unit 120N to generate an amplified signal. The malfunction detection unit 190Q may receive power from the third device 400 to generate an output signal indicating whether a differential signal input from the amplification unit 130Q is in a certain range. The output signal may indicate whether the amplification unit 130Q fails.

The third device 400 may be a device that receives power from a power supply unrelated to the first device 300 and the second device 200 and generates input power for the amplification unit 130Q and the malfunction detection unit 190Q. Optionally, the third device 400 may also be a device that receives power from any one device of the first device 300 and the second device 200 to generate input power for the amplification unit 130 and the malfunction detection unit 190Q.

The IC chip 500Q may include a terminal for connection to the third device, a terminal for connection to referential potential 2, and a terminal for outputting an output signal of the malfunction detection unit 190Q. The IC chip 500Q may further include other terminals.

For example, in an embodiment in which only the first IC unit 1311Q and second IC unit 1321Q of the amplification unit 130Q are integrated into the IC chip 500Q together with the malfunction detection unit 190Q, the other terminals may be connected to the non-IC unit of the amplification unit 130Q. As another example, in an embodiment in which the IC units and non-IC units included in the amplification unit 130Q and the malfunction detection unit 190Q are all integrated into one IC chip 500Q, the other terminals may be connected to an output terminal of the sensing unit and an input terminal of the compensation unit.

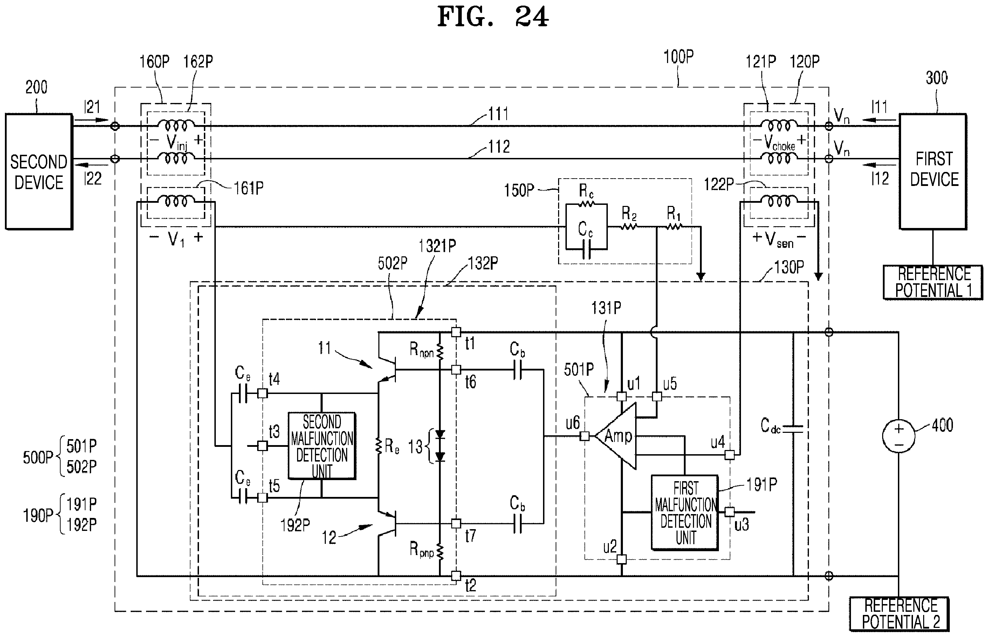

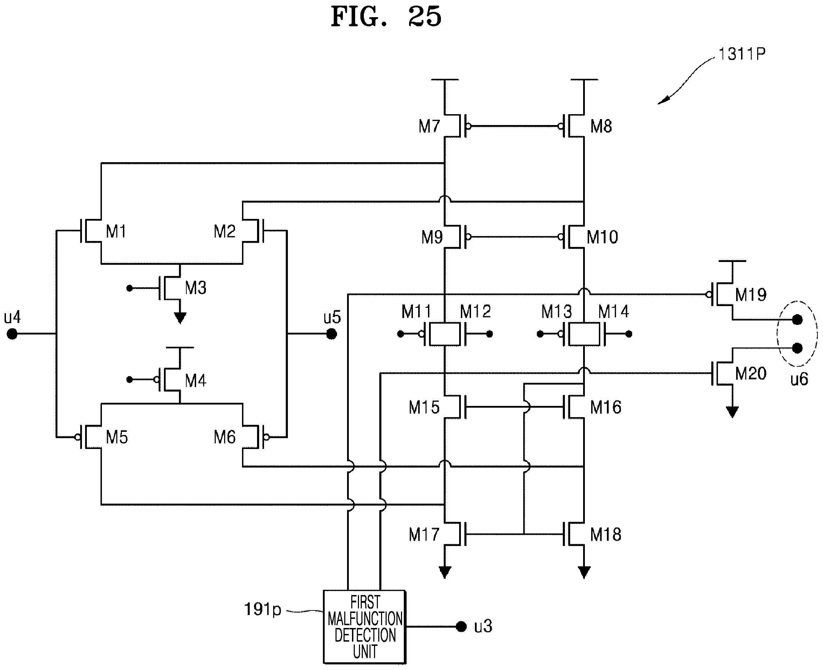

FIG. 24 illustrates a more specific example of the embodiment shown in FIG. 22 and schematically illustrates an active voltage compensation device 100P according to an embodiment of the present disclosure. FIG. 25 illustrates a specific example of a first IC unit 1311P of a first amplification unit 131P and a first malfunction detection unit 191P shown in FIG. 24. The active voltage compensation device 100P shown in FIG. 24 is an example of the active voltage compensation device 100N shown in FIG. 22, and an amplification unit 130P included in the active voltage compensation device 100P is an example of the amplification unit 130N of the active voltage compensation device 100N.

The active voltage compensation device 100P may actively compensate for a voltage $V_n$ (for example, a noise voltage) input to each of two or more high-current paths 111 and 112 connected to a first device 300 in a CM.

Referring to FIGS. 24 and 25, the active voltage compensation device 100P may include a sensing transformer 120P, the amplification unit 130P, an amplified signal feedback unit 150P, a compensation transformer 160P, and a malfunction detection unit 190P, and the amplification unit 130P may include the first amplification unit 131P and a second amplification unit 132P. The malfunction detection unit 190P may include the first malfunction detection unit 191P and a second malfunction detection unit 192P and may further include a malfunction determination unit (not shown) connected to the first malfunction detection unit 191P and the second malfunction detection unit 192P.

When the active voltage compensation device 100F is compared with the active voltage compensation device 100P according to the embodiment described with reference to FIG. 9, the active voltage compensation device 100F according to the embodiment shown in FIG. 24 further includes the first malfunction detection unit 191P conn7ected to the first amplification unit 131P and the second malfunction detection unit 192P connected to the second amplification unit 132P. Therefore, hereinafter, the active voltage compensation device 100P will be described based on the above-described difference.

The amplification unit 130P included in the active voltage compensation device 100P according to an embodiment may include an IC unit and a non-IC unit. In an embodiment in which the amplification unit 130P includes the first amplification unit 131P and the second amplification unit 132P, the first amplification unit 131P may include the first IC unit 1311P and a first non-IC unit 1312P, and the second amplification unit 132P may include a second IC unit 1321P and a second non-IC unit 1312P. The first IC unit 1311P and the second IC unit 1321P may constitute the IC unit of the amplification unit 130P. The non-IC unit of the amplification unit 130P may be the remaining component except for the IC unit of the amplification unit 130P. The non-IC unit may be modified according to the design of the active voltage compensation device 100P.

The amplification unit 130P and the malfunction detection unit 190P to be described below may receive power from a third device 400. The third device 400 supplies a DC voltage $V_{dd}$ based on referential potential 2 to drive the amplification unit 130P and the malfunction detection unit 190P. The amplification unit 130P may include a capacitor $C_{dc}$ which serves as a DC decoupling capacitor for the DC voltage $V_{dd}$ in the non-IC unit. The capacitor $C_{dc}$ may be connected in parallel between the third device 400 and referential potential 2 to selectively couple only AC signals.

In an embodiment, the first IC unit 1311P of the first amplification unit 131P may include one or more transistors. In an embodiment, the transistor may be provided as a MOSFET. For example, the first IC unit 1311P may have a differential amplification unit structure including MOSFETs forming a differential pair. An example of the detailed configuration of the first IC unit 1311P corresponds to the description of the first IC unit 1311F described with reference to FIG. 10.

An induced voltage induced on a secondary side 122P by the sensing transformer 120P may be differentially input to the first amplification unit 131P. In an embodiment, the secondary side 122P of the sensing transformer 120P may be connected to gates of two MOSFETs (for example, M1 and M5) included in the first IC unit 1311P.

The first amplification unit 131P may generate and output an amplified signal (for example, an amplified voltage) based on a voltage input from the secondary side 122P of the sensing transformer 120P. In an embodiment, source and drain sides of different MOSFETs (for example, M19 and M20) included in the first IC unit 1311P may form an output unit of the first amplification unit 131P, and the output unit may be connected to an input unit of the second amplification unit 132P to transmit an amplified signal to the second amplification unit 132P. Here, connection includes indirect connection.

In an embodiment, the amplified signal feedback unit 150P may be connected to gates of two MOSFETs M2 and M6 included in the first IC unit 1311P. The amplification unit 130P may transmit a feedback signal based on an output signal of the second amplification unit 132P to the first amplification unit 131P through the amplified signal feedback unit 150P.

As the first amplification unit 131P receives power from the third device 400, nodes included in the first IC 1311P may greatly swing in a CM. For example, voltages at gate nodes, source nodes, and drain nodes of the MOSFETs included in the first IC unit 1311P may swing in a CM.

The first amplification unit 131P may identify whether the first amplification unit 131P normally operates by identifying whether the first IC unit 1311P of the first amplification unit 131P normally operates. In other words, whether a DC bias of the first amplification unit 131P is normal may be identified to identify whether the first amplification unit 131P normally operates.

As described above, since the voltages at the nodes of the first IC unit 1311P greatly swings in a CM, only a differential DC voltage between two nodes included in the first IC unit 1311P may be detected to sense a malfunction of the first amplification unit 131P. For example, as shown in FIG. 25, the first malfunction detection unit 191P may be connected to a node between MOSFETs M9 and M11 and a node between MOSFETs N11 and M15. When a differential DC voltage between the nodes satisfies a certain condition, the first malfunction detection unit 191P may determine that a state of the first amplification unit 131P is normal.

That is, by using the differential DC voltage between the two nodes included in the first amplification unit 131P, the first malfunction detection unit 191P according to an embodiment may output a signal indicating a malfunction of the first amplification unit 131P.

In embodiments of the present disclosure, the first IC unit 1311P may be implemented as an IC in one chip. For example, one or more MOSFETs of the first IC unit 1311P may be integrated into one chip. In addition, in an embodiment, the first IC unit 1311P may be integrated into one chip together with the first malfunction detection unit 191P which will be described below. In another embodiment, the first IC unit 1311P may be implemented as one IC chip together with the second IC unit 1321P and the entire malfunction detection unit 190P which will be described below.

When the first IC unit 1311P and the first malfunction detection unit 191P are implemented in one IC chip 501P, the IC chip 501P may include a terminal u1 for connection to the third device 400, a terminal u2 for connection to referential potential 2, a terminal u3 for outputting an output signal of the first malfunction detection unit 191P, a terminal u4 for connection to the secondary side of the sensing transformer 120P, a terminal u5 for connection to the amplified signal feedback unit 150P, and a terminal u6 for connection to the second amplification unit 132P. However, the present disclosure is not limited thereto, and the IC chip 501P may further include other terminals in addition to the terminals u1 to u6.

An amplified signal amplified by the first amplification unit 131P may be input to the second amplification unit 132P. The second amplification unit 132P may receive power from the third device 400 to re-amplify the amplified signal input from the first amplification unit 131P. The amplification in the second amplification unit 132P may be amplification by which only a current is amplified in a state in which a voltage remains without any change (or does not change considerably). Due to the second amplification unit 132P, the active voltage compensation device 100P my secure a sufficient current for driving a device.

In an embodiment, the second IC unit 1321P of the second amplification unit 132P may include a first transistor 11, a second transistor 12, a diode 13, and resistors $R_{npn}$, $R_{pnp}$, and $R_e$. The second non-IC unit 1322P may include capacitors $C_b$ and $C_e$.

In an embodiment, the first transistor 11 may be an npn BJT, and the second transistor 12 may be a pnp BJT. For example, the second amplification unit 132P may have a push-pull amplification unit structure including an npn BJT and a pnp BJT.

The third device 400 that supplies power to the second amplification unit 132P supplies the DC voltage $V_{dd}$ based on referential potential 2 to the second amplification unit 132P. The amplification unit 130P may include the capacitor $C_{dc}$ which is a DC decoupling capacitor for the DC voltage $V_{dd}$. The capacitor $C_{dc}$ may be connected in parallel between the third device 400 and referential potential 2 and may selectively couple only AC signals between both collectors of the first transistor 11 (for example, the npn BJT) and the second transistor 12 (for example, the pnp BJT) in the second amplification unit 132P.

The capacitors $C_b$ and $C_e$ included in the second amplification unit 132P may selectively couple only AC signals.

The resistors $R_{npn}$, $R_{pnp}$, and $R_e$ in the second IC unit 1321P of the second amplification unit 132P may adjust operating points of the first and second transistors 11 and 12. The resistor $R_{npn}$ may connect a terminal of the third device 400, which is a collector terminal of the first transistor 11 (for example, the npn BJT), and a base terminal of the first transistor 11 (for example, the npn BJT). The resistor $R_{pnp}$ may connect referential potential 2, which is a collector terminal of the second transistor 12 (for example, the pnp BJT), and a base terminal of the second transistor 12 (for example, the pnp BJT). The resistor $R_e$ may connect an emitter terminal of the first transistor 11 and an emitter terminal of the second transistor 12.

An output side of the first amplification unit 131P according to an embodiment may be connected to a base side of the first and second transistors 11 and 12. A primary side 161P of the compensation transformer 160P according to an embodiment may be connected to an emitter side of the first and second transistors 11 and 12. The amplified signal feedback unit 150P according to an embodiment may be connected to the emitter side of the first and second transistors 11 and 12. Here, connection also includes indirect connection.

The second amplification unit 132P according to an embodiment may have a regression structure that injects an output signal back into bases of the first and second transistors 11 and 12. Due to the regression structure, the second amplification unit 132P may stably obtain a certain current gain for operating the active voltage compensation device 100P.

In the case of a positive swing in which an input voltage of the second amplification unit 132P is greater than 0 due to a noise signal, the first transistor 11 (for example, the npn BJT) may operate. In this case, an operating current may flow through a first path passing through the first transistor 11. In the case of a negative swing in which the input voltage of the second amplification unit 132P is less than 0 due to noise, the second transistor 12 (for example, the pnp BJT) may operate. In this case, an operating current may flow through a second path passing through the second transistor 12.

In various embodiments, since a noise level that should be compensated for according to the first device 300 may be high, it may be desirable to use a power supply with a voltage as high as possible. For example, the third device 400 that supplies power may be independent of the first device 300 and a second device 200.

As power is supplied from the third device 400, nodes of the first transistor 11 and the second transistor 12 may greatly swing in a CM. For example, voltages at base nodes and emitter nodes of the first and second transistors 11 and 12 may swing in the CM.

Whether the second IC unit 1321 of the second amplification unit 132P normally operates may be identified to identify whether the second amplification unit 132P normally operate. In other words, whether a DC bias of the second amplification unit 132P is normal may identified to identify whether the second amplification unit 132P normally operate.

As described above, since the voltages at the nodes of the first and second transistors 11 and 12 greatly swing in the CM, only a differential DC voltage between the first transistor 11 and the second transistor 12 may be detected to sense a malfunction of the second amplification unit 132P. That is, in order to sense the malfunction of the second amplification unit 132P, the second malfunction detection unit 192P may be connected to one node of the first transistor 11 and one node of the second transistor 12.

The second malfunction detection unit 192P may selectively detect only the differential DC voltage between the first transistor 11 and the second transistor 12. For example, a differential signal between one node of the first transistor 11 and one node of the second transistor 12 may be input to the second malfunction detection unit 192P. The differential signal may be a differential DC voltage between an emitter of the first transistor 11 and an emitter of the second transistor 12.

That is, the second malfunction detection unit 192P may output a signal indicating a state of the second amplification unit 132P by using a differential DC voltage between two nodes included in the second amplification unit 132P. When the differential DC voltage between one node of the first transistor 11 and one node of the second transistor 12 satisfies a certain condition, the second malfunction detection unit 192P may determine that the second amplification unit 132P is normal.

According to an embodiment, when the differential DC voltage between the emitter of the first transistor 11 and the emitter of the second transistor 12 is in a certain range, the second malfunction detection unit 192P may output a signal indicating that the second amplification unit 132P is normal. When the differential DC voltage is outside the certain range, the second malfunction detection unit 192P may output a signal indicating that a state of the second amplification unit 132P fails.

In embodiments of the present disclosure, at least a portion of the second amplification unit 132P and the second malfunction detection unit 192P may be physically integrated into one IC chip.

In an embodiment, the second IC unit 1321P of the second amplification unit 132P and the second malfunction detection unit 192P may be integrated into one IC chip 502P. For example, the first transistor 11, the second transistor 12, the diode 13, and the resistors $R_{npn}$, $R_{pnp}$, and $R_e$ of the second IC unit 1321P and the second malfunction detection unit 192P may be integrated into one IC chip 502P.

In this case, the IC chip 502P may include a terminal t1 for connection to the third device 400, the terminal t2 for connection to referential potential 2, a terminal t3 for outputting an output signal of the second malfunction detection unit 192P, and terminals (for example, t4, t5, t6, and t7) for connection to passive elements of the second non-IC unit 1322P.

For example, the terminals for connection to the second non-IC unit 1322P may include the terminal t4 corresponding to the emitter of the first transistor 11 and the terminal t5 corresponding to the emitter of the second transistor 12. In the embodiment shown in FIG. 24, two terminals t4 and t5 corresponding to the emitters of the first and second transistors 11 and 12 may also correspond to an differential input of the second malfunction detection unit 192P. The terminals t4 and t5 corresponding to the emitters of the first and second transistors 11 and 12 may be connected to the capacitors $C_e$ of the second non-IC unit 1322P, respectively.

In addition, the terminals for connection to the second non-IC unit 1322P may include the terminal t6 corresponding to a base of the first transistor 11 and a terminal t7 corresponding to a base of the second transistor 12. The terminals t6 and t7 corresponding to the bases of the first and second transistors 11 and 12 may be connected to the capacitors $C_b$ of the second non-IC unit 1322P, respectively.

However, the present disclosure is not limited thereto. In another embodiment, the IC chip 502P may further include at least a portion of the second non-IC unit 1322P of the second amplification unit 132P. In another embodiment, the IC chip 502P may include all of the second IC unit 1321P and the second non-IC unit 1322P of the second amplification unit 132P, and the second malfunction detection unit 192P.

The malfunction detection unit 190P may further include the malfunction determination unit (not shown) connected to the first malfunction detection unit 191P and the second malfunction detection unit 192P. The description of the malfunction determination unit corresponds to the description of the malfunction determination unit 193Q of FIG. 23.

The malfunction determination unit may include active elements. The malfunction determination unit may be implemented as an IC in one chip. The IC chip may include terminals for connection to an output signal terminal u3 of the first malfunction detection unit 191P and an output signal terminal t3 of the second malfunction detection unit 192P. In addition, the IC chip may include a terminal for outputting an output signal of the malfunction determination unit 193P. The output signal may be a signal indicating whether the amplification unit 130P malfunctions by determining an operating state of the amplification unit 130P based on an output signal of the first malfunction detection unit 191P and an output signal of the second malfunction detection unit 192P.

The malfunction determination unit may be implemented as one IC chip together with the first IC unit 1311P, the first malfunction detection unit 191P, the second IC unit 1321P, and the second malfunction detection unit 192P.

In various embodiments of the present disclosure, the malfunction detection unit 190P may be embedded in the IC chip 500P into which the IC unit of the amplification unit 130P is integrated, thereby reducing a size and a price as compared with a case in which the malfunction detection unit 190P is separately constituted by using a common commercial element. In addition, at least a portion of the amplification unit 130P and the malfunction detection unit 190P may be integrated into one IC chip 500P, and the IC chip 500P or the active voltage compensation device 100P may be commercialized to have versatility as an independent component.

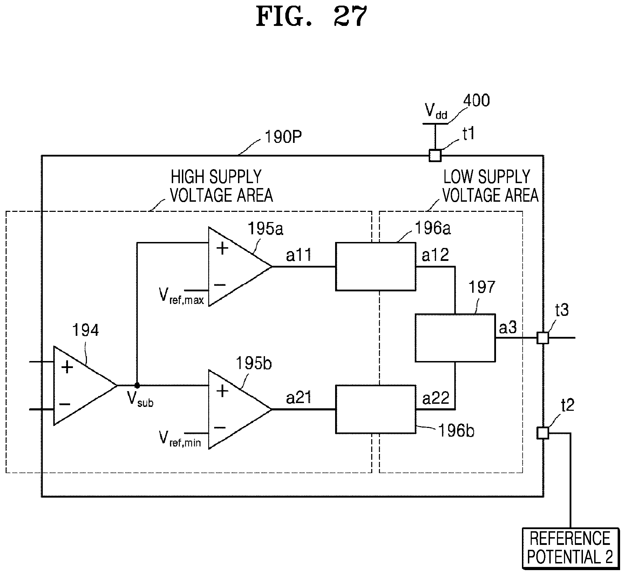

The malfunction detection unit 190P will be described in detail below with reference to FIGS. 27 to 29.

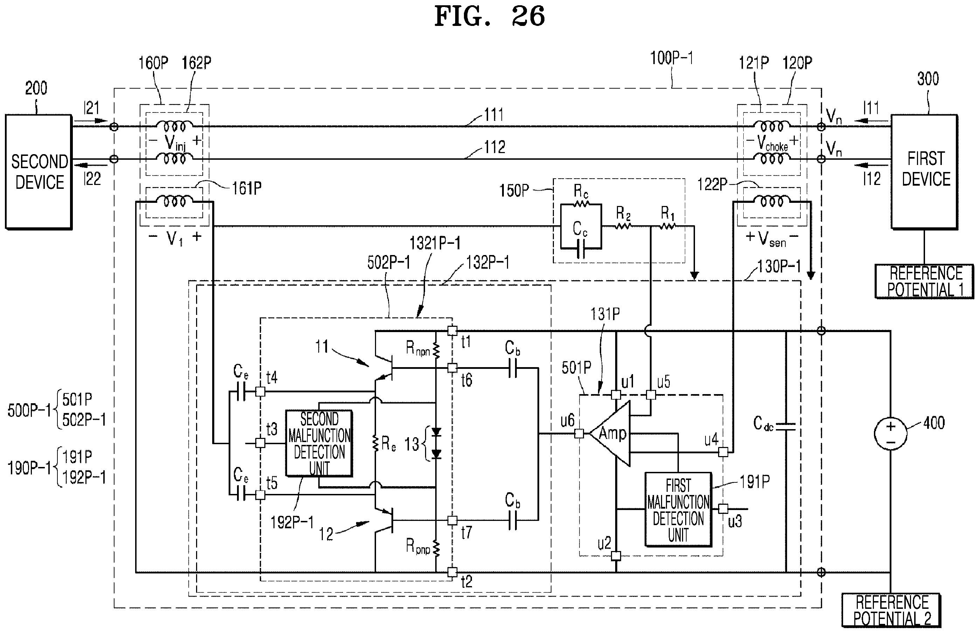

FIG. 26 illustrates a more specific example of the embodiment shown in FIG. 22 and schematically illustrates an active voltage compensation device 100P-1 according to an embodiment of the present disclosure. The active voltage compensation device 100P-1 shown in FIG. 26 is an example of the active voltage compensation device 100N shown in FIG. 22. An amplification unit 130P-1 included in the active voltage compensation device 100P-1 is an example of the amplification unit 130N of the active voltage compensation device 100N.

The amplification unit 130P-1 shown in FIG. 26 corresponds to the amplification unit 130P shown in FIG. 24 and differs from amplification unit 130P in only a position at which a second malfunction detection unit 192P-1 is connected. Specifically, in an IC chip 502P-1 into which a second amplification unit 132P-1 is integrated, a differential DC voltage between a base of a first transistor 11 and a base of a second transistor 12 may be input to the second malfunction detection unit 192P-1. Therefore, since the description of the amplification unit 130P-1 corresponds to the description of the amplification unit 130P, the amplification unit 130P-1 will be briefly described.

In an embodiment, a non-IC unit of a second amplification unit 132P-1 may include capacitors $C_b$ and $C_e$. An IC unit of the second amplification unit 132P-1 may include a first transistor 11, a second transistor 12, a diode 13, and resistors $R_{npn}$, $R_{pnp}$, and $R_e$. In an embodiment, the first transistor 11 may be an npn BJT, and the second transistor 12 may be a pnp BJT. For example, the second amplification unit 132P-1 may have a push-pull amplification unit structure including an npn BJT and a pnp BJT. The second amplification unit 132P-1 according to an embodiment may have a regression structure that injects an output current back into bases of the first and second transistors 11 and 12.

In the case of a positive swing in which an input voltage of the second amplification unit 132P-1 is greater than 0 due to a noise signal, the first transistor 11 (for example, the npn BJT) may operate. In the case of a negative swing in which the input voltage of the second amplification unit 132P-1 is less than 0 due to noise, the second transistor 12 (for example, the pnp BJT) may operate.

As the second amplification unit 132P-1 receives power from a third device 400, voltages at base nodes and emitter nodes of the first and second transistors 11 and 12 may greatly swing in a CM. Here, whether a DC bias of the second amplification unit 132P-1 is normal may be identified to identify whether the second amplification unit 132P-1 normally operates.

As described above, since the voltages at the base nodes and the emitter nodes of the first and second transistors 11 and 12 greatly swing in a CM, only a differential DC voltage between one node of the first transistor 11 and one node of the second transistor 12A may be detected to sense a malfunction.

According to the embodiment shown in FIG. 26, a differential DC voltage between a base of the first transistor 11 and a base of the second transistor 12 may be input to the second malfunction detection unit 192P-1. When the differential DC voltage between the base of the first transistor 11 and the base of the second transistor 12 is in a certain range, the second malfunction detection unit 192P-1 may output a signal indicating normality through an output terminal t3. When the differential DC voltage between the base of the first transistor 11 and the base of the second transistor 12 is outside the certain range, the second malfunction detection unit 192P-1 may output a signal indicating a failure through the output terminal t3.

In embodiments of the present disclosure, at least a portion of the second amplification unit 132P-1 and the second malfunction detection unit 192P-1 may be physically integrated into one IC chip 502P-1.

In an embodiment, as shown in FIG. 26, the IC unit of the second amplification unit 132P-1 and the second malfunction detection unit 192P-1 may be integrated into one IC chip 502P-1. For example, the first transistor 11, the second transistor 12, the diode 13, and the resistors $R_{npn}$, $R_{pnp}$, and $R_e$ of the IC unit of the second amplification unit 132P-1, and the second malfunction detection unit 192P-1 may be integrated into one IC chip 502P-1.

In this case, the IC chip 502P-1 may include a terminal t1 for connection to the third device 400, the terminal t2 for connection to referential potential 2, a terminal t3 for outputting an output signal of the second malfunction detection unit 192P-1, and terminals (for example, t4, t5, t6, and t7) for connection to the non-IC unit of the second amplification unit 132P-1. For example, the terminals for connection to the non-IC unit of the second amplification unit 132P-1 may include the terminal t4 corresponding to an emitter of the first transistor 11 and the terminal t5 corresponding to an emitter of the second transistor 12. The terminals t4 and t5 corresponding to the emitters may be connected to the capacitors $C_e$ of a passive element unit, respectively.

In addition, the terminals for connection to the non-IC unit of the second amplification unit 132P-1 may include the terminal t6 corresponding to the base of the first transistor 11 and the terminal t7 corresponding to the base of the second transistor 12. In the embodiment shown in FIG. 26, two terminals t6 and t7 corresponding to the bases may also correspond to a differential input of the second malfunction detection unit 192P-1. The terminals t6 and t7 corresponding to the bases may be connected to the capacitors $C_b$ of the passive element unit, respectively.

However, the present disclosure is not limited thereto. In another embodiment, the IC chip 502P-1 may further include at least a portion of the non-IC unit of the second amplification unit 132P-1. In another embodiment, the IC chip 502P-1 may include all of the IC unit and the non-IC unit of the second amplification unit 132P-1 and the second malfunction detection unit 192P-1.

In an embodiment, at least a portion of a first amplification unit 131P and a first malfunction detection unit 191P may be integrated into one IC chip 501P, at least a portion of the second amplification unit 132P and the first malfunction detection unit 191P may be integrated into one IC chip 501P-1, and the IC chips 501P and 502P-1 may be components of the same IC chip 500P-1.

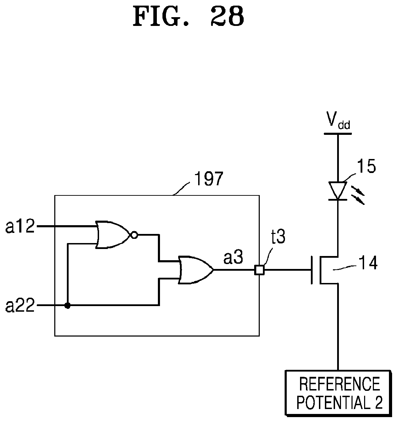

FIG. 27 illustrates a functional configuration of a malfunction detection unit 190P according to an embodiment of the present disclosure. FIG. 28 is a schematic view of a logic circuit 197 according to an embodiment of the present disclosure.

Referring to FIGS. 27 and 28, the malfunction detection unit 190P may include a subtractor 194, a first comparator 195a, a second comparator 195b, a first level shifter 196a, a second level shifter 196b, and the logic circuit 197. In an embodiment in which the malfunction detection unit 190P includes a first malfunction detection unit 191P and a second malfunction detection unit 192P, the first malfunction detection unit 191P and the second malfunction detection unit 192P may each include the subtractor 194, the first comparator 195a, the second comparator 195b, the first level shifter 196a, the second level shifter 196b, and the logic circuit 197. However, this is merely an example, and the malfunction detection unit 190P of the present disclosure is not limited thereto.

Hereinafter, the second malfunction detection unit 192P connected to a second amplification unit 132P will be described in detail with reference to FIGS. 27 and 28 together with FIG. 24. The description of the second malfunction detection unit 192P is also applicable to the malfunction detection unit 190P and the first malfunction detection unit 191P.

The second malfunction detection unit 192P may be applied to the IC chips 500Q, 500P, and 500P-1 according to the various embodiments described above.

In various embodiments, signals at two nodes included in the second amplification unit 132P may be differentially input to the subtractor 194 of the second malfunction detection unit 192P. As described above, a signal of one node of a first transistor 11 and a signal of one node of a second transistor 12 may be differentially input to the subtractor 194.

The subtractor 194 may selectively detect only a differential DC voltage between the node of the first transistor 11 and the node of the second transistor 12. Since the subtractor 194 differentially senses the voltages at the two nodes, a CM swing of the two nodes may be ignored. The subtractor 194 may output a detected differential DC voltage $V_{sub}$.

In an embodiment, the subtractor 194 may output the differential DC voltage $V_{sub}$ between an emitter of the first transistor 11 and an emitter of the second transistor 12. In this case, input terminals of the subtractor 194 may share nodes with the emitters of the first and second transistors 11 and 12.

In another embodiment, the subtractor 194 may output the differential DC voltage $V_{sub}$ between a base of the first transistor 11 and a base of the second transistor 12. In this case, the input terminals of the subtractor 194 may share nodes with the bases of the first and second transistors 11 and 12.

Meanwhile, a voltage at each input terminal of the subtractor 194 may swing, and the swing may be based on a magnitude of a rated voltage $V_{dd}$ of the second amplification unit 132P. Therefore, the subtractor 194 may need to have a rated voltage corresponding to the rated voltage $V_{dd}$ of the second amplification unit 132P. Accordingly, the subtractor 194 may be driven by directly receiving a supply voltage $V_{dd}$ of a third device 400.

Since the second malfunction detection unit 192P should not affect the operation of the second amplification unit 132P, the subtractor 194 of the second malfunction detection unit 192P may have high input impedance. For example, the subtractor 194 may be provided as a circuit with an input impedance of more than 10 kOhm.

According to an embodiment, the subtractor 194 may include a rail-to-rail OP-AMP.

The first and second comparators 195a and 195b may detect whether a magnitude of the differential DC voltage $V_{sub}$, which is an output of the subtractor 194, is in a certain range. When the magnitude of the differential DC voltage $V_{sub}$ is in the certain range, the second amplification unit 132P may be determined to be normal, and when the magnitude of the differential DC voltage $V_{sub}$ is outside the certain range, the second amplification unit 132P may be determined to fail. For example, when the differential DC voltage $V_{sub}$ is between a maximum reference voltage $V_{ref,max}$ and a minimum reference voltage $V_{ref,min}$, the second amplification unit 132P may be normal. When the differential DC voltage $V_{sub}$ is higher than the maximum reference voltage $V_{ref,max}$ or lower than the minimum reference voltage $V_{ref,min}$, the second amplification unit 132P may fail.

The maximum reference voltage $V_{ref,max}$ and the minimum reference voltage $V_{ref,min}$ may be preset according to various embodiments. Hereinafter, standards for setting the maximum reference voltage $V_{ref,max}$ and the minimum reference voltage $V_{ref,min}$ will be described.

In an embodiment, the subtractor 194 may sense the differential DC voltage $V_{sub}$ between the emitter of the first transistor 11 and the emitter of the second transistor 12. When the second amplification unit 132P normally operates, the differential DC voltage $V_{sub}$ may correspond to $I_e \times R_e$. $R_e$ denotes a resistor connecting an emitter terminal of the first transistor 11 and an emitter terminal of the second transistor 12, and $I_e$ denotes a current flowing through the resistor $R_e$. $I_e$ and $R_e$ may be determined according to a design. In the present embodiment, the maximum reference voltage $V_{ref,max}$ may be set to be higher than $I_e \times R_e$ by a specified magnitude. The minimum reference voltage $V_{ref,min}$ may be set to be lower than $I_e \times R_e$ by a specified magnitude.

In another embodiment, the subtractor 194 may detect the differential DC voltage $V_{sub}$ between the base of the first transistor 11 and the base of the second transistor 12. When the second amplification unit 132P normally operates, the differential DC voltage $V_{sub}$ may correspond to $I_e \times R_e + 2V_{be,bjt}$. $R_e$ denotes a resistor connecting the emitter terminal of the first transistor 11 and the emitter terminal of the second transistor 12, and $I_e$ denotes a current flowing through the resistor $R_e$. $I_e$ and $R_e$ may be determined according to a design. $V_{be,bjt}$ denotes a voltage between the base and the emitter of the first transistor 11 or the second transistor 12. In the present embodiment, the maximum reference voltage $V_{ref,max}$ may be set to be higher than $I_e \times R_e + 2V_{be,bjt}$ by a specified magnitude. The minimum reference voltage $V_{ref,min}$ may be set to be lower than $I_e \times R_e + 2V_{be,bjt}$ by a specified magnitude. For example, the maximum reference voltage $V_{ref,max}$ may be set to 2 V, and the minimum reference voltage $V_{ref,min}$ may be set to 1.4 V. However, the present disclosure is not limited thereto.

The first comparator 195a may output a first signal a11 indicating whether the differential DC voltage $V_{sub}$ is lower than the maximum reference voltage $V_{ref,max}$. The second comparator 195b may output a second signal a21 indicating whether the differential DC voltage $V_{sub}$ is higher than the minimum reference voltage $V_{ref,min}$.

Meanwhile, since high voltages may still occur at input terminals of the first and second comparators 195a and 195b, the first and second comparators 195a and 195b may have a rated voltage corresponding to the rated voltage $V_{dd}$ of the second amplification unit 132P. Accordingly, the first and second comparators 195a and 195b may be driven by directly receiving the supply voltage $V_{dd}$ of the third device 400.

According to an embodiment, the first and second comparators 195a and 195b may each include an open-loop 2-stage OP-AMP.

The first and second level shifters 196a and 196b may lower a voltage of an output signal of the comparators 195a and 195b.

Since a gate voltage of a MOSFET included in the logic circuit 197 is lower than the rated voltage $V_{dd}$ of the comparators 195a and 195b, voltage levels of the first and second signals a11 and a21 should be lowered to be input to the logic circuit 197. Therefore, by using the level shifters 196a and 196b, signs of the first and second signals a11 and a21 may be maintained, but only the voltage levels may be lowered.

The first signal a11 output from the first comparator 195a may be input to the first level shifter 196a. The first level shifter 196a may output a third signal a12 in which the voltage level of the first signal a11 is lowered.

The second signal a21 output from the second comparator 195b may be input to the second level shifter 196b. The second level shifter 196b may output a fourth signal a22 in which the voltage level of the second signal a21 is lowered.

A rated voltage of an input terminal of each of the level shifters 196a and 196b may correspond to the supply voltage $V_{dd}$ of the third device 400. The rated voltage of the output terminal of each of the level shifters 196a and 196b may be lower than the supply voltage $V_{dd}$.

For example, the supply voltage $V_{dd}$ of the third device 400 may be 12 V, and the rated voltage of the output terminal of each of the level shifters 196a and 196b may be 5 V.

The third signal a12 and the fourth signal a22 may be input to the logic circuit 197. By using the third signal a12 and the fourth signal a22, the logic circuit 197 may output a fifth signal a3 indicating whether the differential DC voltage $V_{sub}$ is between the maximum reference voltage $V_{ref,max}$ and the minimum reference voltage $V_{ref,min}$. The fifth signal a3 may be a digital signal that indicates one of 0 and 1. For example, when the fifth signal a3 indicates 0, the second amplification unit 132P may be in a normal state, and when the fifth signal a3 indicates 1, the second amplification unit 132P may be in a fault state. Of course, the reverse is also possible.

Referring to FIG. 28, the third signal a12 which is an output of the first level shifter 196a and the fourth signal a22 which is an output of the second level shifter 196b may be input to the logic circuit 197. The logic circuit 197 may output the fifth signal a3 based on the third signal a12 and fourth signal a22 that are inputs. For example, the logic circuit 197 may have a truth table as shown in Table 1 below.

[Table 1]

| Input | | Output |
|-------|-----|--------|
| a12 | a22 | a3 |
| 0 | 0 | 1 |
| 0 | 1 | 1 |
| 1 | 0 | 0 |

(continued)

| Input | | Output |
|---|---|---|
| a12 | a22 | a3 |
| 1 | 1 | 1 |

In an embodiment, when the differential DC voltage $V_{sub}$ is lower than the maximum reference voltage $V_{ref,max}$, the first comparator 195a may output a high signal indicating 1. In this case, since the first signal a11 indicates 1, the third signal a12 may also indicate 1. In an embodiment, when the differential DC voltage $V_{sub}$ is higher than the minimum reference voltage $V_{ref,min}$, the second comparator 195b may output a low signal indicating 0. In this case, since the second signal a21 indicates 0, the fourth signal a22 may also indicate 0.

According to the above-described embodiment, in Table 1, when the fifth signal a3 indicates 0, it may be determined that the second amplification unit 132P normally operates. When the fifth signal a3 indicates 1, it may be determined that the second amplification unit 132P malfunctions.

However, the logic circuit 197 and the truth table shown in FIG. 28 are merely an example, and the present disclosure is not limited thereto. According to various embodiments, the second malfunction detection unit 192P may be designed to output the fifth signal a3 indicating whether the second amplification unit 132P malfunctions.

Referring again to FIG. 28, a light-emitting diode (LED) driver 14 may be connected to an output terminal t3 of the logic circuit 197. The LED driver 14 may drive an LED 15 outside an IC chip 500P based on the fifth signal a3.

For example, when the fifth signal a3 indicates 1, the LED driver 14 may turn on the external LED 15. The turned-on external LED 15 may indicate a malfunction situation. When the fifth signal a3 indicates 0, the LED driver 14 mya turn off the external LED 15. The turned-off external LED 15 may indicate a normal situation.

The logic circuit 197 may include a small-sized MOSFET for efficiency. The fifth signal a3, which is an output of the logic circuit 197, may have, for example, a voltage of 0 V to 5 V. The LED driver 14 connected to the output terminal t3 of the logic circuit 197 may be, for example, an n-channel metal oxide semiconductor (NMOS) LED driver. In another embodiment, the output terminal t3 of the logic circuit 197 may be connected to a malfunction determination unit.

Meanwhile, as described above, the output terminals of the level shifters 196a and 196b and the logic circuit 197 may have a lower rated voltage than input terminals of the subtractor 194, the comparators 195a and 195b, and the level shifters 196a and 196b.

Accordingly, the supply voltage $V_{dd}$ may be supplied to the input terminals of the subtractor 194, the comparators 195a and 195b, and the level shifters 196a and 196b. A supply voltage lower than the supply voltage $V_{dd}$ may be supplied to the output terminals of the level shifters 196a and 196b and the logic circuit 197. For example, the input terminals of the subtractor 194, the comparators 195a and 195b, and the level shifters 196a and 196b may be driven by a voltage of 12 V. The output terminals of the level shifters 196a and 196b and the logic circuit 197 may be driven by a voltage of 5 V. Therefore, referring to FIG. 27, the input terminals of the subtractor 194, the comparators 195a and 195b, and the level shifters 196a and 196b are illustrated as being included in a high supply voltage area, and the output terminals of the level shifters 196a and 196b and the logic circuit 197 are illustrated as being included in a low supply voltage area. The high supply voltage area and low supply voltage area do not represent actual physical areas, but are terms for distinguishing components driven by a high supply voltage from components driven by a low supply voltage.

The description of the second malfunction detection unit 192P described above may also be applied to the first malfunction detection unit 191P. The first malfunction detection unit 191P differs from the second malfunction detection unit 192P only in that the subtractor 194 is connected to two nodes included in a first amplification unit 131P and detects the differential DC voltage $V_{sub}$ from the two nodes.

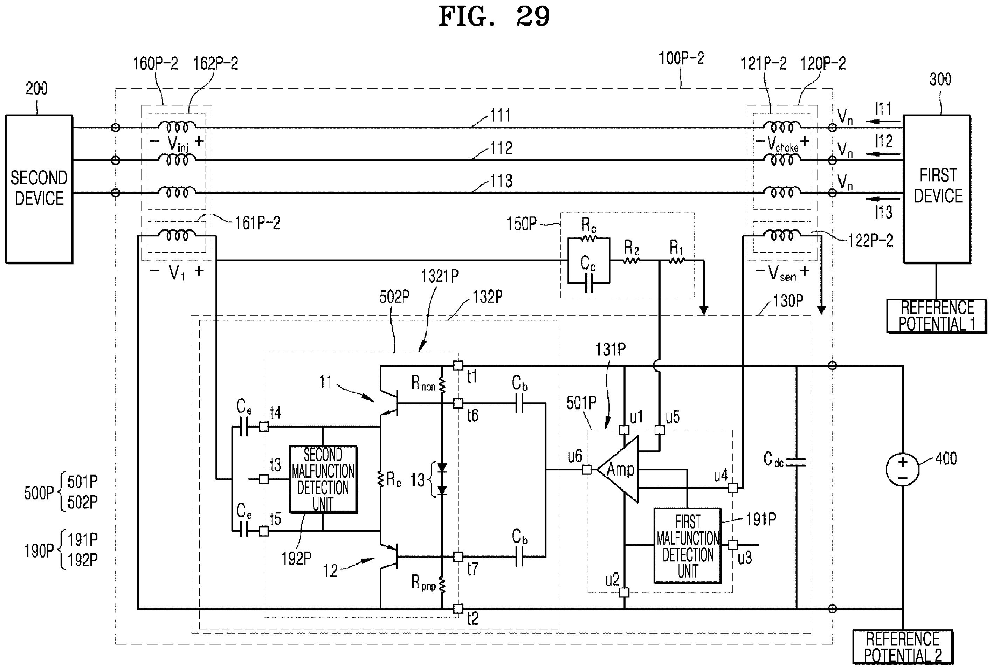

FIG. 29 is a circuit diagram of a second IC unit 1321P and a second malfunction detection unit 192P according to an embodiment of the present disclosure.

Referring to FIG. 29 together with FIG. 24, the second IC unit 1321P of a second amplification unit may include a first transistor 11, a second transistor 12, a diode 13, and resistors $R_{npn}$, $R_{pnp}$, and $R_e$. The second malfunction detection unit 192P may include a subtractor 194, first and second comparators 195a and 195b, first and second level shifters 196a and 196b, and a logic circuit 197. In an embodiment, the second malfunction detection unit 192P may further include an LED driver 14 at an output terminal of the logic circuit 197. In another embodiment, in the second malfunction detection unit 192P, a malfunction determination unit may be connected to the output terminal of the logic circuit 197.

Since the second malfunction detection unit 192P should not affect the operation of a second amplification unit 132P including the second IC unit 1321P, the subtractor 194 of the second malfunction detection unit 192P may have high input impedance.

The second malfunction detection unit 192P does not need to be always operated, but only needs to be operated when a malfunction test is required. Therefore, in order to reduce unnecessary power consumption, a switch 16 may be provided to selectively turn off only the second malfunction detection unit 192P.

The switch 16 may be present outside an IC chip 500P. The IC chip 500P may further include a separate terminal t8 for selectively supplying power to the second malfunction detection unit 192P based on a state of the switch 16. The switch 16 may be connected between a third device 400 and the terminal t8.

Meanwhile, the second malfunction detection unit 192P may include components driven by a high supply voltage and components driven by a low supply voltage. For example, input terminals of the subtractor 194, the comparators 195a and 195b, and the level shifters 196a and 196b may be driven by a high supply voltage $V_{dd}$. Output terminals of the level shifters 196a and 196b and the logic circuit 197 may be driven by a voltage lower than the supply voltage $V_{dd}$ due to a voltage distribution circuit 17.

In an embodiment, the second IC unit 1321P and the second malfunction detection unit 192P may be physically integrated into one IC chip 502P. For example, the IC chip 502P may include a terminal t1 for connection to the third device 400, a terminal t2 for connection to referential potential 2, an output terminal t3 of the second malfunction detection unit 192P, terminals (for example., t4, t5, t6, and t7) for connection to a second non-IC unit 1322P, and the terminal t8 capable of turning on or off the operation of the second malfunction detection unit 192P.

Meanwhile, although FIG. 29 illustrates an embodiment in which emitter nodes of the first and second transistors 11 and 12 are connected to the input terminals of the subtractor 194, according to other embodiments, bases nodes of the first and second transistors 11 and 12 may be connected to the input terminals of the subtractor 194.

The description of the switch 16 and the second malfunction detection unit 192P including the voltage distribution circuit 17 is also applicable to a first malfunction detection unit 191P.

The malfunction detection unit 190P may further include a malfunction determination unit 193P. The malfunction determination unit 193P may be connected to an output terminal of a logic circuit included in the first malfunction detection unit 191P and an output terminal of the logic circuit included in the second malfunction detection unit 192P.

In an embodiment, the malfunction determination unit 193P may include the logic circuit 197 shown in FIG. 28. An output signal X of the first malfunction detection unit 191P and an output signal Y of the second malfunction detection unit 192P may be input to the logic circuit of the malfunction determination unit 193P. Based on the output signals X and Y, the logic circuit of the malfunction determination unit 193P may output a sixth signal Z indicating whether an operating state of an amplification unit 130P is normal. The sixth signal may be a digital signal that indicates one of 0 and 1. For example, when the sixth signal indicates 0, the amplification unit 130P may be in a normal state, and when the sixth signal indicates 1, the amplification unit 130P may be in a fault state. Of course, the reverse is also possible.

When both the output signal X and the output signal Y are signals corresponding to a normal state, the malfunction determination unit 193P may determine that the operating state of the amplification unit 130P is a normal operating state. That is, only when both operating states of a first amplification unit 131P and the second amplification unit 132P are normal, the malfunction determination unit 193P may output a signal indicating that the operating state of the amplification unit 130P is normal. The malfunction detection unit 190P may include the malfunction determination unit 193P to finally determine a malfunction of the amplification unit 130P based on the respective operating states of the first amplification unit 131P and the second amplification unit 132P and may output a signal indicating a normal or fault state of the amplification unit 130P.

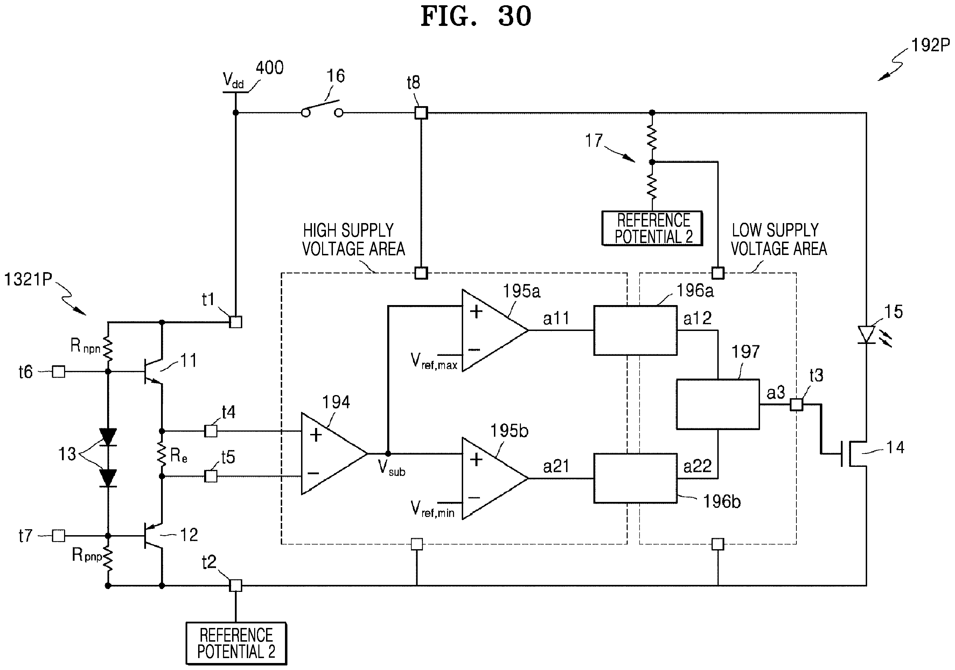

FIG. 30 schematically illustrates a configuration of an active voltage compensation device 100P-1 according to another embodiment of the present disclosure. Hereinafter, the descriptions of contents that overlap the contents described with reference to FIGS. 1 to 29 will be omitted.

Referring to FIG. 30, the active voltage compensation device 100P-2 may actively compensate for a noise voltage input to each of high-current paths 111, 112, and 113 connected to a first device 300 in a CM.

To this end, the active voltage compensation device 100P-2 according to another embodiment of the present disclosure may include three high-current paths 111, 112, and 113, a sensing transformer 120P-2, an amplification unit 130P, an amplified signal feedback unit 150P, a compensation transformer 160P-2, and a malfunction detection unit 190P.

In comparison with the active voltage compensation device 100P according to the embodiment described above, the active voltage compensation device 100P-2 according to the embodiment shown in FIG. 30 includes the three high-current paths 111, 112, and 113 and thus differs from the active voltage compensation device 100P in the sensing transformer 120P-2 and the compensation transformer 160P-2. Therefore, hereinafter, the active voltage compensation device 100P will be described based on the above-described difference.

The active voltage compensation device 100P-2 may include a first high-current path 111, a second high-current path 112, and a third high-current path 113 which are distinguished from each other. According to an embodiment, the first high-current path 111 may be an R-phase power line, the second high-current path 112 may be an S-phase power line, and the third high-current path 113 may be a T-phase power line. Noise voltages $V_n$ and first currents I11, I12, and I13 may be input to the first high-current path 111, the second high-current path 112, and the third high-current path 113 in a CM, respectively.

A primary side 121P-2 of the sensing transformer 120P-2 may be disposed on each of the first, second, and third high-current paths 111, 112, and 113, and thus may generate an induced voltage on a secondary side 122P-2. Magnetic flux densities generated in the sensing transformer 12P-2 by the first currents I11, I12, and I13 in the three high-current paths 111, 112, and 113 may reinforce each other.

In the active voltage compensation device 100P-2, the amplification unit 130P may be implemented as the amplification unit 130P-1 shown in FIG. 26.

Meanwhile, a secondary side 162P-2 of the compensation transformer 160P-2 may be disposed on each of the first high-current path 111, the second high-current path 112, and the third high-current path 113. Based on a voltage $V_1$ of the primary side 161P-2 output from a second amplification unit 132, the compensation transformer 160P-2 may respectively generate compensation voltages on the three high-current paths 111, 112, and 113, which correspond to the secondary side 162P-2, in series.

The active voltage compensation device 100P-2 according to the embodiment may perform voltage compensation for CM noise on a power line of a three-phase three-wire power system.

Of course, according to the technical idea of the present disclosure, an active voltage compensation device according to various embodiments may be modified to also be applicable to a three-phase four-wire system.

In an active voltage compensation device 100, an IC unit of an amplification unit and a malfunction detection unit may be integrated into one IC chip, and the IC chip of the active voltage compensation device may be commercialized to have versatility as an independent component. In addition, an active voltage compensation device including an IC chip can be manufactured and commercialized as an independent module. This active voltage compensation device may detect malfunctions as an independent module irrespective of the characteristics of a surrounding electrical system.

The specific implementations described in the present disclosure are examples and do not limit the scope of the present disclosure in any method. For brevity of the specification, descriptions of conventional electronic configurations, control systems, software, and other functional aspects of the systems may be omitted. In addition, since the connection of the lines between the components or connection members shown in the drawings are illustrative examples of functional connections and/or physical or circuit connections, in the actual device, it may be represented as an alternative or additional various functional connections, physical connections, and circuit connections.

The spirit of the present disclosure should not be limited to the above-described embodiments, and not only the scope of the appended claims but also all ranges equivalent to or equivalently changed from the claims are within the scope of the present disclosure.

**Industrial Applicability**

Embodiments of the present disclosure may relate to an active voltage compensation device, and the active voltage compensation device may be used in electronic devices such as home appliances, industrial electrical products, electric vehicles, aerial systems, and energy storage systems. However, the industrial applicability of the embodiments of the present disclosure is not limited to the above example.

**Claims**

1. An active voltage compensation device for actively compensating for noise occurring in each of two or more high-current paths in a common mode, the active voltage compensation device comprising:

   a sensing unit which senses a noise current in the common mode in the two or more high-current paths to generate an output signal corresponding to the noise current;
   an amplification unit which amplifies the output signal of the sensing unit to generate an amplified signal;
   an amplified signal feedback unit which transmits a feedback signal corresponding to the amplified signal of the amplification unit back to the amplification unit; and
   a compensation unit which generates a compensation voltage on the two or more high-current paths based on an output voltage corresponding to the amplified signal.

2. The active voltage compensation device of claim 1, wherein

   the amplification unit comprises a first amplification unit and a second amplification unit,
   wherein the first amplification unit amplifies the output signal of the sensing unit to generate the output voltage, and
   the second amplification unit is connected to the first amplification unit and generates an output current required for noise compensation.

3. The active voltage compensation device of claim 1, wherein the sensing unit is in a form in which a wire for generating an input voltage of the amplification unit is additionally wound around a common mode (CM) choke around which the two or more high-current paths are wound.

4. The active voltage compensation device of claim 1, wherein the compensation unit is formed such that a wire for outputting the output signal of the amplification unit passes through a core, and the two or more high-current paths pass through the core or are wound around the core one or more times.

5. The active voltage compensation device of claim 1, wherein

   the two or more high-current paths transmit a high current supplied by a second device to a first device, and
   the amplification unit comprises a non-integrated circuit unit and one chip integrated circuit unit,
   wherein the non-integrated circuit unit is designed according to at least one power system of the first device and the second device, and
   the one chip integrated circuit unit is independent of power rating specifications of the first device and the second device.

6. The active voltage compensation device of claim 5, wherein the non-integrated circuit unit is designed according to power rating of the first device.

7. The active voltage compensation device of claim 6, wherein, according to a design of the non-integrated circuit unit, the one chip integrated circuit unit is used for the first device of various power systems.

8. The active voltage compensation device of claim 5, wherein

   the one chip integrated circuit unit comprises a first integrated circuit unit and a second integrated circuit unit, wherein the second integrated circuit unit comprises a first transistor, a second transistor, and one or more resistors.

9. The active voltage compensation device of claim 8, wherein the first integrated circuit unit comprises one or more transistors.

10. The active voltage compensation device of claim 5, wherein

    the sensing unit comprises a sensing transformer,
    the compensation unit comprises a compensation transformer, and
    a configuration of the one chip integrated circuit unit is independent of a turns ratio of the sensing transformer and the compensation transformer and a target voltage gain of the amplification unit.

# FIG. 1

EP 4 510 434 A1

# FIG. 2

SECOND DEVICE — 200

THIRD DEVICE — 400

100A

COMPENSATION UNIT — 160

111

112

130A

SECOND AMPLIFICATION UNIT — 132A

FIRST AMPLIFICATION UNIT — 131A

SENSING UNIT — 120

FIRST DEVICE — 300

AMPLIFIED SIGNAL FEEDBACK UNIT — 150

REFERENCE POTENTIAL 2

REFERENCE POTENTIAL 1

I21

I22

$V_n$

$V_n$

I11

I12

a

b

EP 4 510 434 A1

# FIG. 3

EP 4 510 434 A1

FIG. 4

## FIG. 5

EP 4 510 434 A1

FIG. 6

# FIG. 7

EP 4 510 434 A1

# FIG. 8

AMPLIFICATION UNIT — 130F

| 131F — FIRST AMPLIFICATION UNIT | SECOND AMPLIFICATION UNIT — 132F |
|---|---|
| 1311F — FIRST INTEGRATED CIRCUIT UNIT | SECOND INTEGRATED CIRCUIT UNIT — 500F / 1321F |
| 1312F — FIRST-NON INTEGRATED CIRCUIT UNIT | SECOND-NON INTEGRATED CIRCUIT UNIT — 1322F |

# FIG. 9

EP 4 510 434 A1

FIG. 10

1311F

EP 4 510 434 A1

# FIG. 11

EP 4 510 434 A1

# FIG. 12

EP 4 510 434 A1

# FIG. 13

EP 4 510 434 A1

# FIG. 14

EP 4 510 434 A1

# FIG. 15

EP 4 510 434 A1

# FIG. 16

SENSING UNIT(120)

AMPLIFICATION UNIT 132J 1321J — 130J

POWER MANAGEMENT UNIT — 180J

131J — FIRST AMPLIFICATION UNIT

SECOND AMPLIFICATION UNIT

1311J — FIRST INTEGRATED CIRCUIT UNIT

SECOND INTEGRATED CIRCUIT UNIT

POWER CONVERSION UNIT — 500J / 181J

AMPLIFIED SIGNAL FEEDBACK UNIT(150)

1312J — FIRST NON-INTEGRATED CIRCUIT UNIT

1322J — SECOND NON-INTEGRATED CIRCUIT UNIT

POWER MANAGEMENT FEEDBACK UNIT — 182J

FILTER UNIT — 183J

COMPENSATION UNIT(160)

$V_o$

$V_I$

REFERENCE POTENTIAL 2

EP 4 510 434 A1

FIG. 17

# FIG. 18

EP 4 510 434 A1

# FIG. 19

FIG. 20

# FIG. 21

EP 4 510 434 A1

# FIG. 22

# FIG. 23

500Q

190Q — MALFUNCTION DETECTION UNIT
- 191Q — FIRST MALFUNCTION DETECTION UNIT
- 192Q — SECOND MALFUNCTION DETECTION UNIT
- 193Q — MALFUNCTION DETERMINATION UNIT

130Q — AMPLIFICATION UNIT
- 131Q — FIRST AMPLIFICATION UNIT
  - 1311Q — FIRST INTEGRATED CIRCUIT UNIT
  - 1312Q — FIRST-NON INTEGRATED CIRCUIT UNIT
- 132Q — SECOND AMPLIFICATION UNIT
  - 1321Q — SECOND INTEGRATED CIRCUIT UNIT
  - 1322Q — SECOND-NON INTEGRATED CIRCUIT UNIT

# FIG. 24

SECOND DEVICE — 200

FIRST DEVICE — 300

REFERENCE POTENTIAL 1

REFERENCE POTENTIAL 2

400

100P

$I11$, $I12$, $I21$, $I22$

$V_n$, $V_n$

$V_{cloke}$, $+V_{sen}-$

120P, 121P, 122P, 130P

$V_{inj}$, $V_1$

160P, 161P, 162P

$R_1$, $R_2$, $R_e$, $C_c$, 150P

$C_{dc}$

Amp, 131P, 501P

u1, u2, u3, u4, u5, u6

FIRST MALFUNCTION DETECTION UNIT — 191P

132P, 1321P, 502P

$C_b$, $C_b$, $C_e$, $C_e$

t1, t2, t3, t4, t5, t6, t7

$R_{npn}$, $R_{pnp}$, $R_e$, 13

11, 12

SECOND MALFUNCTION DETECTION UNIT — 192P

$500P \begin{cases} 501P \\ 502P \end{cases}$

$190P \begin{cases} 191P \\ 192P \end{cases}$

# FIG. 25

1311P

M7  M8

M1  M2

M3

M9  M10

M19

u4

u5

M11 M12  M13 M14

M4

u6

M5  M6

M15  M16

M20

M17  M18

FIRST
MALFUNCTION
DETECTION
UNIT

191p

u3

EP 4 510 434 A1

# FIG. 26

EP 4 510 434 A1

# FIG. 27

# FIG. 28

**FIG. 29**

# FIG. 30

EP 4 510 434 A1

# INTERNATIONAL SEARCH REPORT

| | |
|---|---|
| International application No. | |
| **PCT/KR2022/015691** | |

**A. CLASSIFICATION OF SUBJECT MATTER**

**H02M 1/44**(2007.01)i; **H02M 1/15**(2006.01)i; **H02M 1/12**(2006.01)i

According to International Patent Classification (IPC) or to both national classification and IPC

**B. FIELDS SEARCHED**

Minimum documentation searched (classification system followed by classification symbols)

H02M 1/44(2007.01); H02M 1/00(2007.01); H02M 1/12(2006.01); H02M 7/48(2007.01); H03H 11/02(2006.01); H03H 11/04(2006.01); H05K 1/18(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 능동 EMI 필터(active electromagnetic interference filter), 공통 모드 노이즈 (common mode noise), 전압 보상(voltage compensation), 증폭기(amplifier), 피드백(feedback), 단일 칩 집적회로(single chip integrated circuit), 비집적회로(non-integrated circuit)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2268163 B1 (EM CORETECH et al.) 24 June 2021 (2021-06-24)<br>See paragraphs [0032], [0039] and [0046]-[0049]; claims 1 and 3-4; and figure 2. | 1-10 |
| Y | KR 10-2018-0106913 A (SCHAFFNER EMV AG) 01 October 2018 (2018-10-01)<br>See paragraph [0044]; and figure 4. | 1-10 |
| Y | US 2022-0014178 A1 (EM CORETECH CO., LTD. et al.) 13 January 2022 (2022-01-13)<br>See paragraphs [0075]-[0080]; and figures 50-75. | 5-10 |
| Y | KR 10-2015-0078133 A (KNU-INDUSTRY COOPERATION FOUNDATION) 08 July 2015 (2015-07-08)<br>See paragraphs [0033]-[0037]; and figure 3. | 1-10 |
| A | JP 2002-010650 A (INTERNATL RECTIFIER CORP.) 11 January 2002 (2002-01-11)<br>See paragraphs [0065]-[0066]; claims 20-23; and figures 19 and 21. | 1-10 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br><br>**16 January 2023** | Date of mailing of the international search report<br><br>**16 January 2023** |
| Name and mailing address of the ISA/KR<br><br>**Korean Intellectual Property Office<br>Government Complex-Daejeon Building 4, 189 Cheongsa-ro, Seo-gu, Daejeon 35208** | Authorized officer |
| Facsimile No. **+82-42-481-8578** | Telephone No. |

Form PCT/ISA/210 (second sheet) (July 2022)

| INTERNATIONAL SEARCH REPORT<br>Information on patent family members | | International application No.<br>**PCT/KR2022/015691** | |
|---|---|---|---|
| Patent document<br>cited in search report | Publication date<br>(day/month/year) | Patent family member(s) | Publication date<br>(day/month/year) |
| KR 10-2268163 B1 | 24 June 2021 | JP 2022-529932 A | 27 June 2022 |
| | | KR 10-2020-0122190 A | 27 October 2020 |
| | | KR 10-2020-0122264 A | 27 October 2020 |
| | | KR 10-2020-0124152 A | 02 November 2020 |
| | | KR 10-2020-0127709 A | 11 November 2020 |
| | | KR 10-2020-0128974 A | 17 November 2020 |
| | | KR 10-2021-0013243 A | 03 February 2021 |
| | | KR 10-2021-0013244 A | 03 February 2021 |
| | | KR 10-2021-0032848 A | 25 March 2021 |
| | | KR 10-2021-0032849 A | 25 March 2021 |
| | | KR 10-2021-0066766 A | 07 June 2021 |
| | | KR 10-2021-0070247 A | 14 June 2021 |
| | | KR 10-2021-0111183 A | 10 September 2021 |
| | | KR 10-2021-0116164 A | 27 September 2021 |
| | | KR 10-2022-0091284 A | 30 June 2022 |
| | | KR 10-2022-0091285 A | 30 June 2022 |
| | | KR 10-2022-0092258 A | 01 July 2022 |
| | | KR 10-2022-0120945 A | 31 August 2022 |
| | | KR 10-2071480 B1 | 02 March 2020 |
| | | KR 10-2129578 B1 | 02 July 2020 |
| | | KR 10-2131263 B1 | 07 July 2020 |
| | | KR 10-2133498 B1 | 13 July 2020 |
| | | KR 10-2208533 B1 | 28 January 2021 |
| | | KR 10-2208534 B1 | 28 January 2021 |
| | | KR 10-2258197 B1 | 02 June 2021 |
| | | KR 10-2258198 B1 | 02 June 2021 |
| | | KR 10-2258199 B1 | 02 June 2021 |
| | | KR 10-2326924 B1 | 17 November 2021 |
| | | KR 10-2345290 B1 | 03 January 2022 |
| | | KR 10-2366321 B1 | 23 February 2022 |
| | | KR 10-2377534 B1 | 23 March 2022 |
| | | US 2022-0014178 A1 | 13 January 2022 |
| | | US 2022-0029548 A1 | 27 January 2022 |
| | | US 2022-0208443 A1 | 30 June 2022 |
| | | WO 2020-197334 A1 | 01 October 2020 |
| | | WO 2020-213997 A1 | 22 October 2020 |
| | | WO 2022-139083 A1 | 30 June 2022 |
| KR 10-2018-0106913 A | 01 October 2018 | CN 108631292 A | 09 October 2018 |
| | | JP 2018-157747 A | 04 October 2018 |
| | | JP 7111482 B2 | 02 August 2022 |
| | | US 10491109 B2 | 26 November 2019 |
| | | US 2018-0269781 A1 | 20 September 2018 |
| US 2022-0014178 A1 | 13 January 2022 | CN 113906660 A | 07 January 2022 |
| | | JP 2022-529932 A | 27 June 2022 |
| | | KR 10-2020-0122190 A | 27 October 2020 |
| | | KR 10-2020-0122264 A | 27 October 2020 |
| | | KR 10-2021-0013243 A | 03 February 2021 |
| | | KR 10-2021-0013244 A | 03 February 2021 |
| | | KR 10-2022-0091284 A | 30 June 2022 |
| | | KR 10-2022-0091285 A | 30 June 2022 |

Form PCT/ISA/210 (patent family annex) (July 2022)

**INTERNATIONAL SEARCH REPORT**
Information on patent family members

International application No.

**PCT/KR2022/015691**

| Patent document cited in search report | | | Publication date (day/month/year) | Patent family member(s) | | | Publication date (day/month/year) |
|---|---|---|---|---|---|---|---|
| | | | | KR | 10-2022-0092258 | A | 01 July 2022 |
| | | | | KR | 10-2022-0120945 | A | 31 August 2022 |
| | | | | KR | 10-2071480 | B1 | 02 March 2020 |
| | | | | KR | 10-2129578 | B1 | 02 July 2020 |
| | | | | KR | 10-2131263 | B1 | 07 July 2020 |
| | | | | KR | 10-2133498 | B1 | 13 July 2020 |
| | | | | KR | 10-2208533 | B1 | 28 January 2021 |
| | | | | KR | 10-2208534 | B1 | 28 January 2021 |
| | | | | KR | 10-2258197 | B1 | 02 June 2021 |
| | | | | KR | 10-2258198 | B1 | 02 June 2021 |
| | | | | KR | 10-2258199 | B1 | 02 June 2021 |
| | | | | KR | 10-2268163 | B1 | 24 June 2021 |
| | | | | KR | 10-2326924 | B1 | 17 November 2021 |
| | | | | KR | 10-2345290 | B1 | 03 January 2022 |
| | | | | KR | 10-2366321 | B1 | 23 February 2022 |
| | | | | KR | 10-2377534 | B1 | 23 March 2022 |
| | | | | US | 2022-0029548 | A1 | 27 January 2022 |
| | | | | US | 2022-0208443 | A1 | 30 June 2022 |
| | | | | WO | 2020-197334 | A1 | 01 October 2020 |
| | | | | WO | 2020-213997 | A1 | 22 October 2020 |
| | | | | WO | 2022-139083 | A1 | 30 June 2022 |
| KR | 10-2015-0078133 | A | 08 July 2015 | KR | 10-1598259 | B1 | 26 February 2016 |
| JP | 2002-010650 | A | 11 January 2002 | EP | 1143602 | A2 | 10 October 2001 |
| | | | | EP | 1143602 | A3 | 26 November 2003 |
| | | | | JP | 3428588 | B2 | 22 July 2003 |
| | | | | US | 2001-0045863 | A1 | 29 November 2001 |
| | | | | US | 2004-0004514 | A1 | 08 January 2004 |
| | | | | US | 2004-0207463 | A1 | 21 October 2004 |
| | | | | US | 2007-0120607 | A1 | 31 May 2007 |
| | | | | US | 2008-0180164 | A1 | 31 July 2008 |
| | | | | US | 6636107 | B2 | 21 October 2003 |
| | | | | US | 6794929 | B2 | 21 September 2004 |
| | | | | US | 7187229 | B2 | 06 March 2007 |
| | | | | US | 7385438 | B2 | 10 June 2008 |
| | | | | US | 7583136 | B2 | 01 September 2009 |

Form PCT/ISA/210 (patent family annex) (July 2022)